# EUROPEAN PATENT SPECIFICATION

(11) **EP 1 407 139 B1**
(45) Date of publication and mention of the grant of the patent: **21.10.2009**
(21) Application number: 02756217.2
(22) Date of filing: 14.06.2002
(51) Int. Cl.: F03D 1/00, F03D 11/04, F03D 11/02

(54) **COAXIAL MULTI-ROTOR WIND TURBINE**
WINDTURBINE MIT MEHREREN KOAXIALEN ROTOREN
AEROMOTEUR A PLUSIEURS ROTORS COAXIAUX

(30) Priority: 14.06.2001 US 881511; 23.11.2001 US 997499
(43) Date of publication of application: 14.04.2004
(73) Proprietor: Selsam, Douglas Spriggs, Fullerton, CA 92833 (US)
(72) Inventor: Selsam, Douglas Spriggs, Fullerton, CA 92833 (US)
(74) Representative: Polypatent
(86) International application number: PCT/US2002/019181
(87) International publication number: WO 2002/103200

(56) References cited:
- US-A- 4 065 225
- US-A- 4 087 990
- US-A- 4 165 468
- US-A- 4 207 026
- US-A- 4 207 026
- US-A- 4 522 600
- US-A- 4 832 571
- US-A- 4 832 571
- US-A- 5 669 758

## Description

### Background:

### Field of the Invention:

This invention relates generally to the field of extracting usable energy from a moving fluid, more particularly to windmills.

### Prior Art:

The basic design of windmills, whether for grinding grain, pumping water, or generating electricity, has not significantly changed in hundreds of years. A stationary vertical tower supports a single upwind horizontal-axis rotor, which may drive a load either directly, or, more usually, through a mechanical transmission. The traditional windmill tower is rigid, with many historical examples actually being made of stone. A single large rotor served well on these early machines, since a large rotor spins slowly with high torque, perfect for turning a stone to grind grain. The mass of such a large rotor, combined with the primitive state of technology of the day, precluded a serious consideration of a flexible tower.

Currently, the "single large rotor" design still prevails, despite the fact that today's electrical generators require a much higher rotational rate than yesterday's grindstone. Excessive bending deflection of the tower on these modem windmills is seen as sloppy, inefficient, and even dangerous.
This basic prior art design has been slowly refined over the centuries, by improvements in tower construction, blade design, transmissions, materials science, control systems, etc. Current models, however, normally used for generating electricity, are still only barely feasible from an economic standpoint.
The rigid, vertical tower is often the most expensive component of a wind turbine. Since wind velocity increases with height, and available power is proportional to the wind speed cubed, a taller tower will result in more power collected. Usually the rigid tower must be strong enough to support not only the huge rotor, but the driveshaft, generator, and associated gearbox as well, in addition to blade feathering mechanisms, yaw control apparatus for directional guidance, and associated electronics and auxiliary mechanisms, commonly weighing many tons. Access for maintenance personnel, such as an interior stairway or ladder, is often built-in. Erection and even maintenance of such an unwieldy wind energy conversion system often requires a crane and other expensive equipment, to lift the heavy machine components to and from the top of the tower. Deaths have resulted from accidents during these procedures.

The idea that the bending deflection which a tower is so naturally inclined to undergo could be embraced and utilized as advantageous, rather than avoided as a flaw, or minimized as an undesirable characteristic, has not yet found a place in modern windmill design, although in principle known from US-A-4,832,571 on which the pre-characterising part of claim 1 is based, to support a single rotor. The idea that a tower could double as a driveshaft, supporting multiple rotors with enough of a space between them for the rotors to get fresh wind, and combining their power, has similarly been absent from wind turbine design. Despite a general feeling among many designers that there "must be a better way", alternatives to the "standard model" have thus far proven not to be cost-effective. Aside from the vertical axis turbines, such as those of Darrieus, which have enjoyed only limited success, designers have been as yet unable to break away from the traditional, basic, medieval design. As we begin a new millenium, the stationary, rigid windmill tower, with its azimuthally adjustable cap, having a geared mechanism with a horizontal driveshaft, supporting a single large upwind rotor, as originally developed to turn a grinding stone in the middle ages, yet persists.

The decision to use a single large rotor, rather than many small rotors, is based on a desire for simplicity, and economy of scale, but results in a whole new series of expenses: First, the circular area swept by a spinning rotor is proportional to the diameter squared, while the rotor's actual volume (and hence its mass), is proportional to the diameter *cubed.* In other words, the larger the rotor, the less wind it can capture in relation to its mass. The significance of this cannot be overemphasized: The amount of wind available per unit rotor mass is inversely proportional to the rotor diameter. This means that a 10-meter rotor will capture 100 times as much wind as a 1-meter rotor, but will weigh 1000 times as much! So as its diameter has *increased* by an order of magnitude, its subtended wind collecting area per unit mass has *decreased* by an order of magnitude.

Of course, 100 of these smaller rotors would each require individual physical support at an effective height, as well as either 100 individual generators, or a mechanical means to combine the rotation of the individual rotors. In the current state of the art, the increased complexity and consequent higher manufacturing and maintenance costs, as well as possible aesthetic clutter of such a multi-rotor technology, have weighed in favor of designs using a single large rotor, despite the disproportionately higher mass.

For a given wind speed, the blade tip speed for any size rotor is about the same, hence, the angular rate of rotation is inversely proportional to rotor diameter. For a given amount of driveshaft power, torque is inversely proportional to rotation rate. Consequently a large rotor will turn a shaft at low rotational speed, but with high torque. This slow rotation rate and consequent high torque of such a large rotor mandate the use of heavy-duty driveshafts and ratio gearing mechanisms in order to transmit the power to a faster-rotating generator. Contemporary generators must turn many times faster than today's large rotors in order to efficiently generate power. The gearbox required to achieve this increased rotational rate represents about 20% of the cost of current systems. The traditional tubular steel tower accounts for another 20% of cost

There is a strong feeling among researchers that there must be some easier, more simple and cost-effective way to harness wind energy, if only we could find it The challenge to wind energy development for the new millenium is to meet the wind on its own terms using the stronger, and more flexible materials now available.

Conventional horizontal axis wind turbines suffer from certain drawbacks, some of which are:
1. High Mass of Large Rotors:
   The mass of a rotor increases as function of the diameter cubed, while the swept area only increases as a function of the diameter squared. The amount of wind captured, per unit rotor mass, is therefore inversely proportional to rotor diameter. The single large rotor captures less wind per unit mass than a plurality of smaller rotors sweeping an equivalent area would. Such a single, large, heavy rotor also mandates the use of a commensurately stronger drivetrain and tower to support its ponderous weight.
2. Slow Rotation Rate of Large Rotors:
   Today's windmills, with their single large, slowly turning rotor require either a specially built, slow-speed alternator or generator, or a transmission means providing ratio gearing, such as a gearbox, to bring the rotation rate up to a speed compatible with a generator. Either solution is complicated, expensive, and heavy, adding to the cost of the installation, as well as the strength required of the supporting tower.
   For a given wind speed, the tip speed of similarly shaped rotors is substantially the same, regardless of diameter. The rotational rate is therefore inversely proportional to rotor diameter, meaning that a smaller rotor spins faster to maintain the same tip speed as a larger, more slowly rotating set of blades. Conventional generators and alternators typically require such a fast rotation rate for efficient operation. Small rotors, turning more quickly, can therefore often directly drive a substantially standard alternator or generator without ratio gearing, or a transmission. With smaller rotors, if a transmission is required, it need incorporate less ratio gearing, and may therefore be less substantial, since the rotational rate of a smaller rotor is faster to begin with.
3. Slow Rotation of Prior Art Means High Torque - Faster Rotation Delivers the Same Power at Lower Torque:
   A given amount of power is delivered at lower torque by a faster rotating shaft, further reducing the required robustness, and therefore the cost and weight, of the drivetrain.
4. Low Power Output from Smaller Rotors in Prior Art:
   Though smaller rotors are desirable from the standpoint of achieving a higher rotation rate, the amount of wind power available from the area swept by a smaller rotor is less than that of a larger rotor, being proportional to the diameter squared. Conventional windmills having a single small rotor therefore require high winds for useful amounts of energy to be generated.
   Many schemes have been put forward in the prior art to mechanically harness a multiplicity of smaller rotors together to power a single load. None has proven to be simple and reliable enough to have enjoyed commercial success. Prior art designs utilizing a multiplicity of rotors coupled to a single shaft disposed these rotors closely together, and directly in line with the wind, and had no means for supplying fresh wind to each rotor, and therefore suffered from excessive wind shadow effects between rotors, making the redundancy of multiple rotors largely ineffective, non-advantageous, and indeed, burdensome and unworkable.
5. A dedicated azimuthal orientation means is normally required to keep a conventional upwind rotor properly aimed into the wind. This directional orientation means normally comprises either downwind fluid reaction surfaces, such as a tail fin, or an active directional control mechanism. Either solution adds extra cost, weight, wind resistance, and complication to an installation, while not otherwise contributing to power generation.
6. Safety Issues: It is possible for virtually any wind turbine to undergo structural failure at some point in its service life. With tip speeds often exceeding 150 mph (-mach 0.2), the ponderously large blades of conventional wind turbines store a tremendous amount of kinetic energy, and are known to be very dangerous if broken or detached, even in home installations. These huge rotor blades, (with a mass proportional to the diameter cubed, even though the power collected is only proportional to the diameter squared) often require a heavy-duty crane to be lifted into place. On the average one person dies every year in such operations.
7. Vibration issues: Prior art turbines are known to transmit low frequency vibration to structures upon which they are mounted, often making rooftop mounting inadvisable.
8. Noise issues: Conventional windmills with a single rotor often produce noise in high winds, which may be objectional in residential areas.
9. Aesthetic issues: Many people object to the slow, unsynchronized motion of the many large blades of many separate turbines.
10. Tower issues: In many cases it would be advantageous to dispense with the need for a tower. Towers tend to be permanent installations, and only achieve limited height. They are also expensive.

### Brief Summary of the Invention:

The present invention as set forth in the independent claims 1 and 46, discloses a simple way to achieve the mechanical linkage of a multiplicity of rotors, combined with a way to resiliently support the rotors at an effective operational height, combined with a way to automatically orient the rotors, combined with a way to mechanically transmit the power of the rotors to the ground, and finally, even generate electricity, using as few as one single moving part.

The windmill of the present invention in many embodiments puts the natural flexibility of a tower to good use, rather than attempting to make the tower rigid. This tower doubles as a high rotational speed, low-torque, flexible driveshaft. Rather than supporting one large, heavy, slowly spinning rotor, our flexible, spinning tower supports multiple, small, lightweight, rapidly rotating rotors, attached coaxially at intervals along its length. Since multiple small rotors weigh much less than a large rotor of equivalent area, and tower flexure is permitted, the tower can be of much lighter duty construction than current designs permit. Further, in many embodiments, the generator or other load, and associated hardware, are located at the base of this tower/driveshaft. The flexible tower/driveshaft therefore supports only itself and the attached rotors, further reducing its required strength.

For those embodiments having the generator at the base, the rotating tower/driveshaft projects substantially upward, to achieve distance from the ground. This lower section may be provided with vertical axis type blades. Higher up, the tower/driveshaft begins to bend with the direction of the wind flow. With increasing distance from its base, the tower/driveshaft becomes increasingly bent over, becoming more driveshaft, and less tower. At some height, the tower/driveshaft becomes sufficiently parallel to the wind for any coaxially attached horizontal axis rotors to effectively harness the wind, and thereby contribute toward its rotation. Multiple horizontal axis type rotors are therefore attached at spaced intervals to this upper section.

Depending on their angle of tilt, certain of the rotors may generate some lift, in the fashion of a kite. Still further from the base, the planes of rotation of the coaxially attached, horizontal axis-type rotors become increasingly perpendicular to the wind direction, and along this upper section, the flexible tower/driveshaft may be blown into a completely horizontal orientation. Toward its extreme distal end, the tower/driveshaft may even point downward, depending on conditions. Such a downward hanging section may advantageously be provided with vertical axis type blades. In addition to its simple rotation, due to its resilience, the tower/driveshaft may conditionally undertake swinging, waving, serpentine, or corkscrew types of motion, or combinations thereof, which add to the effective wind-collection area swept by the windmill.

The flexibility of the rotating tower/driveshaft naturally results in a passive downwind orientation for the rotors. The flexible tower/driveshaft smoothly converts the rotation of the substantially horizontal-axis-type rotors, as well as that of any attached vertical-axis-type rotors, whatever the wind direction, into a uniform, reliable, substantially vertical-axis rotation at the base. The high rotational rate reduces or eliminates the need for a gearbox. If a gearbox is used, it can be lighter-duty because of the lower torque requirements of a faster-spinning shaft. The motion of the flexible tower/driveshaft is stabilized to some extent by the gyroscopic action of the individual rotors spaced along its length. The result is a much lighter, simpler, and more cost-efficient windmill.

Lashing between the horizontal axis type blades may be added to help transmit torque downward, or the vertical axis blades may be extended upward and serve as lashing. If sufficiently strong, the presence of vertical axis type blades may even make a central shaft unnecessary. And the vertical axis type blades need not be exactly parallel to the axis of the tower as a whole, but may wrap around it helically, or even comprise a geometric latticework formed into a generally cylindrical shape.
The tower/driveshaft and attached rotors is supported against the pull of gravity and the force of the wind by the stiffness of the rotating tower/driveshaft tower itself, as supported by a cantilevered bearing means at the base. Guy wires may also be used. Additionally, vertical support may be provided by natural buoyancy, by aerodynamic lifting forces, or a combination thereof. In embodiments having a directionally compliant base, these additional means of vertical support may predominate, reducing the radial loading on the cantilevered bearing means at the base.

Other embodiments of the present invention having the generator near the middle of the driveshaft retain the support, such as a stationary tower, of a conventional wind turbine, while nonetheless preserving several of the advantages of the other embodiments. In these more balanced versions, the driveshaft extends both forward, substantially into the direction of the wind, as well as backward, or substantially downwind. This more balanced configuration involves less leverage, and results in less stress on the cantilevered bearing means, less stress on the shaft, as well as requiring less bending of the shaft. The entire assembly is mounted on a conventional support means, such as a tower, building, tree, pole, or other elevating structure. Since the shaft protrudes in two directions from the cantilevered bearing means, the stress on the shaft is automatically cut at least in half. Since the driveshaft is not acting as the entire tower, leverage and stresses on the shaft are further reduced. And since the length of shaft presented is more parallel to the wind, bending stresses on the shaft are even further dramatically reduced. And, this more balanced configuration places the rotors more positively, more closely controlling their positioning. The supporting frame may be extended longitudinally to support the driveshaft on bearings.

The direction of projection of the shaft, while having a major component substantially parallel to the wind, may be offset from the actual wind direction in an amount sufficient to allow an intermixture of fresh, undisturbed wind into the disk swept by each succeeding rotor, so that each rotor may effectively harness wind energy without undue disturbance from upwind rotors, and substantially contribute toward the overall rotation of the shaft. The direction of shaft projection may be changed to protect the turbine in excessively strong winds.

### Objects and Advantages:

**Object: To harness energy from the wind in an environmentally and aesthetically acceptable manner, with safety,** at the least cost.

### Advantages:

1. Lighter rotor weight: A multiplicity of smaller rotors weighs less than a single larger rotor sweeping an equivalent total area. This is because the mass of a rotor is proportional to the third power of the diameter (diameter cubed), while the area swept is only proportional to the second power of the diameter, (diameter squared). The larger the rotor, the less wind it can capture relative to its mass. Significantly, the amount of ' wind available per unit rotor mass is therefore inversely proportional to the rotor diameter. This means that a 10-meter rotor will capture 100 times as much wind as a 1-meter rotor, but can weigh 1000 times as much! From this standpoint, a multiplicity of smaller rotors is lighter for the same amount of wind captured, and therefore makes better use of materials than a single larger rotor. This dramatic savings in weight even further reduces the required tower strength.
2. Faster rotation: For a given rotor type, in a given wind speed, the tip speed is basically some multiple of the wind speed, independent of rotor diameter. Therefore, smaller rotors rotate at a faster rate (rpm) than larger rotors. The multiplicity of smaller rotors of the present invention has a faster rate of rotation (rpm) than a single larger rotor of equivalent swept area. Since electrical generators perform best at such a relatively high rate of rotation (rpm), the present invention more closely matches the desired rotation rate (rpm) of current electrical generating equipment. This means that a gearbox is either not needed, or, if needed, may be less substantial than would be the case with a single, large, slowly spinning rotor with its commensurate high torque. One version of the present invention even takes advantage of counter-rotating sets of rotors, and their differential relative rate of rotation, which essentially doubles the effective rate of rotation.
3. Lighter Duty Drivetrain: A faster-rotating driveshaft can transmit the same power at less torque than a more slowly rotating driveshaft. Since the present invention rotates faster, torques are lower, requiring a less substantial drivetrain. This lowers cost, as well as further lowering overall weight. The torque required to transmit a given amount of power through a driveshaft is inversely proportional to the rate of rotation. Since small rotors spin faster than large ones, multiple small coaxial rotors can provide the same power as a single large rotor through a less substantial driveshaft, spinning at a higher rotational rate. Therefore, the use of smaller, multiple rotors further reduces the strength required of our tower/driveshaft, and of the drivetrain in general
4. No gearbox needed: The faster rotational speed of our driveshaft eliminates or reduces the need for a gearbox to translate slow shaft rotation to a faster generator rotation. If such a gearbox is needed, it can be lighter-duty, since at higher rotational speeds, less torque is involved.
5. The simplicity and redundancy of the present invention will reduce design, manufacturing, installation, and maintenance costs;
6. The wind-shadow effect can actually be beneficial by protecting the windmill from damage in unusually high winds; Wind-shadows lengthen with the increased Reynolds numbers encountered at higher wind speeds. Also, as wind speed increases, the tower/driveshaft is increasingly bent over toward a horizontal position. These effects increase the wind-shadow effect from one rotor to the next in higher winds, protecting against destructively fast rotation.
7. As with purely downwind machines, the rotors are unlikely to contact the tower/driveshaft, and so may be made light and flexible enough to bend with extremely strong winds, avoiding damage while decreasing costs.
8. This same light flexibility allows each blade to more fully respond to instantaneous localized gusts.
9. The driveshaft is also rotationally flexible along its length, to some extent. This allows an entire rotor, or a series thereof, encountering a sudden gust to quickly accelerate. The extra energy is first absorbed by the local rotational flexibility of the driveshaft, then transmitted down the length of the shaft by its resilience. This overcomes a well-recognized problem with larger, stiff, heavy rotors: due to their relative rigidity and high momentum, the energy of a localized gust cannot be efficiently harvested; The blades can't speed up fast enough to take full advantage of the extra energy in the momentary gust before it is too late and the gust has passed. Since available power is proportional to wind velocity cubed, this can represent significant amounts of wasted energy.
10. An aesthetic improvement: The windmill of the present invention answers the question: "If Nature could somehow build, or grow, a windmill, what might it look like?" As such, it has a very natural appearance. Especially in smaller versions, the blades appear as a blur, and the assembly resembles a tall tree, naturally bending with the wind. Green coloration may be used to augment this appearance. Faster rotating blades are less visually distracting.
11. Mounting verstaility; Many versions are highly suitable for being mounted atop a building
12. Safety: Multiple smaller rotors store less kinetic energy than equivalent larger ones. This translates to less danger should mechanical failure occur. Smaller blades can do less damage, should they become detached.
13. Vibration: The low frequency vibrations associated with larger rotors are reduced or eliminated with multiple smaller rotors, making rooftop installations more practical.
14. Noise: Multiple small rotors will have different noise characteristics, in high winds, than single larger ones, and may therefore be less objectionable to nearby residents. Multiple rotors tend to collectively make an unobtrusive "white" noise, which blends in with other wind noise.

### Advantages of embodiments having the generator at base level:

1. It's a downwind machine: Utilizing the natural effect of passive downwind orientation, the present invention, in many of its embodiments, harnesses wind equally well from any direction, eliminating the need for active directional (yaw) control apparatus, mechanisms, software, and associated wind-direction sensors.
2. As with a purely vertical-axis machine, when the generator or other load, and all associated hardware, can be located at the base of the tower, this placement greatly reduces the strength required of the tower, as well as simplifying maintenance procedures, especially if the generator must be repaired, rebuilt or replaced.
3. In embodiments utilizing a rotating, flexible tower, the elimination of the requirement that the tower be absolutely rigid further reduces the required strength of the tower. Taking a lesson from nature, we note that trees are not completely rigid; we therefore let the tower do exactly what it wants to do in the wind: bend. The tower in turn rewards us by allowing lighter construction.
4. In addition to simple rotation, a windmill of the present invention may assume a swinging, waving, serpentine, or corkscrew motion. Such a trajectory sweeps the rotors through a larger area of wind than a statically rotating configuration, reducing the wind-shadow effect from one rotor to the next, thereby harnessing more total wind energy than might otherwise be expected.
5. Like purely vertical-axis machines, theoretically, simple versions of this new design could require only "one moving part"
6. An aesthetic improvement: The windmill of the present invention answers the question: "If Nature could somehow build, or grow, a windmill, what might it look like?" As such, it has a very natural appearance. Especially in smaller versions, the blades appear as a blur, and the assembly resembles a tall tree, naturally bending with the wind. Green coloration may be used to augment this appearance.

Some advantages that the embodiments having the generator near the midpoint of the shaft have over the embodiments having the generator at the base are:
1. Since the shaft protrudes in two directions from the cantilevered bearing means, the stress on the shaft is automatically cut at least in half in the present invention.
2. Since no part of the driveshaft is acting as the tower, the overall length of the shaft, as well as leverage and stresses on the shaft are further reduced.
3. Since the length of shaft presented is more parallel to the wind, bending stresses on the shaft are even further dramatically reduced, because the wind has less leverage.
4. The radial loads on the bearings are dramatically reduced, since the windmill is largely balanced about the bearings, since the driveshaft protrudes therefrom in both directions.
5. Versions having a longitudinally extended supporting frame exhibit still further reductions in bending stresses on the driveshaft and even less radial loading on the bearings.
6. The appearance has been noted to be no more obtrusive than a TV antenna.

### Drawings in General:

Fig. 1 shows the first embodiment of a windmill of the present invention having three-bladed rotors, a gear-driven generator, and sub-surface bearing means, from an offset endwise downwind aerial view.
Fig. 2 illustrates a side view of the windmill of Fig. 1.
Fig. 3 is a closeup view of the base of the windmill of Fig. 1.
Figs. 4 - 6 show alternative base configurations, similar to the base of Figs. 1- 3, described in the second through fourth embodiments.

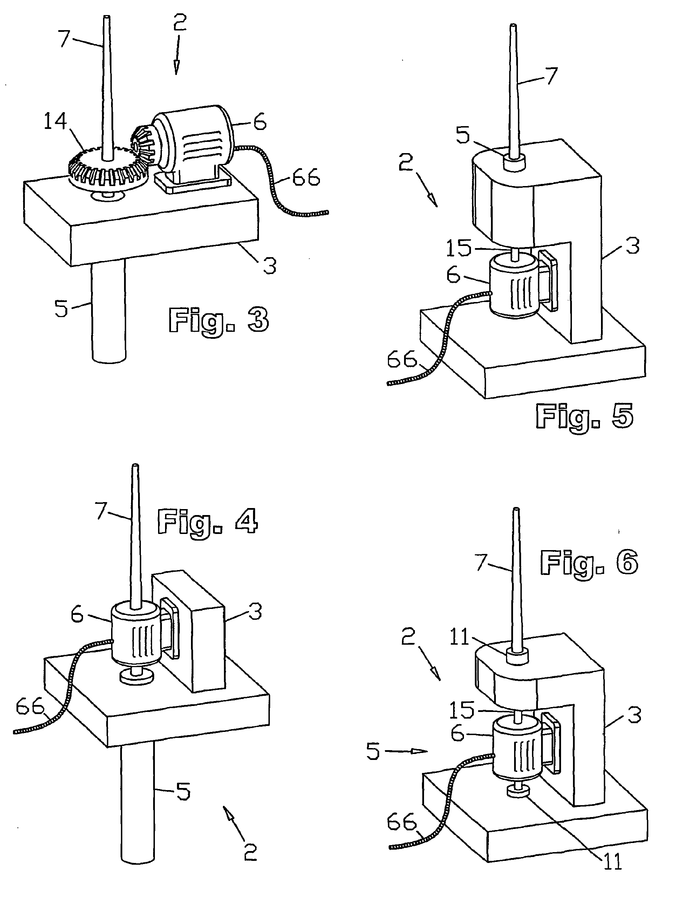

   Fig. 4 shows a base with a subsurface cantilevered bearing means and a directly driven inline load.
   Fig. 5 shows an above surface base with the directly driven load below the cantilevered bearing means.
   Fig. 6 shows an above surface base with the directly driven load within the cantilevered bearing means.

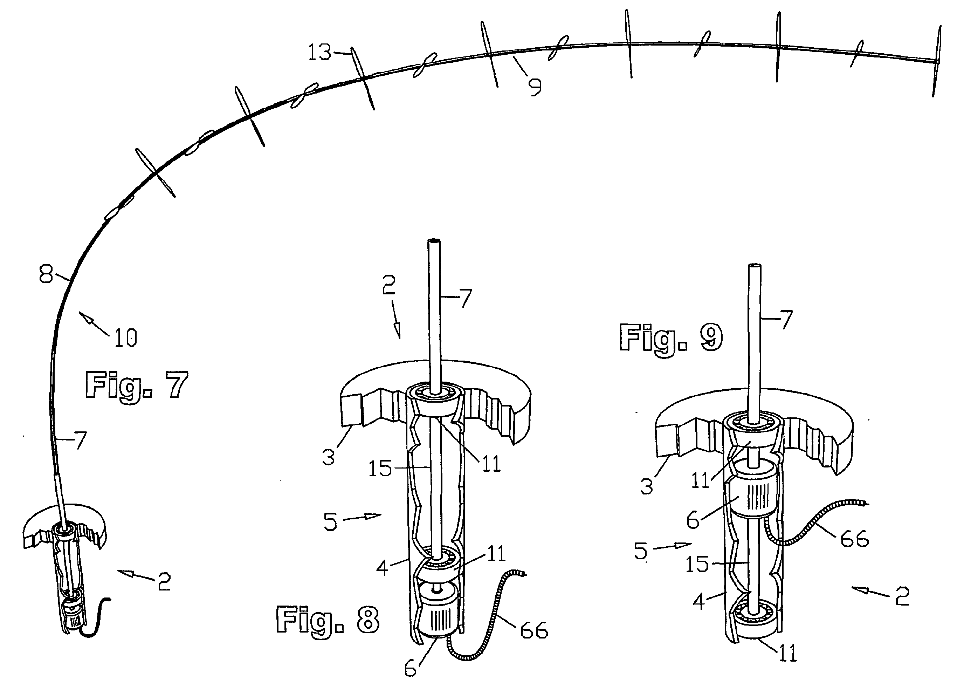

Fig. 7 is a side perspective view from an elevated position of the fifth embodiment, having a subsurface base with directly driven load, and two-bladed rotors.
Fig. 8 shows a closer view of the base of the fifth embodiment.
Fig. 9 shows the base of the sixth embodiment, an alternative version of the base of the previous, fifth embodiment.

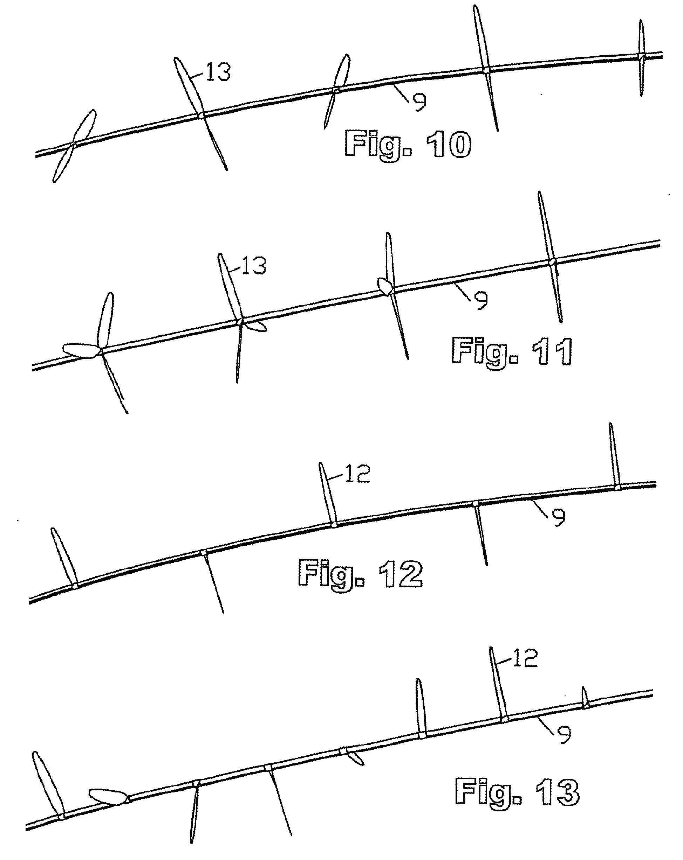

Figs. 10 -13 show closeup side views of part of the upper section of a tower/driveshaft illustrating alternative rotor blade configurations, applicable to many of the embodiments described herein:
   Fig. 10 shows a closeup side view of part of the upper section of the tower/driveshaft of the fifth embodiment shown in Fig. 8.
   Fig. 11 shows the seventh embodiment.
   Fig. 12 shows the eighth embodiment.
   Fig. 13 shows the ninth embodiment.

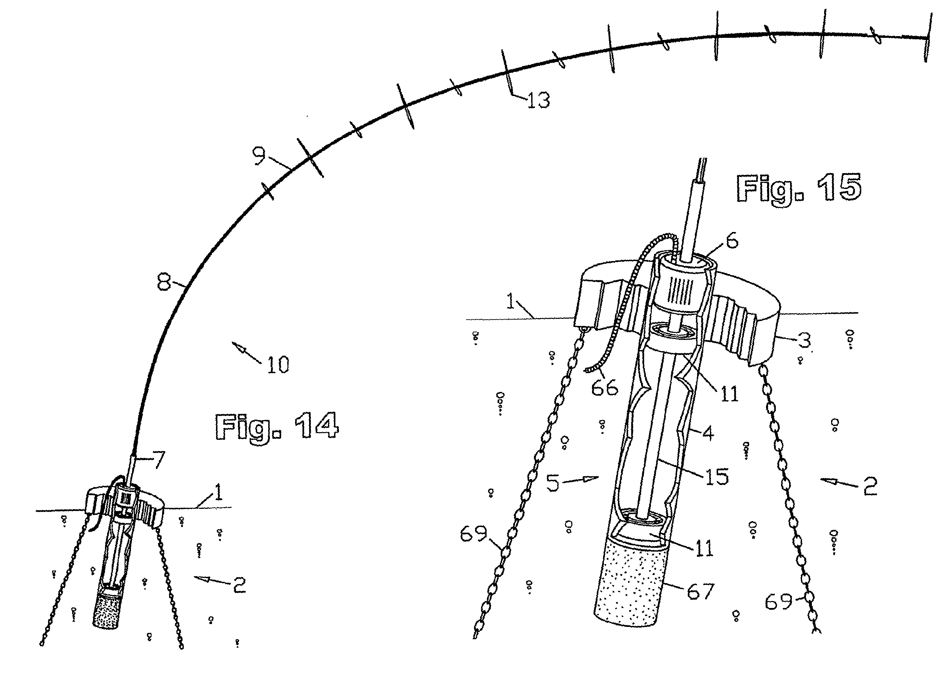

Fig. 14 shows a perspective side view of the tenth embodiment, a floating marine installation of a windmill of the present invention.
Fig. 15 shows a closeup view of the floating marine base of the tenth embodiment shown in Fig. 14.

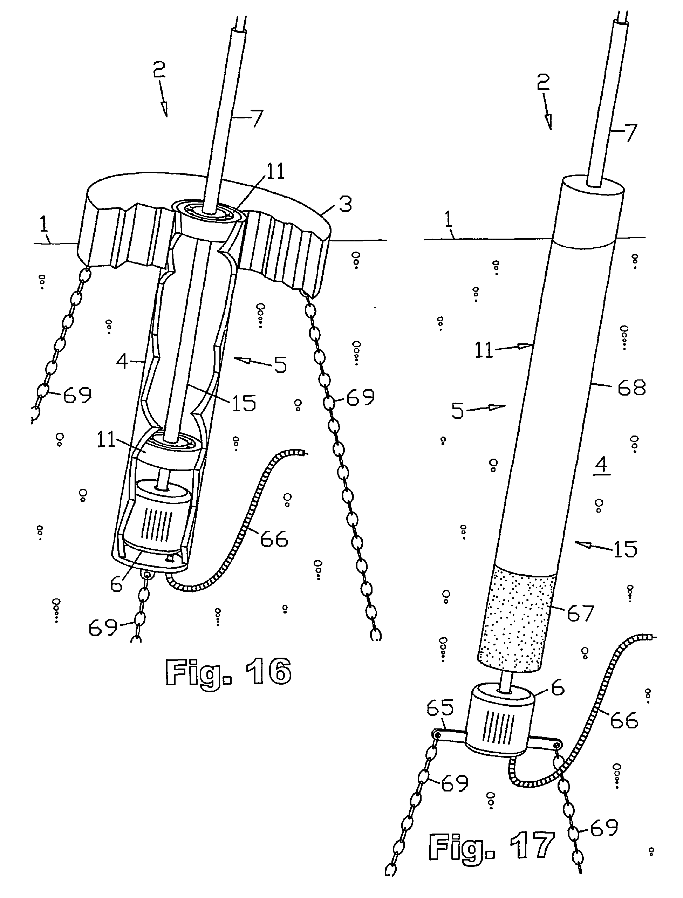

Fig. 16 shows a closeup view of the floating marine base of the eleventh embodiment.
Fig. 17 shows a closeup view of the floating, rotating, counterweighted marine base of the twelfth embodiment, having the cantilevered bearing means comprised of the liquid interface between the rotating base and the surrounding water.

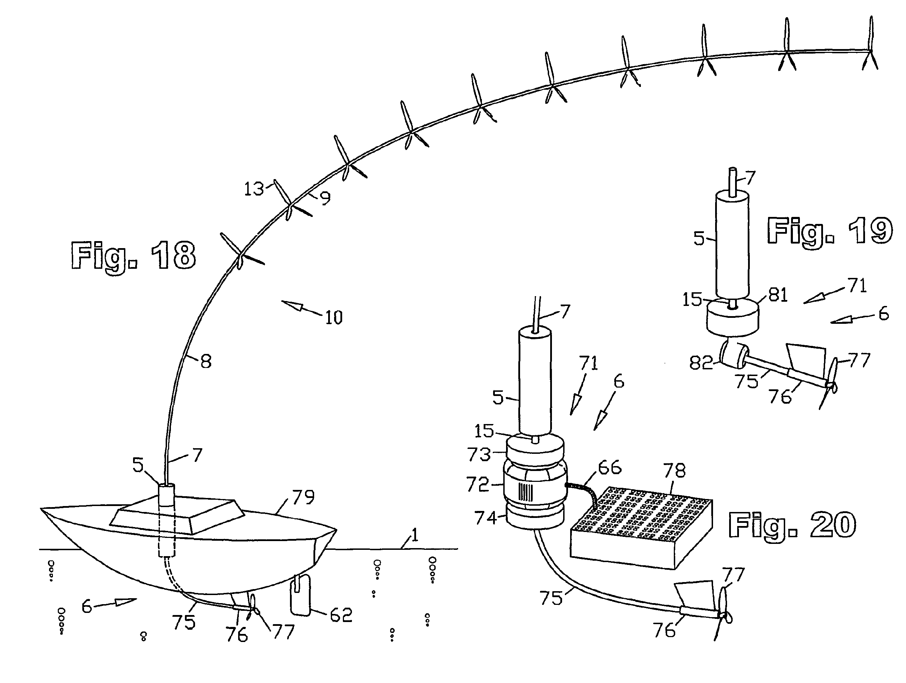

Fig. 18 shows a perspective side view of the thirteenth embodiment, a sailboat powered by a windmill of the present invention.
Fig. 19 shows a closeup view of the simple marine drivetrain of the fourteenth embodiment.
Fig. 20 shows a closeup view of the wind/electric hybrid marine drivetrain of the fifteenth embodiment.

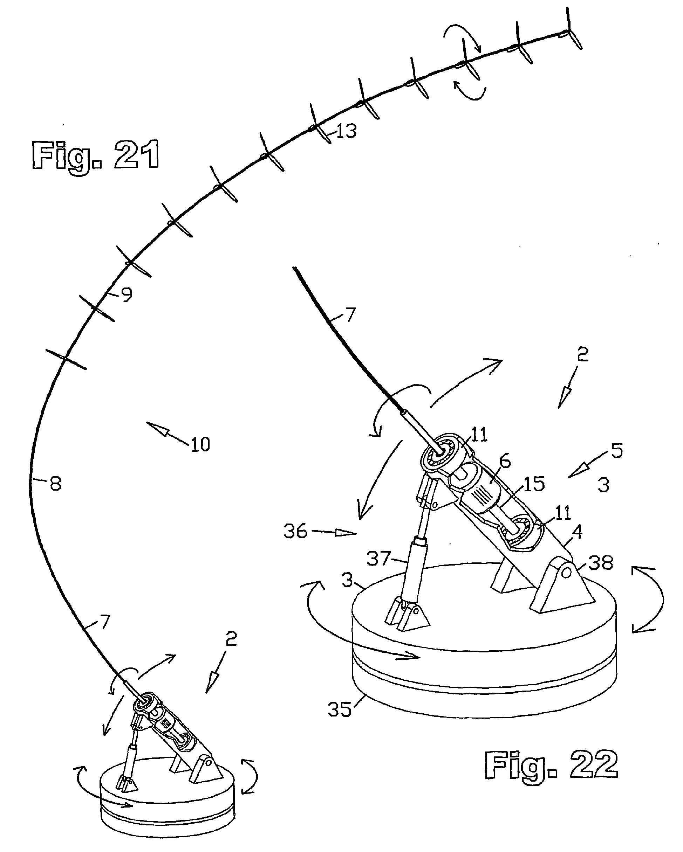

Fig. 21 shows a perspective side view of the sixteenth embodiment, a tower/driveshaft having a turntable base.
Fig. 22 shows a closeup perspective side view of the turntable base of the sixteenth embodiment.

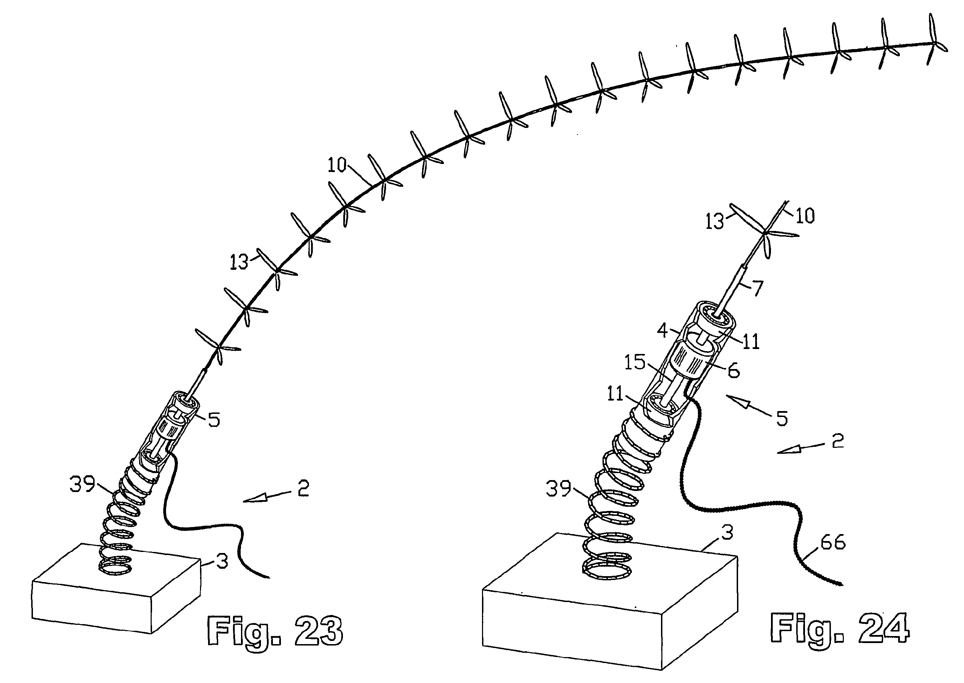

Fig. 23 shows a perspective side view of the seventeenth embodiment, a tower/driveshaft having a directionally compliant base with bias toward vertical (graphically represented by a simple coil spring)
Fig. 24 shows a closeup perspective side view of the directionally compliant base of the seventeenth embodiment. (graphically represented by a simple coil spring)

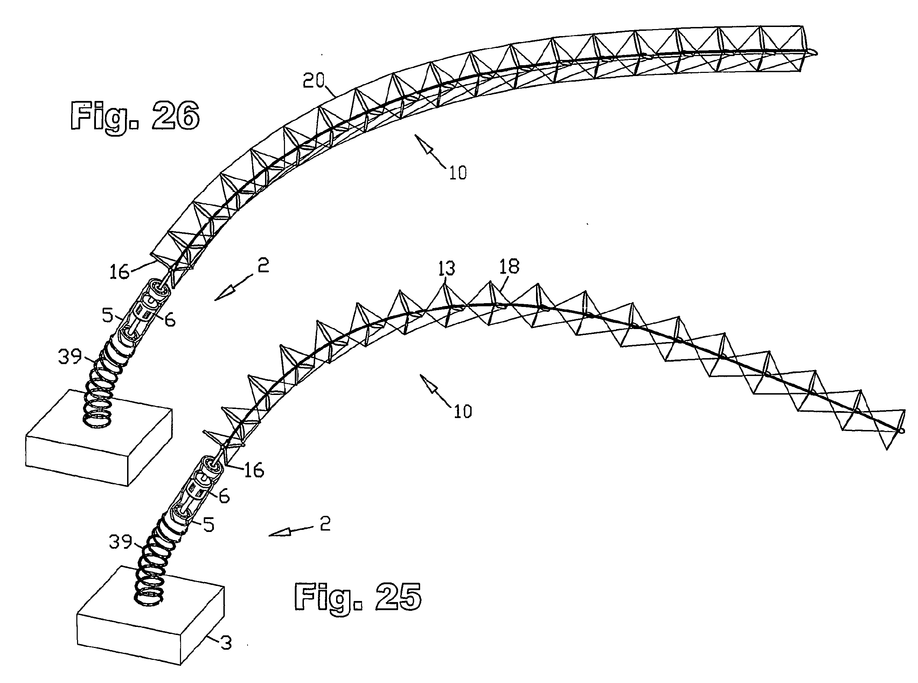

Fig. 25 shows a perspective side view of the eighteenth embodiment, having helical, torque transmitting lashing.
Fig. 26 shows a perspective side view of the nineteenth embodiment, having helical, and longitudinal lashing.

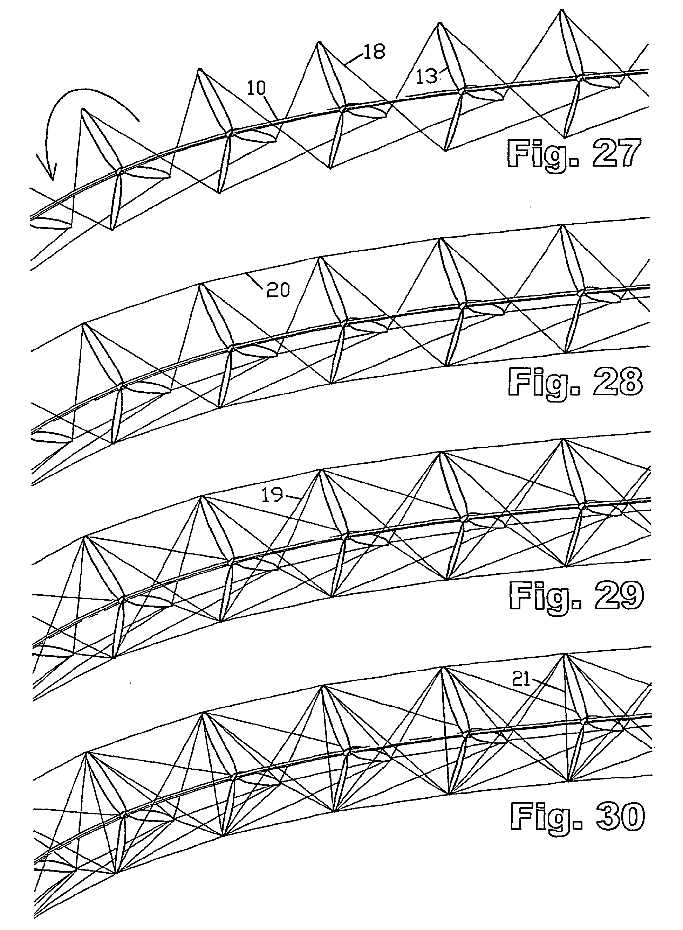

Figs. 27 - 30 show closeup side views of part of the upper section of a tower/driveshaft illustrating alternative lashing configurations, applicable to many of the embodiments described herein:
   Fig. 27 shows a closeup view of part of the upper section of a tower driveshaft of the eighteenth embodiment, having helical lashing.
   Fig. 28 shows a closeup view of part of the upper section of a tower driveshaft of the nineteenth embodiment, additionally having longitudinal lashing.
   Fig. 29 shows a closeup view of part of the upper section of a tower driveshaft of the twentieth embodiment, additionally having reverse helical lashing.
   Fig. 30 shows a closeup view of part of the upper section of a tower driveshaft of the twenty-first embodiment, additionally having circumferential lashing.

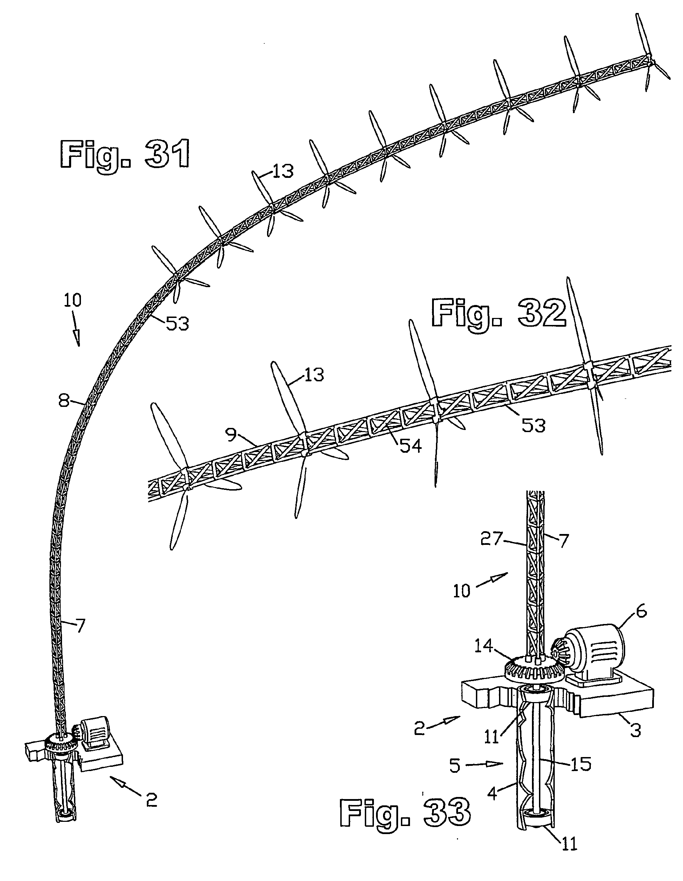

Fig. 31 shows a perspective side view of the twenty-second embodiment, having a latticework tower/driveshaft.
Fig. 32 shows a closeup perspective side view of the upper section of the latticework tower/driveshaft of the twenty-second embodiment.
Fig. 33 shows a perspective side view of the base of the twenty-second embodiment, having a latticework tower/driveshaft.

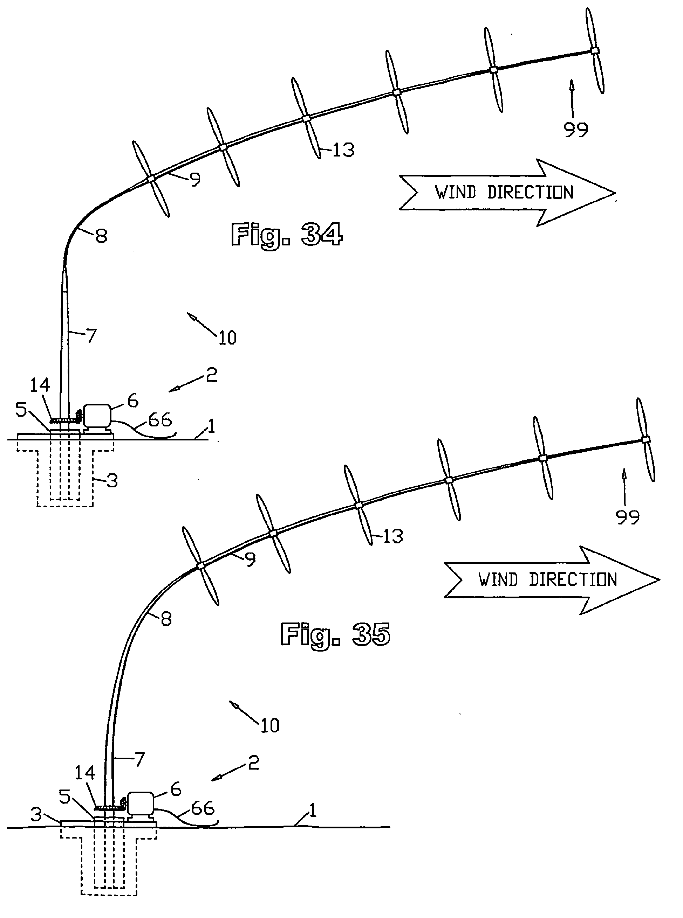

Fig. 34 shows a side view of the twenty-third embodiment, showing a tower/driveshaft in profile, depicting regions of varying longitudinal flexibility.
Fig. 35 shows a side view of the twenty-fourth embodiment, showing a tower/driveshaft in profile, depicting regions of varying longitudinal flexibility.

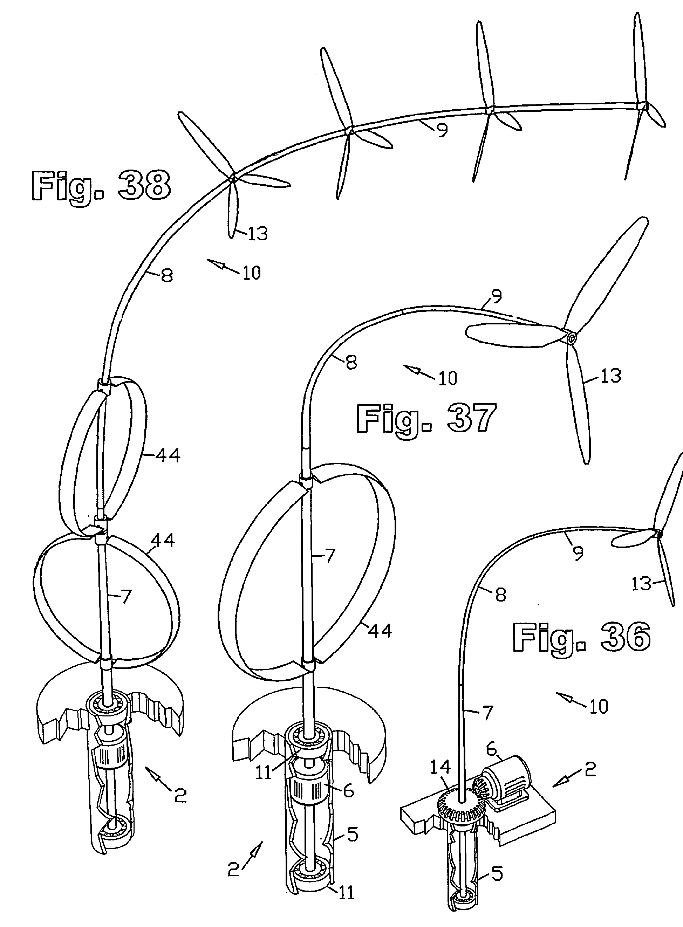

Fig. 36 shows an upper side perspective view of the windmill of the twenty-fifth embodiment, having a single horizontal axis type rotor.
Fig. 37 shows an upper side perspective view of the windmill of the twenty-sixth embodiment, having a vertical axis rotor, and a horizontal axis type rotor.
Fig. 38 shows an upper side perspective view of the windmill of the twenty-seventh embodiment, having multiple vertical axis rotors, and multiple horizontal axis type rotors

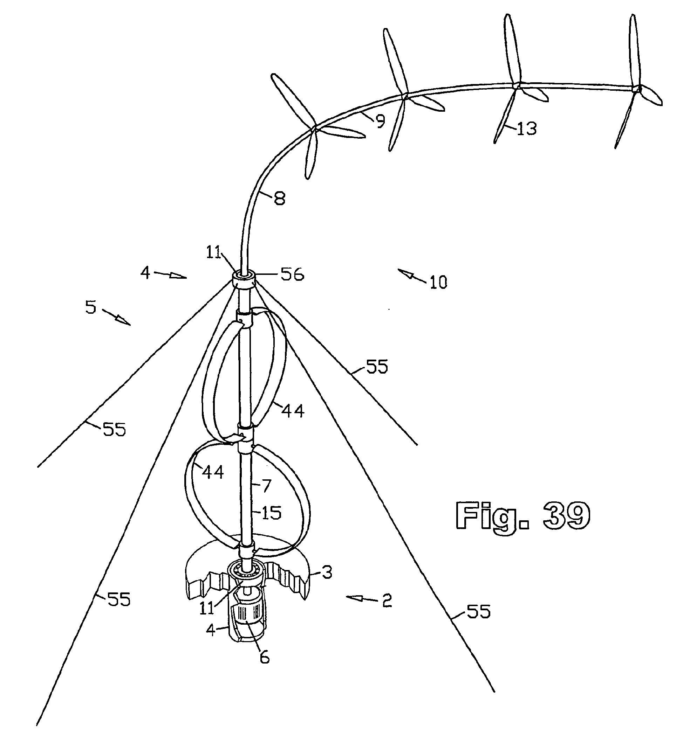

Fig. 39 shows an upper side perspective view of the twenty-eighth embodiment, having multiple horizontal axis, and multiple vertical axis rotors, supported by guy wires.

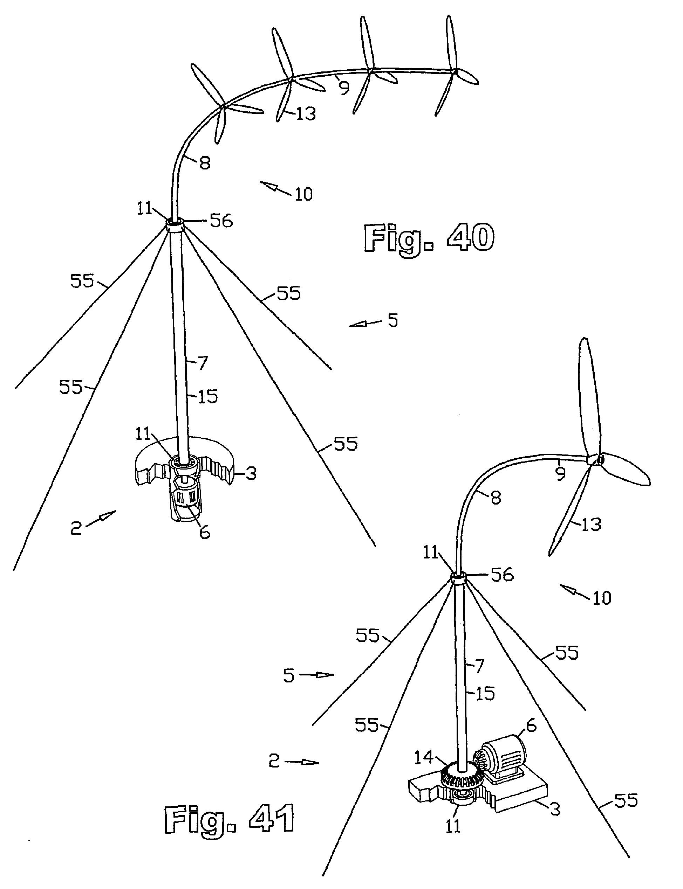

Fig. 40 shows an upper side perspective view of the twenty-ninth embodiment, having multiple horizontal axis type rotors, and supported by guy wires.
Fig. 41 shows an upper side perspective view of the thirtieth embodiment, having a single horizontal axis type rotor, supported by guy wires.

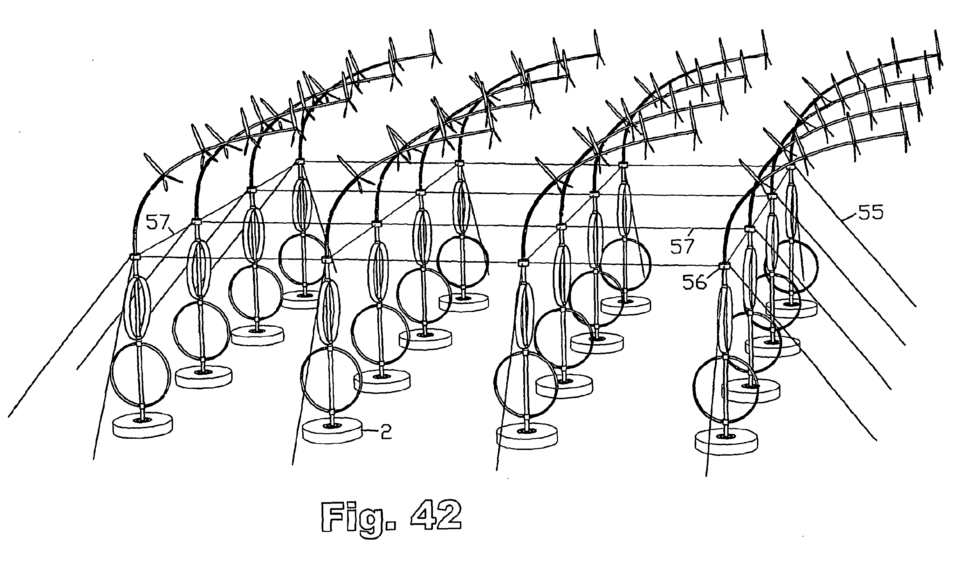

Fig. 42 shows the thirty first embodiment - a wind farm of wind turbines of the twenty-eighth embodiment, interconnected through a shared grid of guy wires.

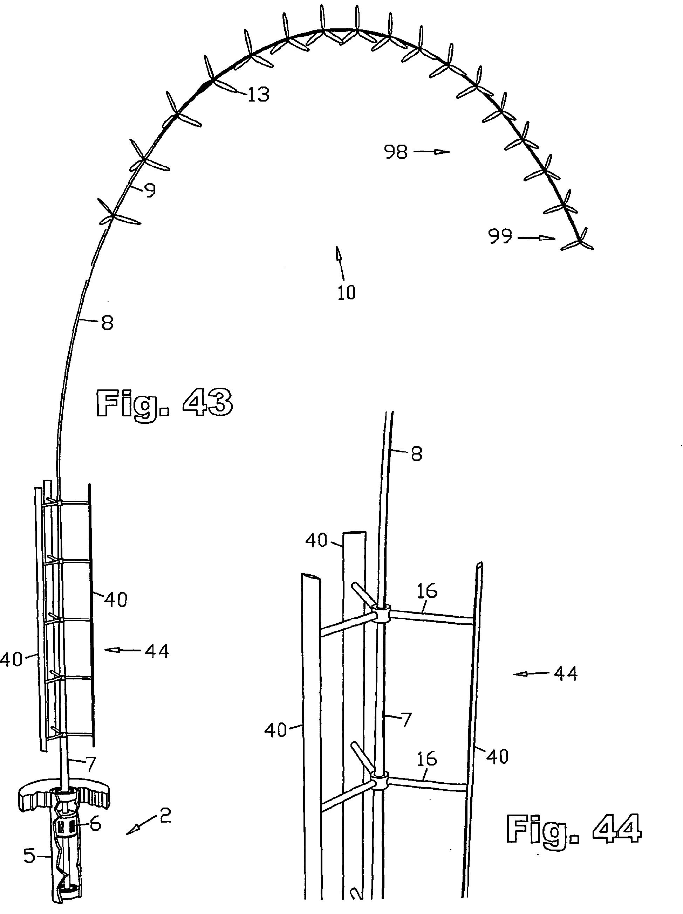

Fig. 43 shows an upwind side perspective view of a wind turbine of the thirty-second embodiment, having an elongate vertical axis rotor, and multiple horizontal axis type rotors.
Fig. 44 shows a closeup view of the upper end of the elongate vertical axis rotor of the thirty-second embodiment.

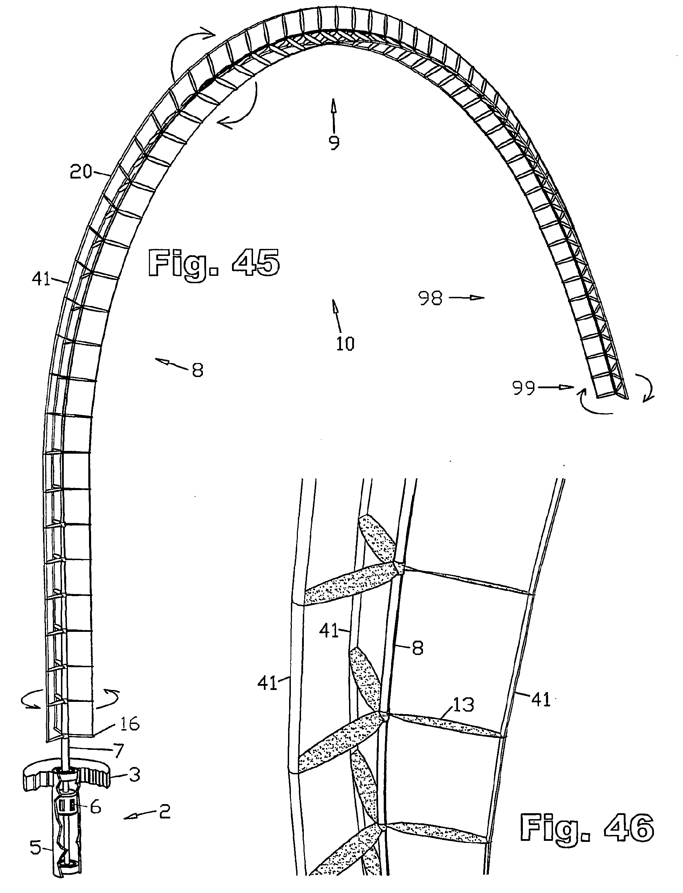

Fig. 45 shows an upwind side perspective view of a wind turbine of the thirty-third embodiment, having elongate vertical axis type rotor blades extending along the entire length of the tower/driveshaft, attached to the multiple horizontal axis type rotors.
Fig. 46 shows a closeup view of the tower/driveshaft of the thirty-third embodiment.

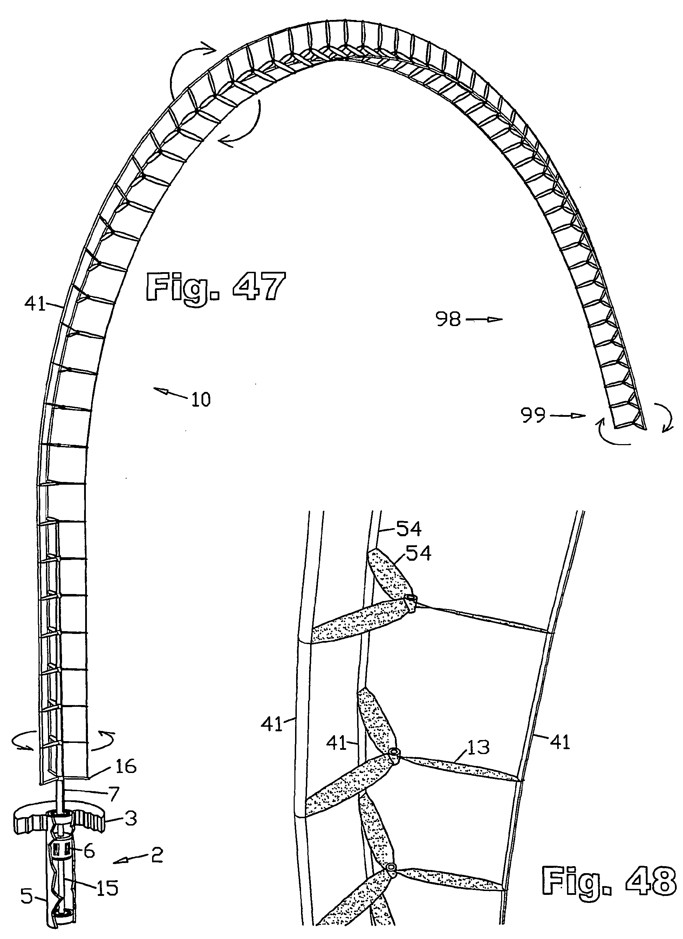

Fig. 47 shows an upwind side perspective view of a wind turbine of the thirty-fourth embodiment, having elongate vertical axis type rotor blades extending along the entire length of the tower/driveshaft, attached to the multiple horizontal axis type rotors, with no central shaft.
Fig. 48 shows a closeup view of the tower/driveshaft of the thirty-fourth embodiment.

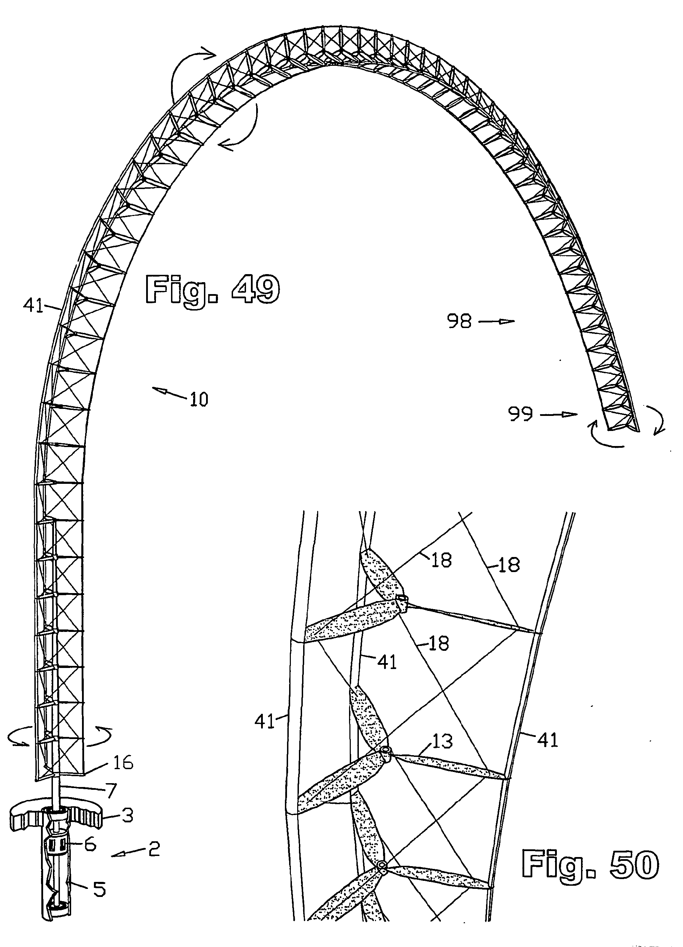

Fig. 49 shows an upwind side perspective view of a wind turbine of the thirty-fifth embodiment, having elongate vertical axis type rotor blades extending along the entire length of the tower/driveshaft, attached to the multiple horizontal axis type rotors, with no central shaft, and helical lashing
Fig. 50 shows a closeup view of the tower/driveshaft of the thirty-fifth embodiment.

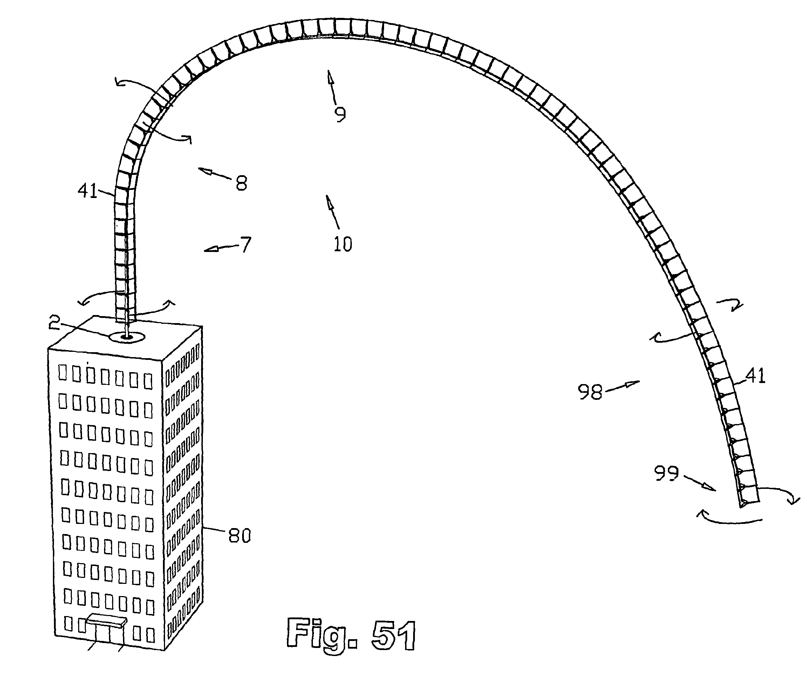

Fig. 51 shows an upwind side view of the thirty-sixth embodiment, a windmill of the present invention mounted atop a building, having both vertical and horizontal axis type rotor blades, with a distal end hanging below the level of the base.

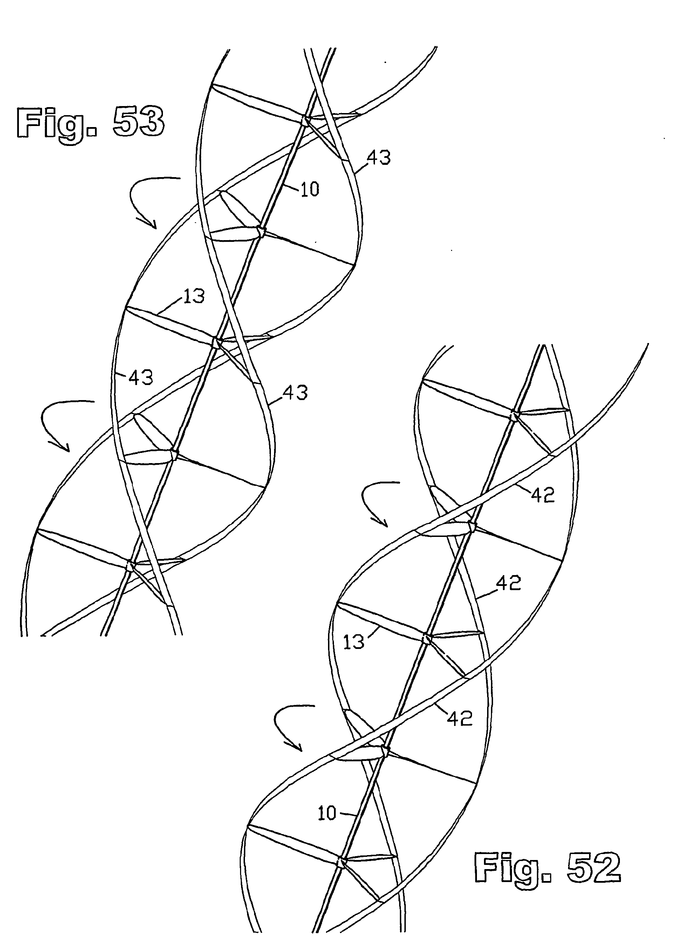

Fig. 52 is a closeup view of a section of the tower/driveshaft of the thirty-seventh embodiment, having helically wrapped vertical axis blades.
Fig. 53 is a closeup view of a section of the tower/driveshaft of the thirty-eighth embodiment, having reverse helically wrapped vertical axis blades.

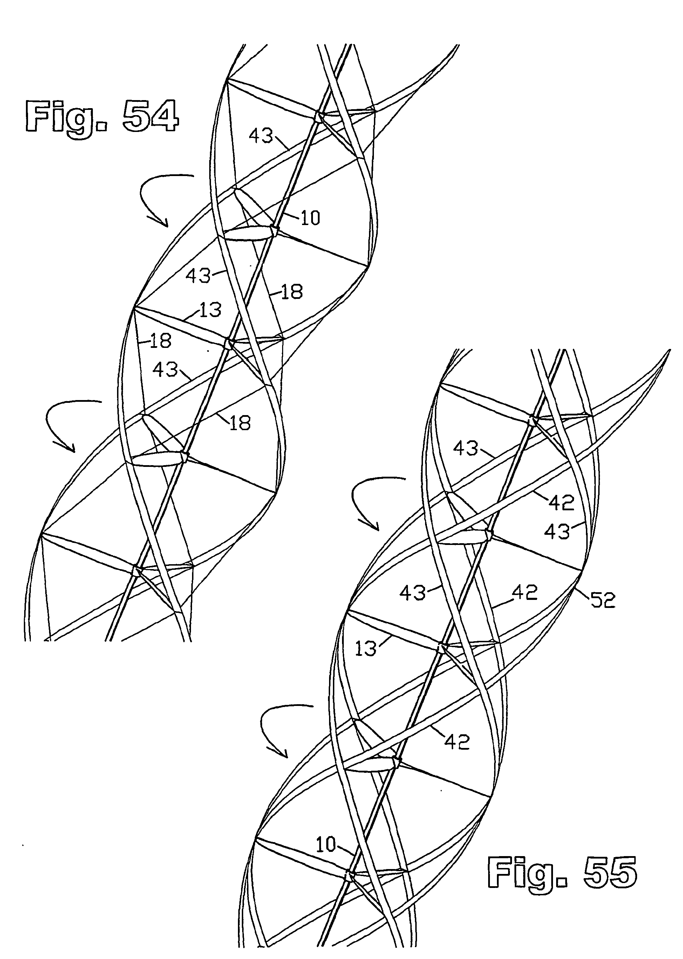

Fig. 54 is a closeup view of a section of the tower/driveshaft of the thirty-ninth embodiment, having reverse helically wrapped vertical axis blades, and helical lashing.
Fig. 55 is a closeup view of a section of the tower/driveshaft of the fortieth embodiment, having vertical axis blades, helically wrapped, in both directions.
   (The forty-first embodiment is not specifically illustrated, but refers back to Fig. 55 also.)

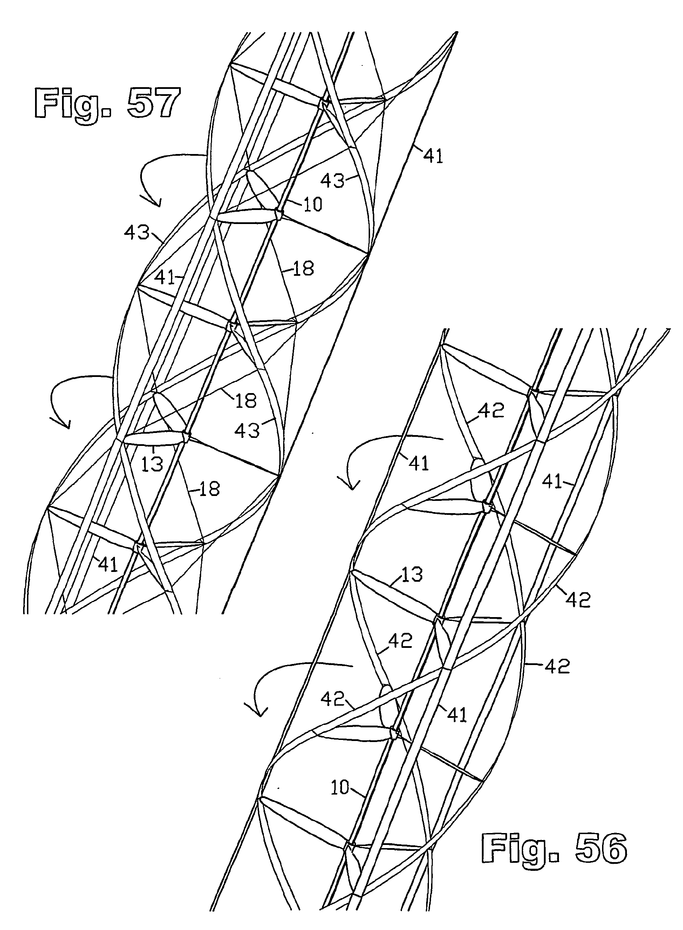

Fig. 56 is a closeup view of a section of the tower/driveshaft of the forty-second embodiment, having helically wrapped vertical axis type blades, and longitudinal vertical axis blades.
Fig. 57 is a closeup view of a section of the tower/driveshaft of the forty-third embodiment, having reverse helically wrapped vertical axis type blades, helical torque transmitting lashing, and longitudinal vertical axis blades.

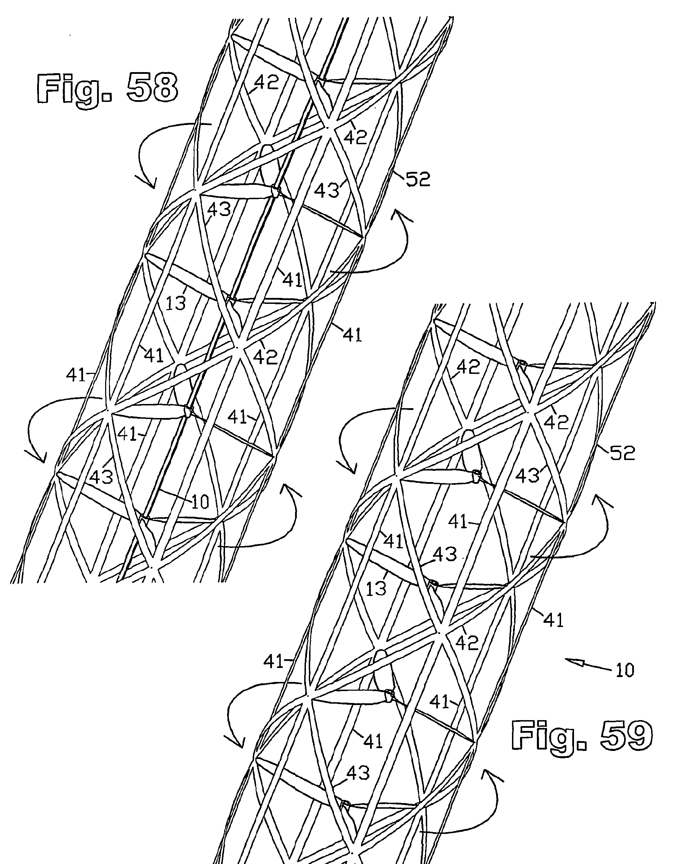

Fig. 58 is a closeup view of a section of the tower/driveshaft of the forty-fourth embodiment, having vertical axis type blades, helically wrapped in both directions, as well as continuous longitudinal vertical axis type blades.
Fig. 59 is a closeup view of a section of the tower/driveshaft of the forty-fifth embodiment, having vertical axis type blades, helically wrapped in both directions, as well as extending longitudinally, as in the previous embodiment, but with no central shaft.

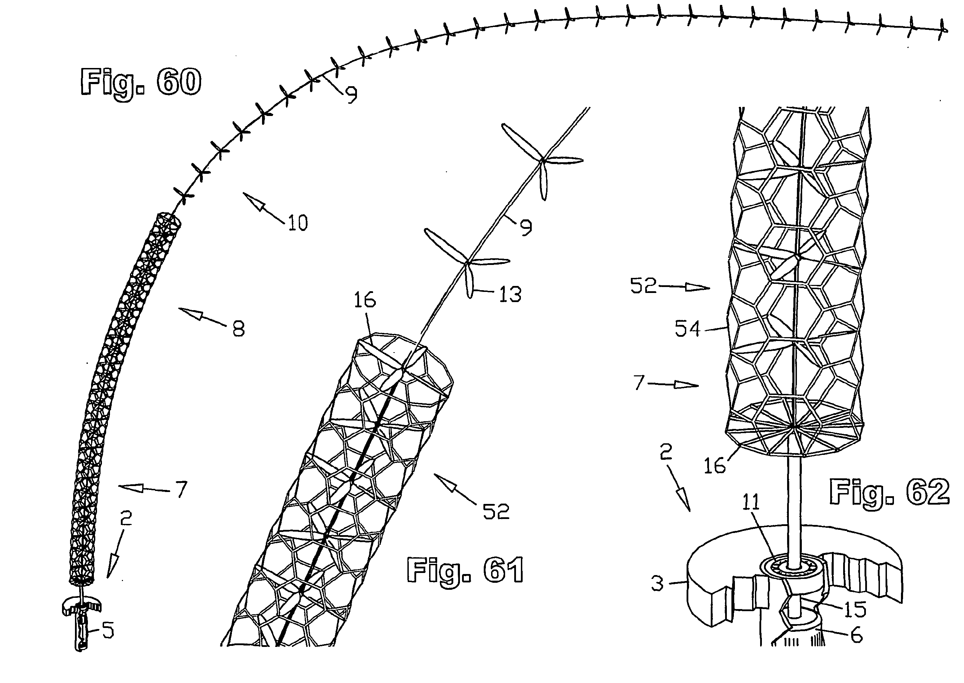

Fig. 60 is a downwind side view of the forty-sixth embodiment, having a cylindrical lower section composed of a hexagonal array of aerodynamic struts comprising vertical axis type blades, and an upper section having horizontal axis type blades.
Fig. 61 is a closer view of the forty-sixth embodiment, where the lower section meets the middle section.
Fig. 62 is a closer view of the forty-sixth embodiment, where the lower section meets the base.

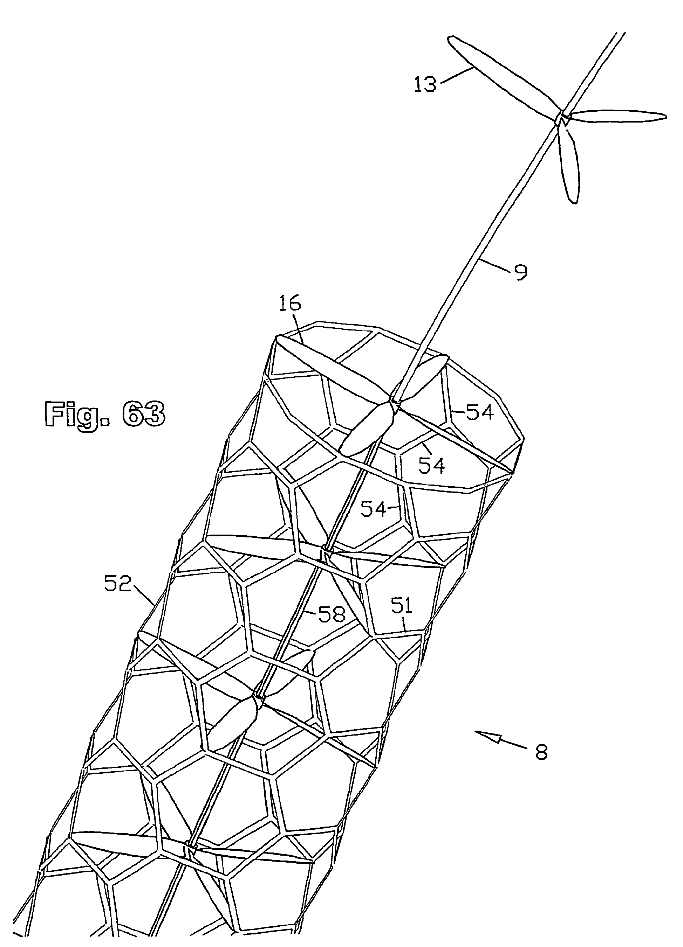

Fig. 63 is an even closer view of the forty-sixth embodiment, where the lower section meets the middle section. (The forty seventh embodiment is not illustrated, but refers back to Figs. 60 - 63)

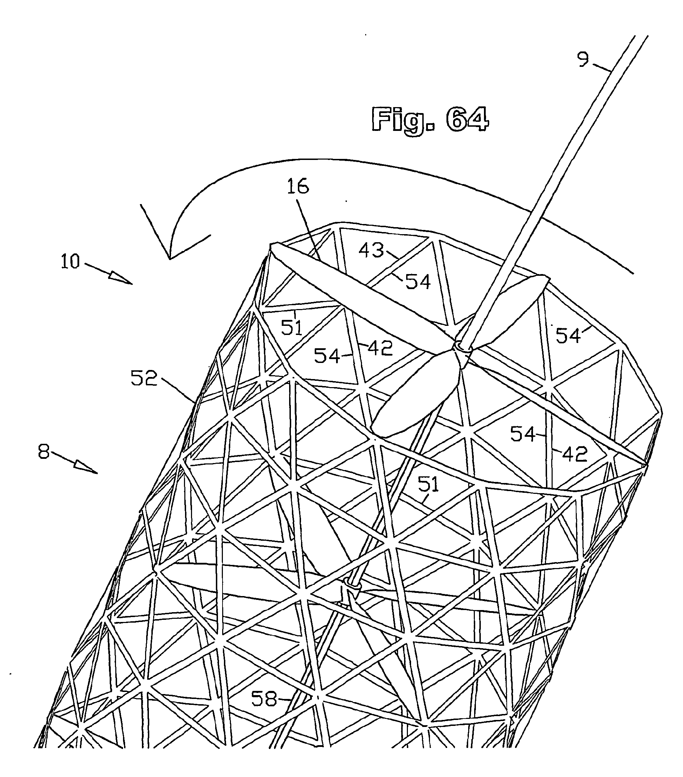

Fig. 64 shows an extreme closeup view of the forty-eighth embodiment, having a cylindrical lower section comprised of a triangular array of aerodynamic struts comprising vertical axis type blades, where the lower section meets the middle section.

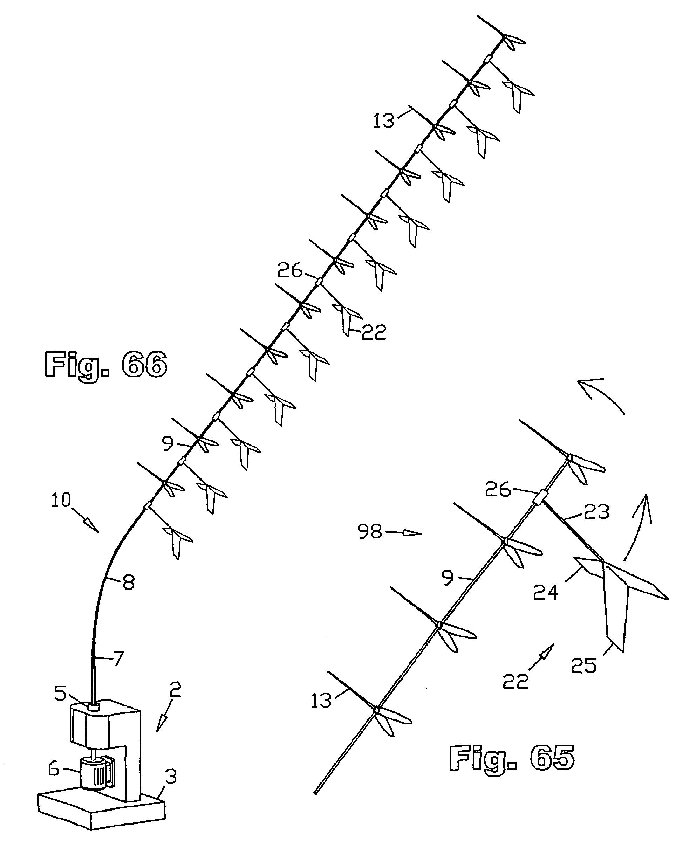

Fig. 65 shows a closeup view of the forty-ninth embodiment, having a cantilevered tail.
Fig. 66 shows an upwind side perspective view of the windmill of the fiftieth embodiment, having multiple cantilevered tails.

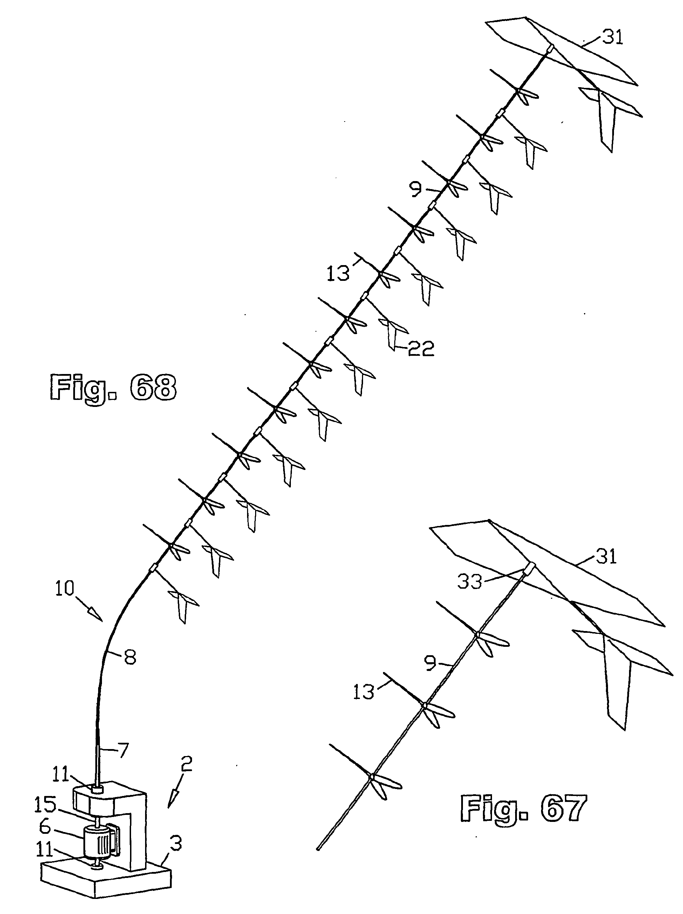

Fig. 67 shows a closeup view of the upper section of the tower/driveshaft of the fifty-first embodiment, comprising a lifting body.
Fig. 68 shows an upwind side perspective view of the windmill of the fifty-second embodiment, having a lifting body and multiple cantilevered tails.

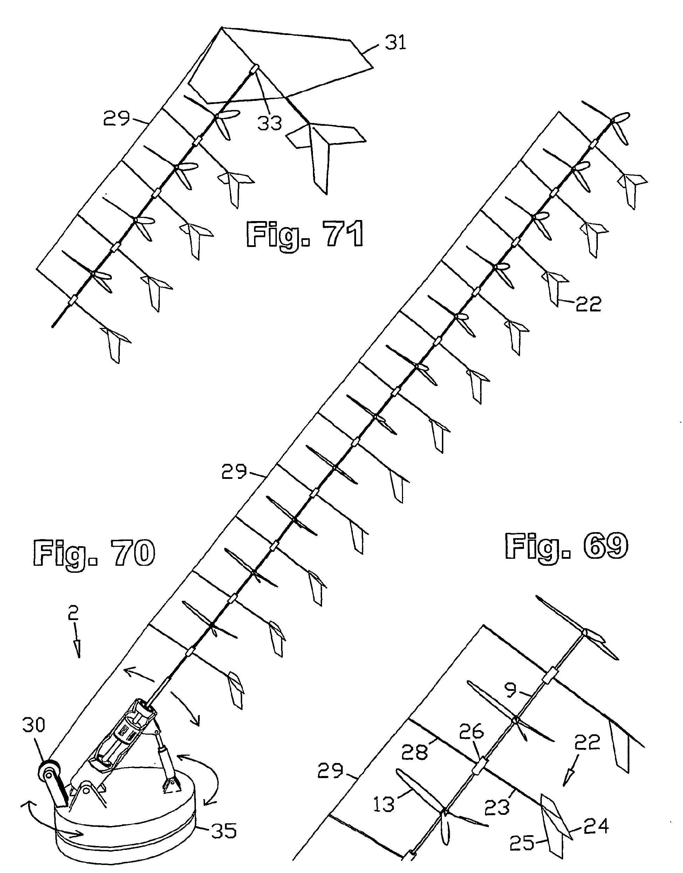

Fig. 69 is a closeup view of the upper section of the tower/driveshaft of the fifty-third embodiment, having cantilevered tails, cantilevered noses, pulled toward the base by a tension transmission means.
Fig. 70 is a perspective side view of the tower/driveshaft of the fifty-third embodiment, having cantilevered tails, and cantilevered noses, pulled toward the base by a tension transmission means.
Fig. 71 is a closeup view of the upper section of the tower/driveshaft of the fifty-fourth embodiment having a lifting body, cantilevered tails, and cantilevered noses, pulled toward the base by a tension transmission means.

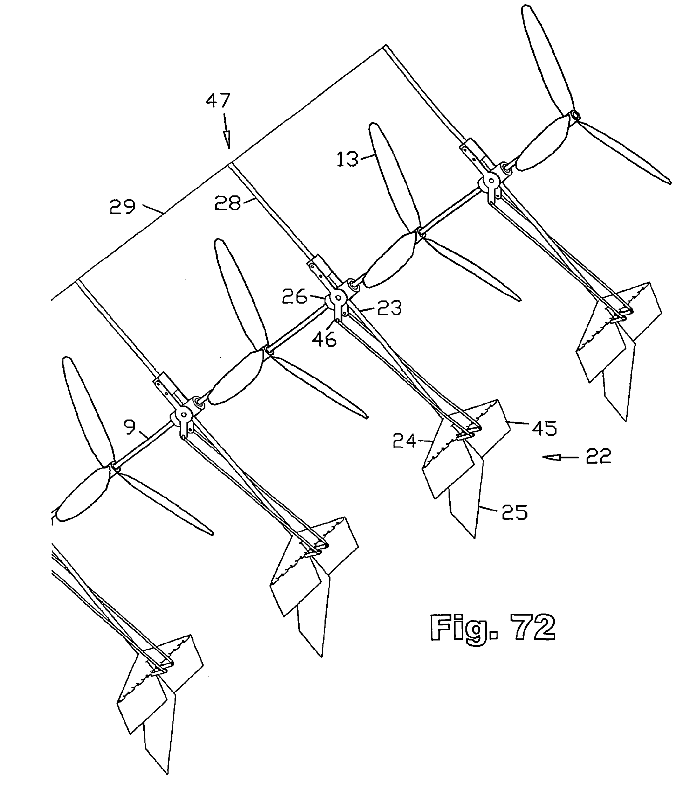

Fig. 72 is a closeup view of the upper section of the tower/driveshaft of the fifty-fifth embodiment having cantilevered tails with adjustable elevator surfaces.

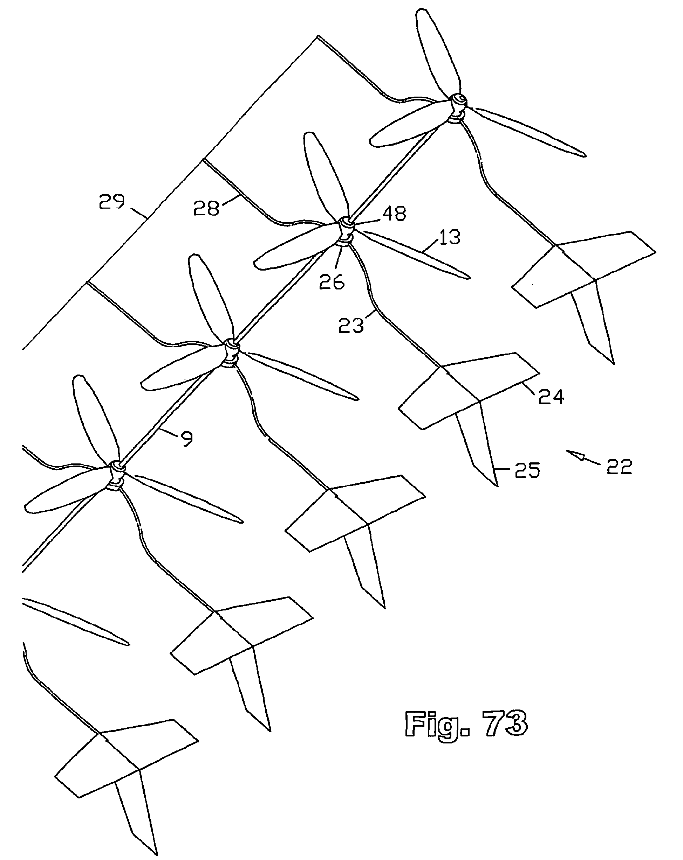

Fig. 73 is a closeup view of the upper section of the tower/driveshaft of the fifty-sixth embodiment having tilting rotors rotationally coupled to tilting cantilevered tails.

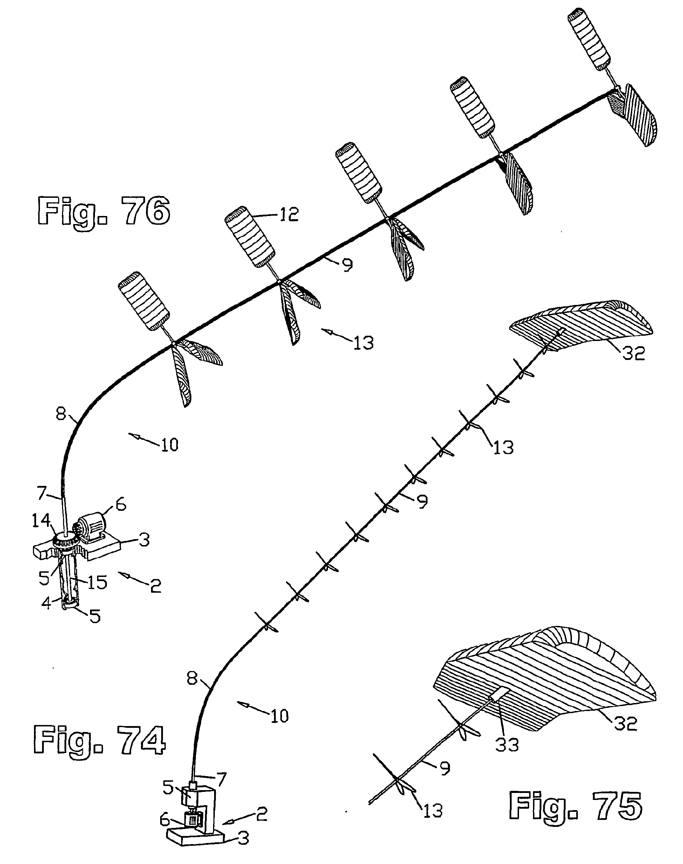

Fig. 74 is an upwind side perspective view of the fifty-seventh embodiment, comprising multiple horizontal axis type rotors, and a buoyant lifting body.
Fig. 75 is a closeup view of the buoyant lifting body of the fifty-seventh embodiment.
Fig. 76 is an upwind side perspective view of the fifty-eighth embodiment, comprising multiple horizontal axis type rotors having buoyant blades.

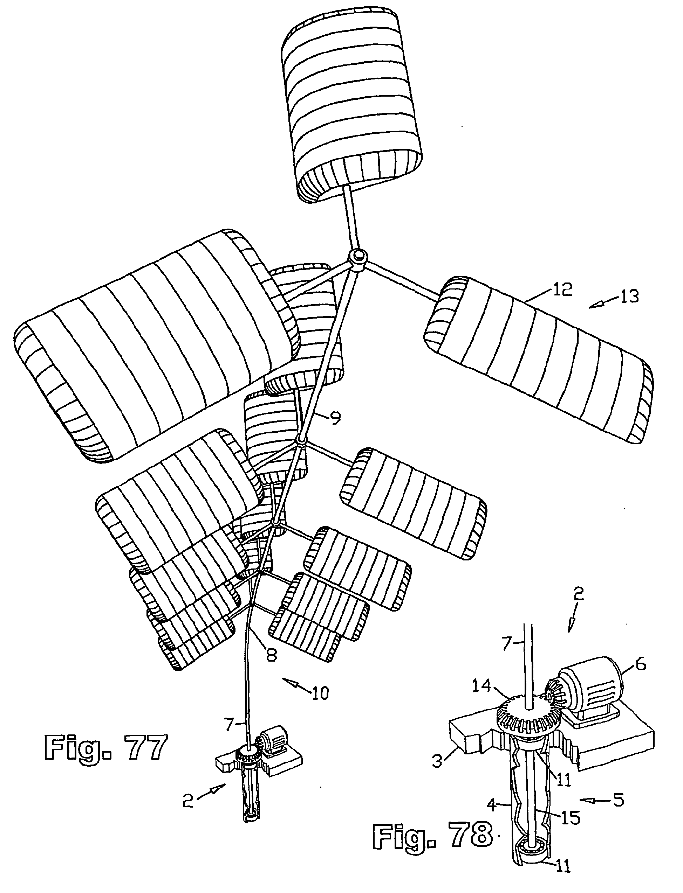

Fig. 77 is a downwind perspective view from above, looking down the tower/driveshaft of the fifty-eighth embodiment.
Fig. 78 shows a closeup view of the base of the fifty-eighth embodiment.

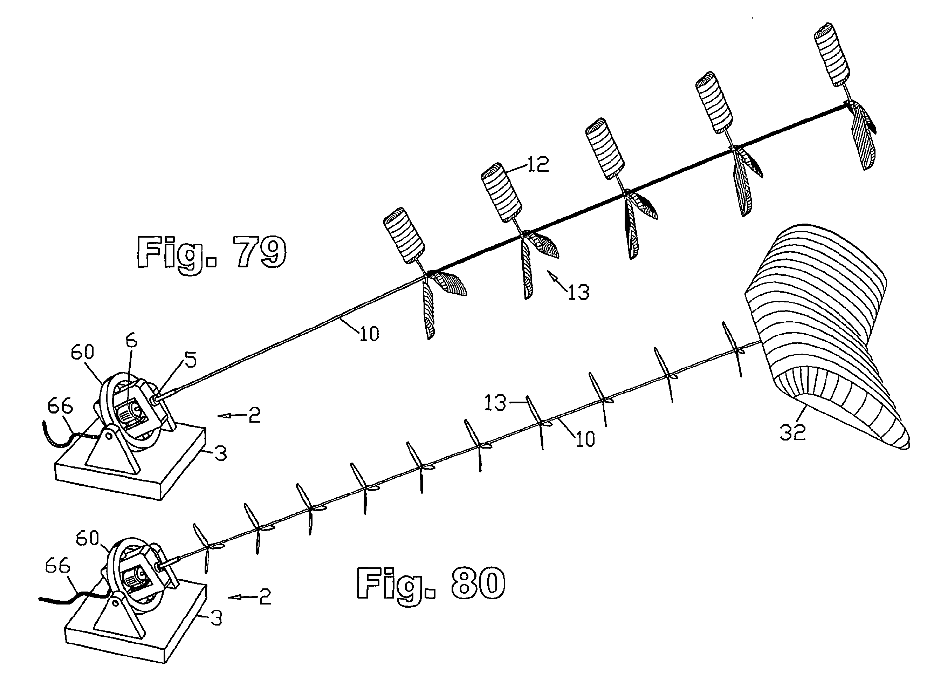

Fig. 79 shows a downwind perspective side view of the fifty-ninth embodiment, having buoyant horizontal axis type rotors and a directionally compliant base.
Fig. 80 shows a downwind perspective side view of the sixtieth embodiment, having multiple horizontal axis type rotors, a buoyant lifting body, and a directionally compliant base.

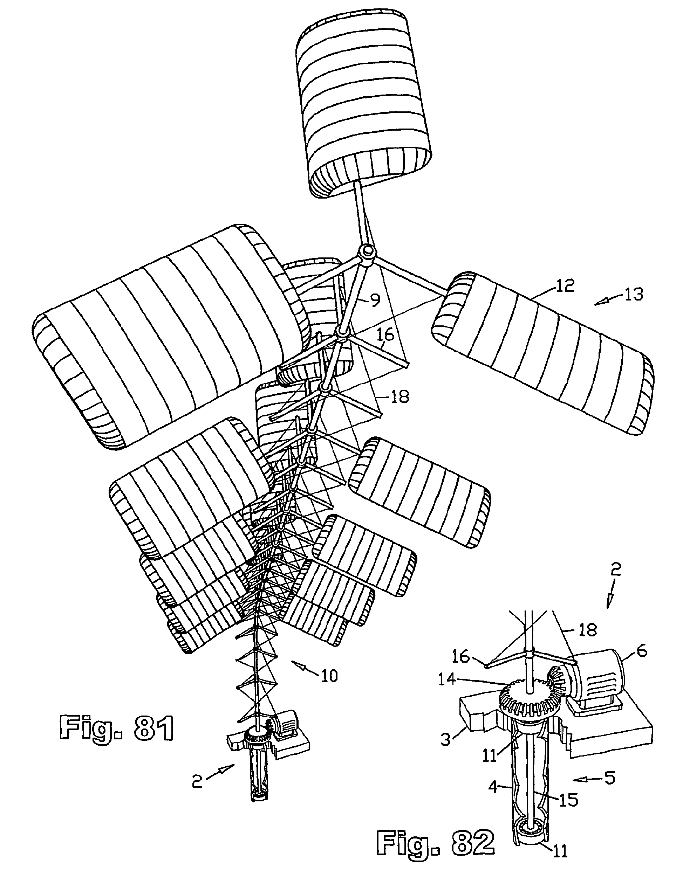

Fig. 81 is a downwind perspective view from above, looking down the tower/driveshaft of the sixty-first embodiment, comprising multiple horizontal axis type rotors having buoyant blades, and helical torque transmission lashing sequentially connected to multiple armatures.
Fig. 82 shows a closeup view of the base of the sixty-first embodiment, showing the lashing attached to the lowest armature.

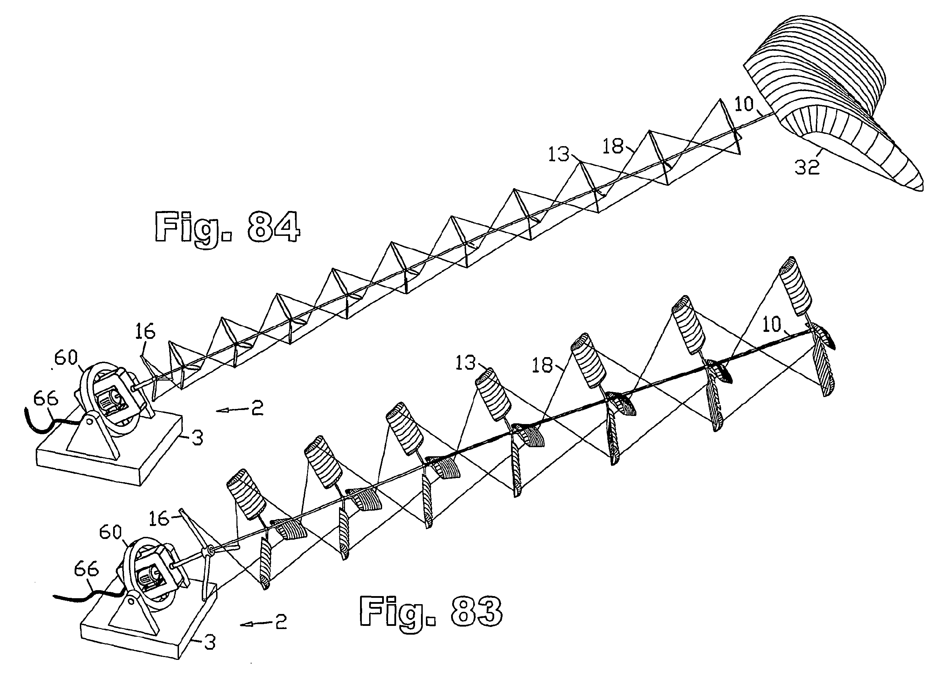

Fig. 83 shows a downwind perspective side view of the sixty-second embodiment, having multiple horizontal axis type rotors having buoyant blades, and a directionally compliant base.
Fig. 84 shows a downwind perspective side view of the sixty-third embodiment, having multiple horizontal axis type rotors connected by helical torque transmitting lashing, a buoyant lifting body, and a directionally compliant base.

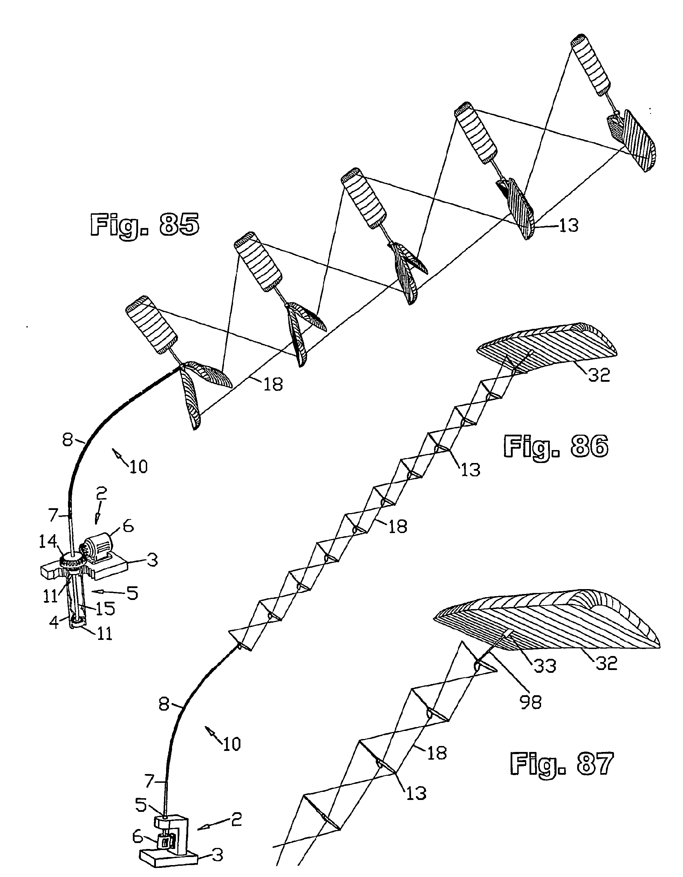

Fig. 85 is a side perspective view of the sixty-fourth embodiment, having buoyant horizontal axis type rotors, held by torque transmitting lashing, with no central shaft.
Fig. 86 shows an upwind side perspective view of the sixty-fifth embodiment, having a buoyant lifting body, and multiple horizontal axis type rotors suspended by torque transmitting lashing.
Fig. 87 shows a closeup view of the buoyant lifting body of the sixty-fifth embodiment.

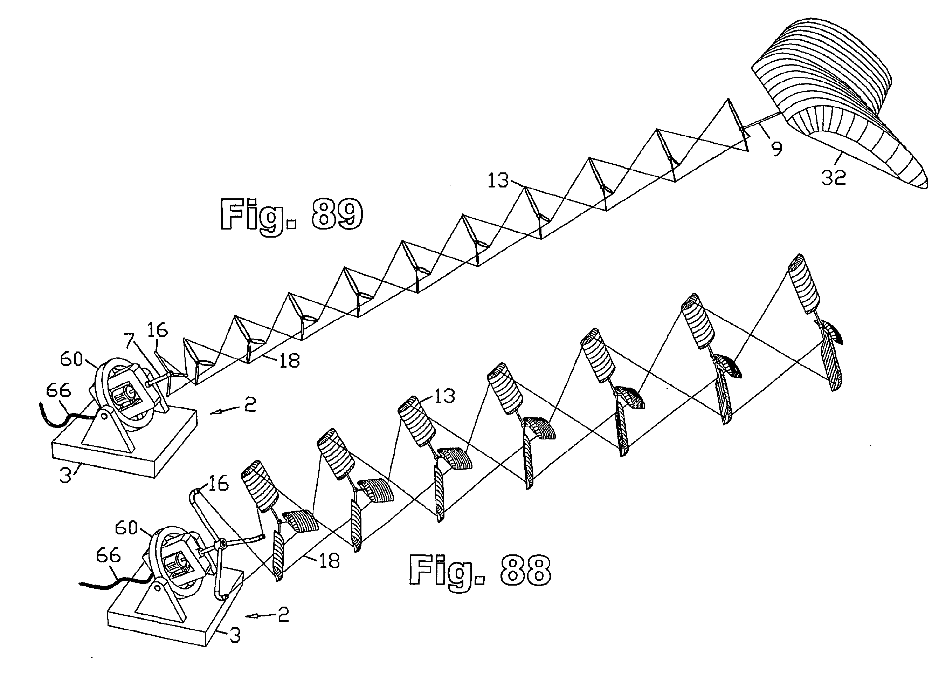

Fig. 88 is a downwind side perspective view from above, of the sixty-sixth embodiment, having buoyant rotor blades tethered by torque transmitting lashing, and a directionally compliant base.
Fig. 89 is a downwind side perspective view from above, of the sixty-seventh embodiment, having a buoyant lifting body, multiple horizontal axis type rotors suspended by torque transmitting lashing, and a directionally compliant base.

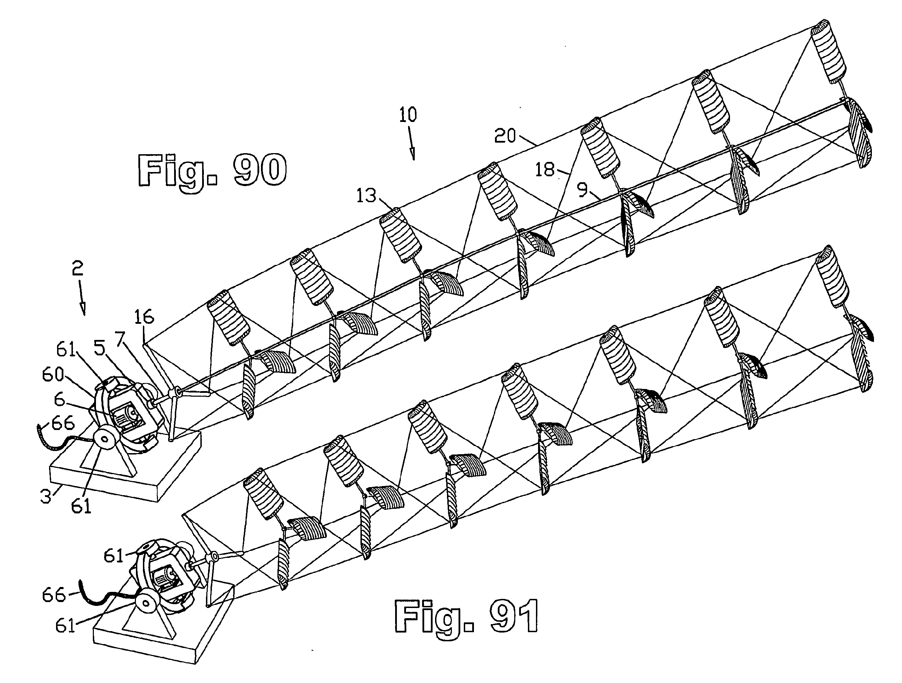

Fig. 90 shows a downwind side perspective view from above of the sixty-eighth embodiment, having multiple horizontal axis type rotors with buoyant blades, helically wrapped torque transmitting lashing, elongate lashing, and a directionally compliant base with means for directional bias.
Fig. 91 shows a downwind side perspective view from above of the sixty-ninth embodiment, having multiple horizontal axis type rotors with buoyant blades, helically wrapped torque transmitting lashing, elongate lashing, a directionally compliant base with means for directional bias, and no central shaft.

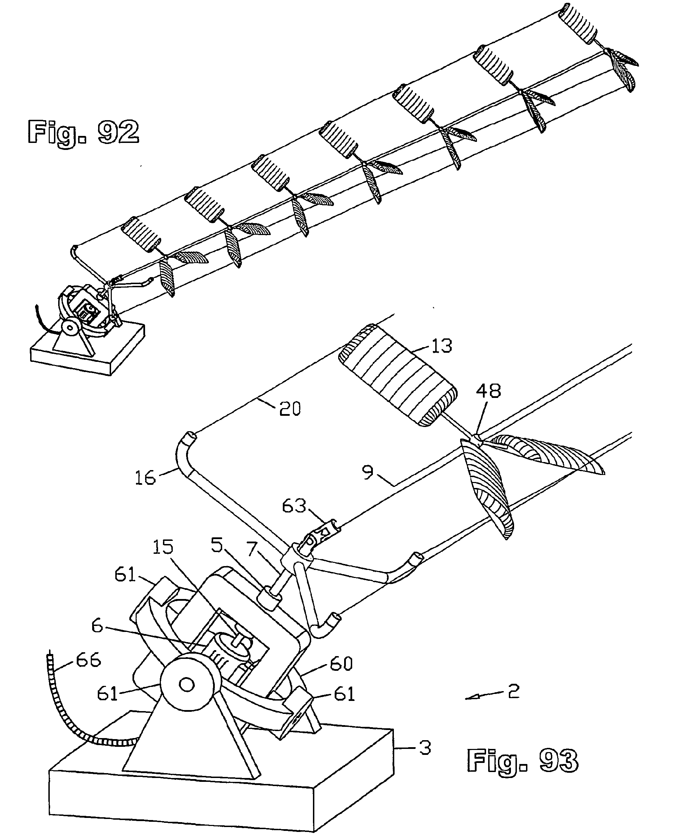

Fig. 92 shows a downwind side perspective view from above, of the seventieth embodiment, having horizontal axis type rotors, which may be buoyant, mounted on tilting hubs, steerable by elongate lashing attached to an armature, rotationally supported by a directionally compliant base, as influenced by a means for directional bias.
Fig. 93 is a closeup view of the base of the seventieth embodiment.

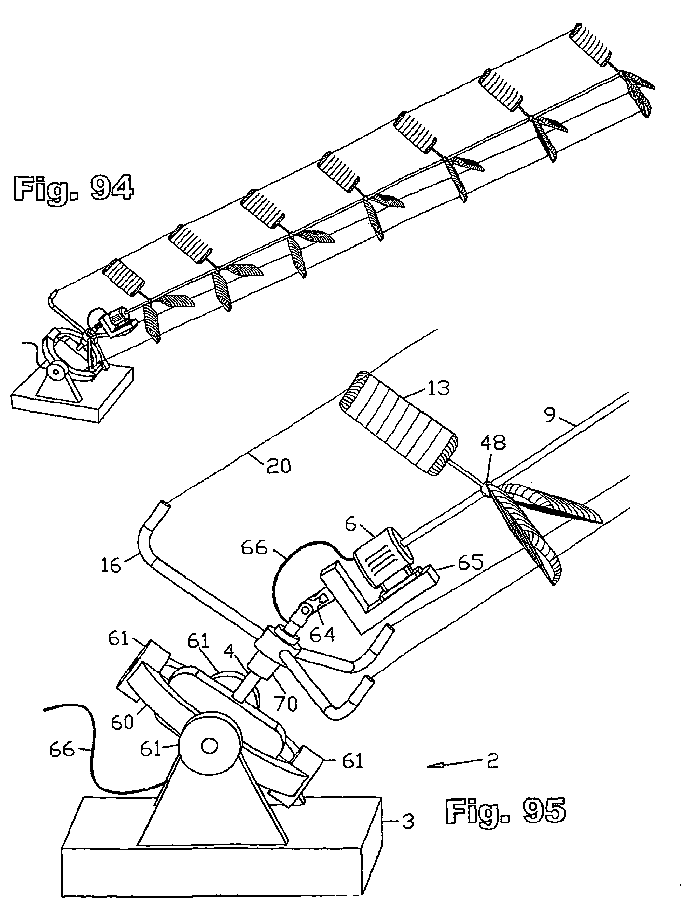

Fig. 94 shows a downwind side perspective view from above, of the seventy-first embodiment, having rotors mounted on tilting hubs, steerable by elongate lashing, an armature, and a directionally compliant base with means for directional bias, further having the load coaxially mounted directly to the upper section of the tower/driveshaft.
Fig. 95 is a closeup view of the base of the seventy-first embodiment.

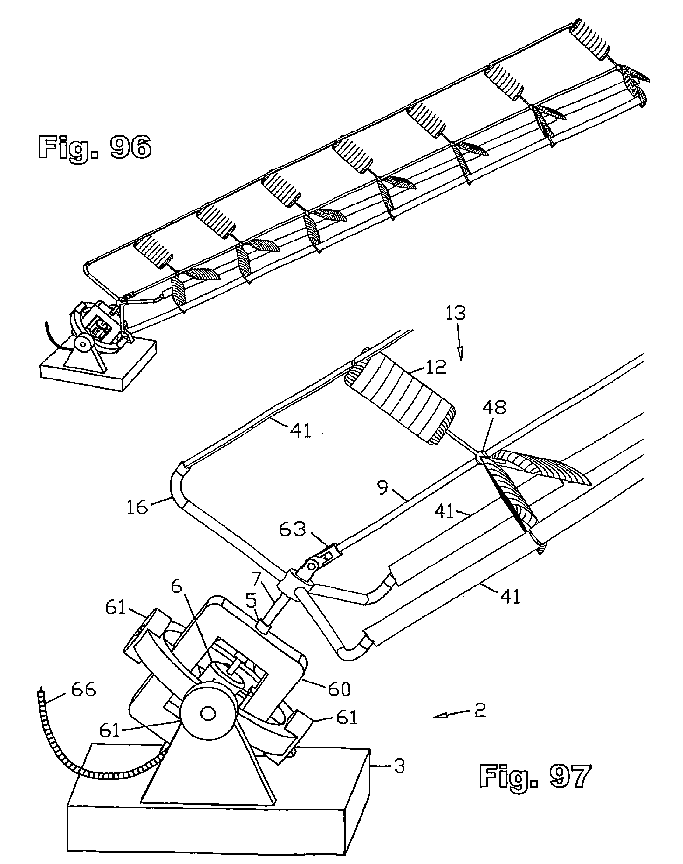

Fig. 96 shows a downwind side perspective view from above, of the seventy-second embodiment, having rotors mounted on tilting hubs, steerable by elongate vertical axis blades, an armature, and a directionally compliant base with means for directional bias.
Fig. 97 is a closeup view of the base of the seventy-second embodiment.

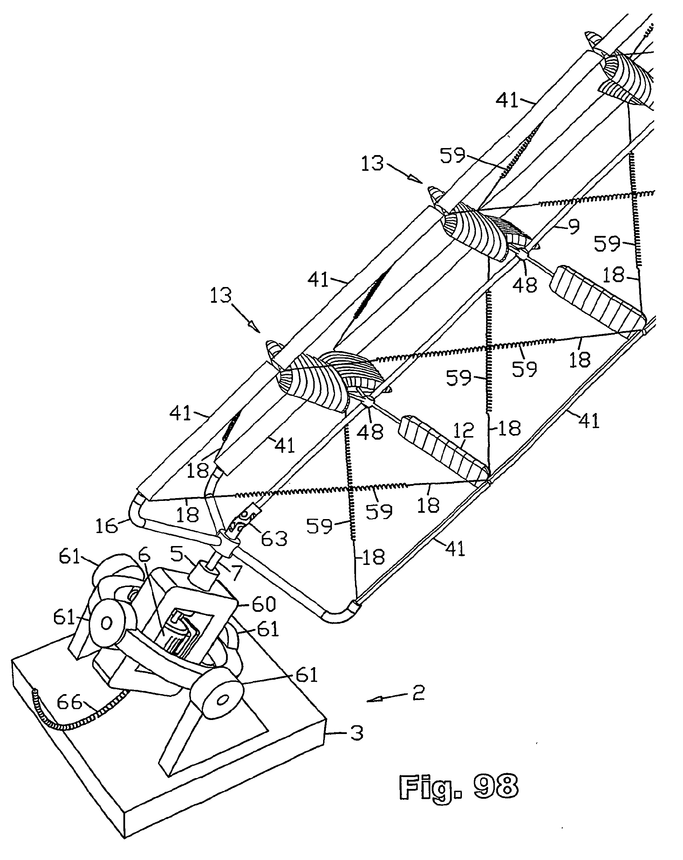

Fig. 98 is an aerial side perspective view of the lower end of the windmill installation of the seventy-third embodiment, having rotors mounted on tilting hubs, steerable by elongate vertical axis blades, an armature, a directionally compliant base with means for directional bias, and torque transmission lashing provided with slack uptake means.

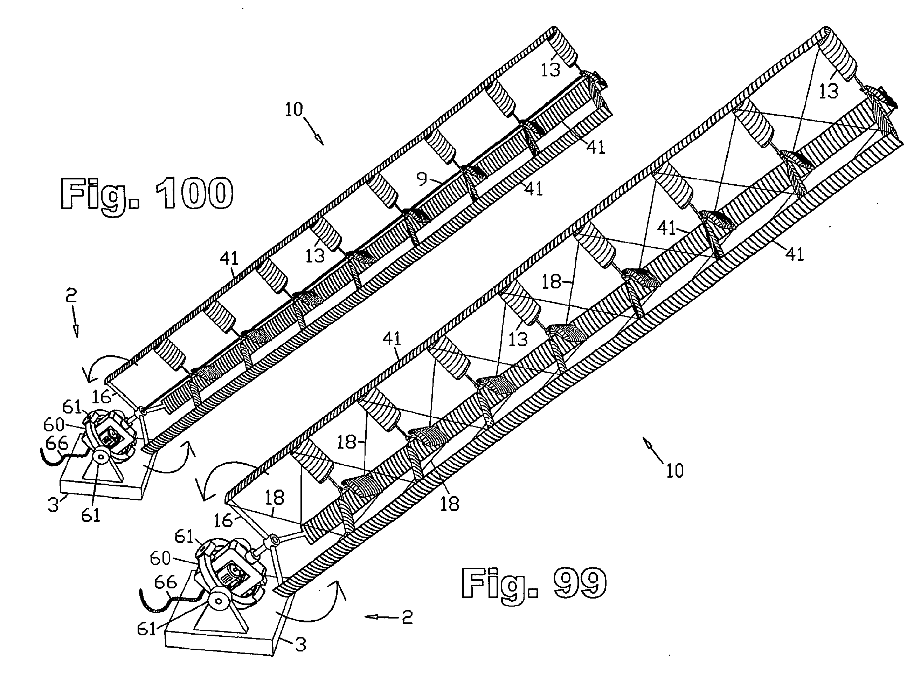

Fig. 99 is an aerial side perspective view of the seventy-fourth embodiment, having buoyant horizontal axis type rotors connected by buoyant, elongate vertical axis type blades, an armature, a directionally compliant base, and torque transmission lashing, with no central shaft.
Fig. 100 is an aerial side perspective view of the seventy-fifth embodiment, having buoyant horizontal axis type rotors connected by buoyant, elongate vertical axis type blades, an armature, a central shaft, and a directionally compliant base.

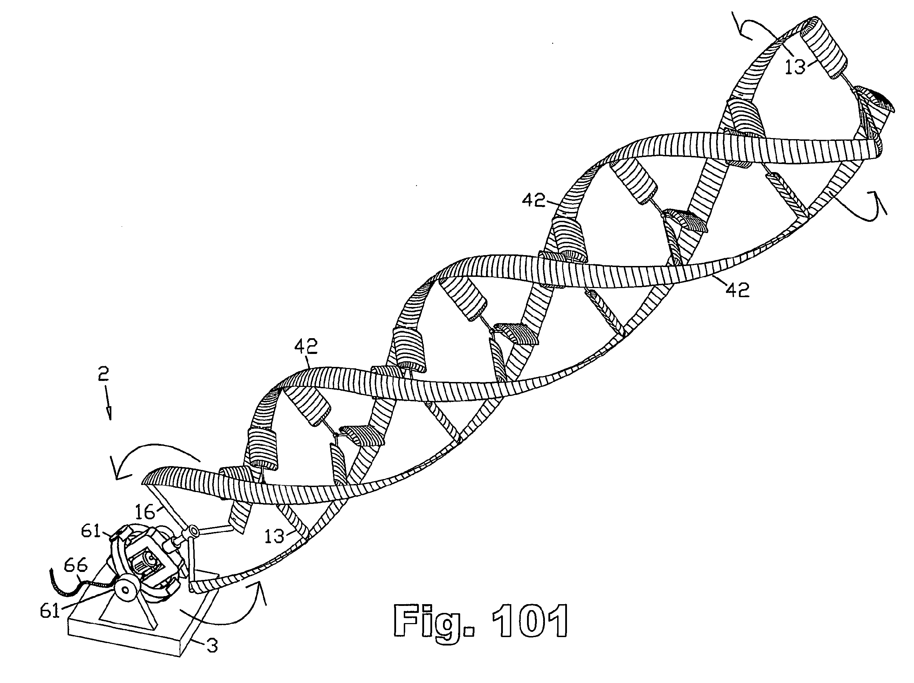

Fig. 101 is an aerial side perspective view of the seventy-sixth embodiment, having buoyant horizontal axis type rotors connected by buoyant, elongate vertical axis type blades, helically wrapped to transmit torque to an armature, and a directionally compliant base.

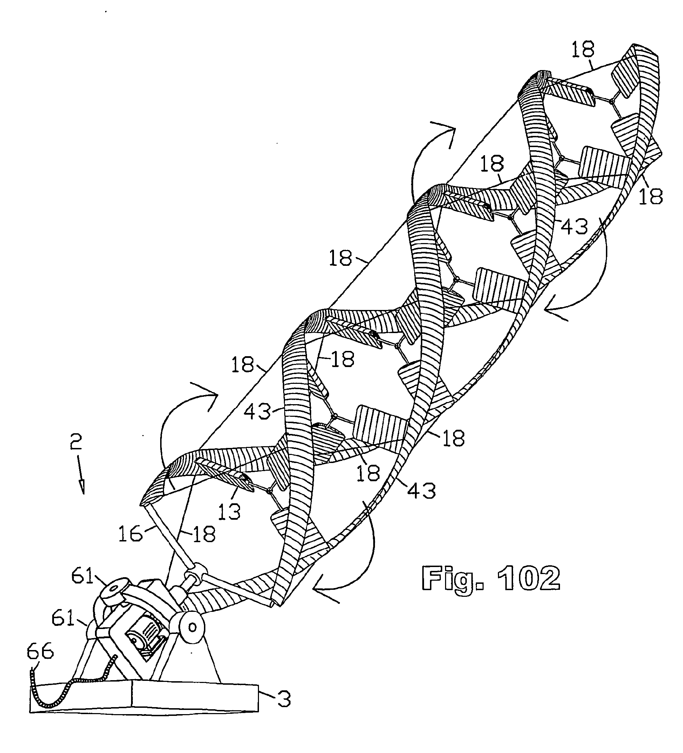

Fig. 102 shows an upwind side perspective view from below, of the seventy-seventh embodiment having buoyant horizontal axis type rotors connected by buoyant, elongate reverse helically wrapped vertical axis type blades, torque transmission lashing, and a directionally compliant base.

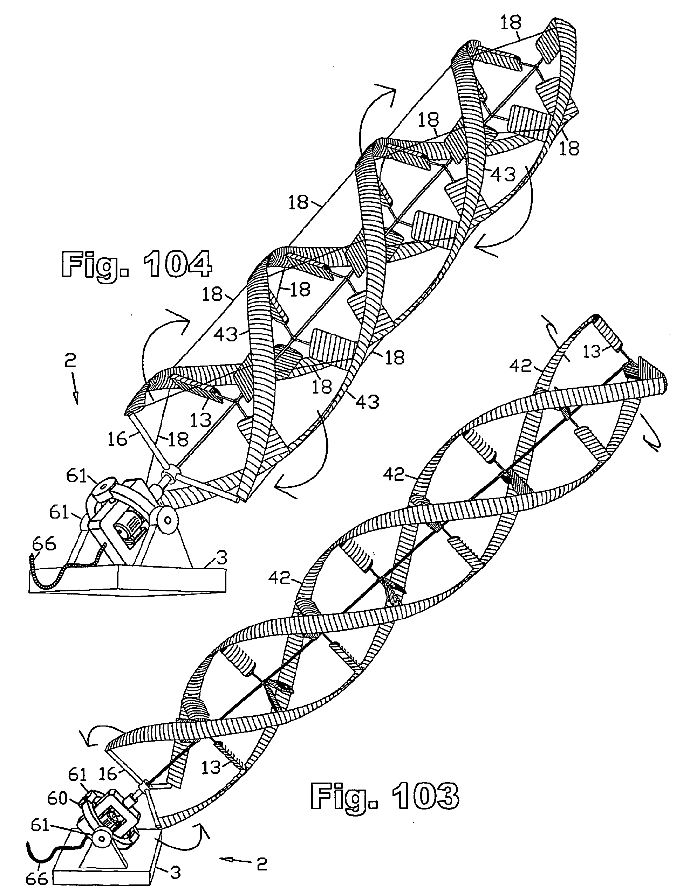

Fig. 103 is an aerial side perspective view of the seventy-eighth embodiment, having buoyant horizontal axis type rotors connected by buoyant, elongate vertical axis type blades, helically wrapped to transmit torque to an armature, a directionally compliant base, with the inclusion of the central shaft.
Fig. 104 shows an upwind side perspective view from below, of the seventy-ninth embodiment having buoyant horizontal axis type rotors connected by buoyant, elongate reverse helically wrapped vertical axis type blades, torque transmission lashing, and a directionally compliant base.

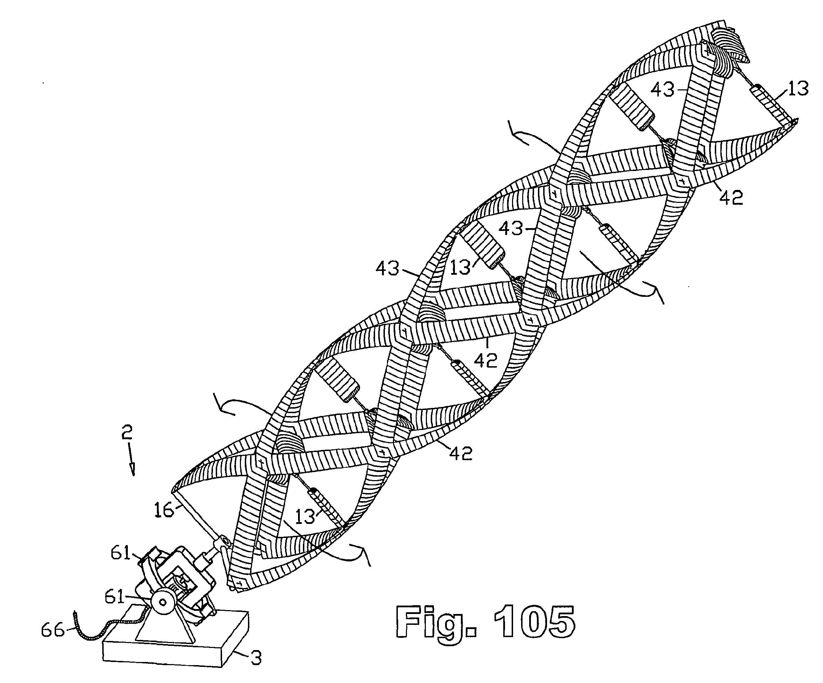

Fig. 105 is an aerial side perspective view of the eightieth embodiment, having buoyant horizontal axis type rotors connected by buoyant, elongate vertical axis type blades, helically wrapped in both directions, and a directionally compliant base.
   (The eighty-first embodiment is not specifically illustrated, but refers back to Fig. 105.)

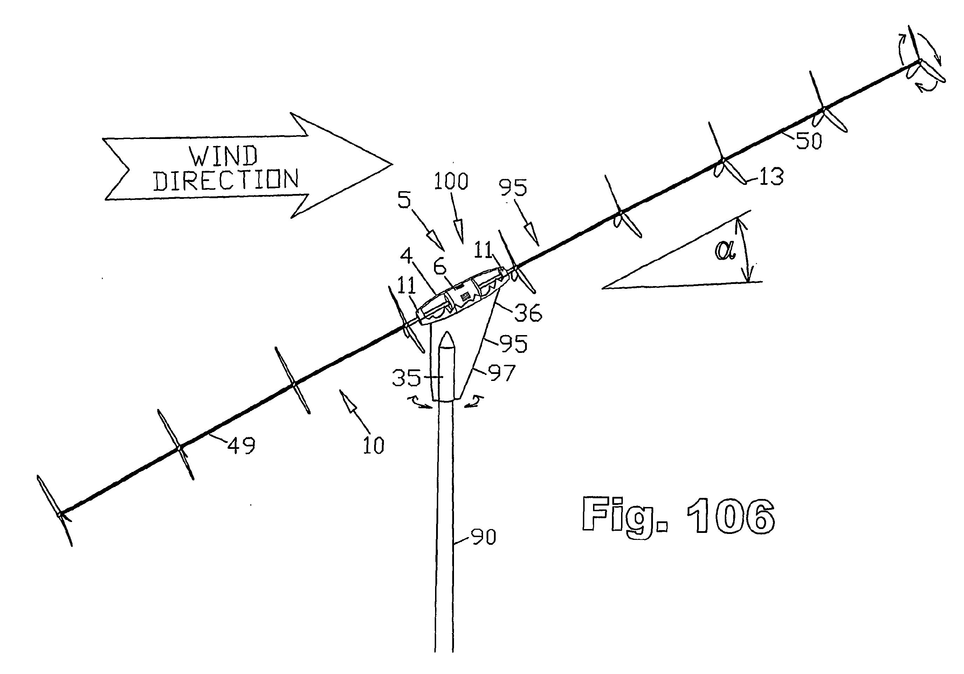

Fig. 106 shows an oblique side view of the eighty-second embodiment, having the generator near the center of an elongate driveshaft with attached horizontal axis rotors.

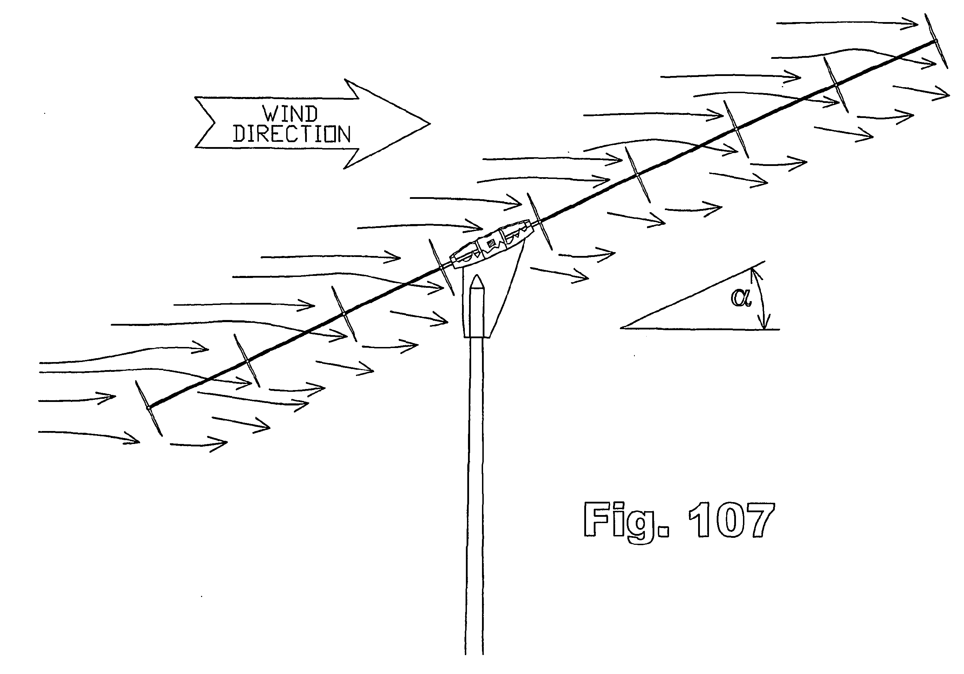

Fig. 107 shows a side view of the eighty-second embodiment, illustrating a flow of wind impinging upon the turbine.

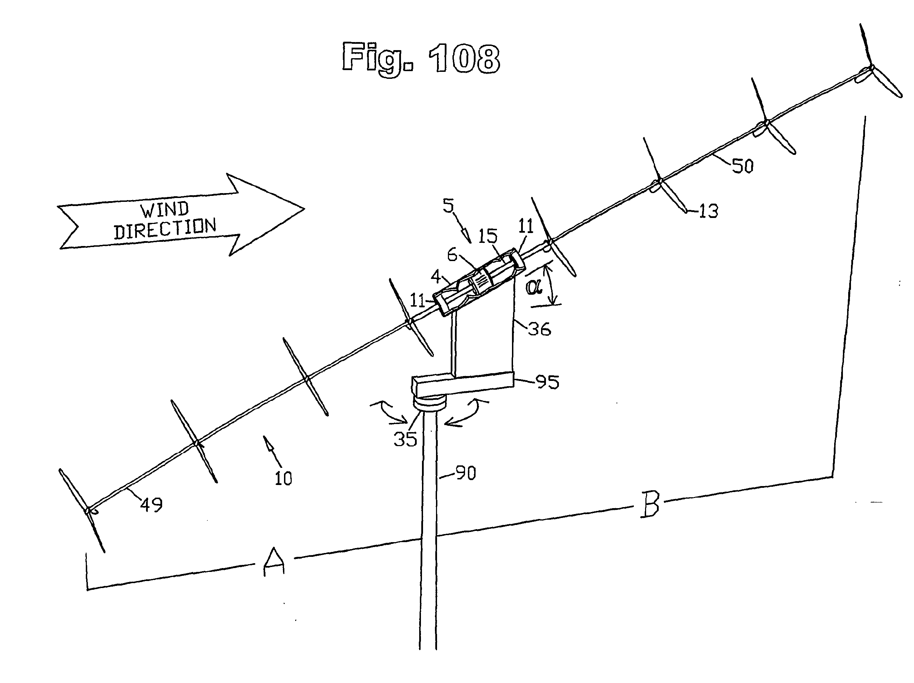

Fig. 108 shows the eighty-third embodiment from the side, with an equal number of rotors upwind and downwind of the cantilevered bearing means, with a downwind horizontal offset means serving to maintain aim into the wind.

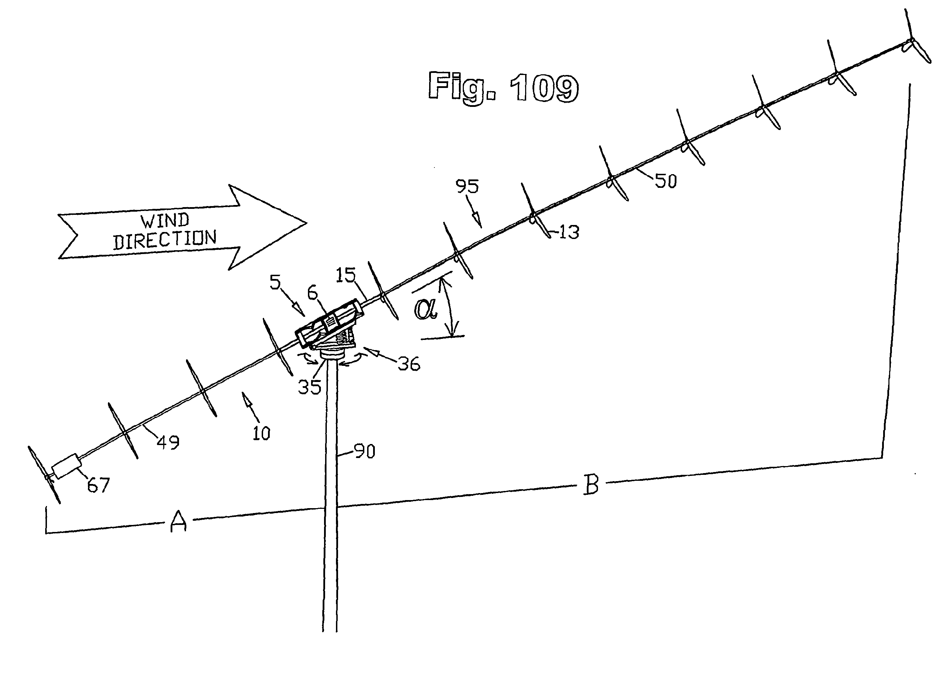

Fig. 109 shows the eighty-fourth embodiment, with a very long downwind section of the driveshaft, balanced by a counterweight on the upwind section. A spring and shock absorber to govern vertical furling behavior are shown.

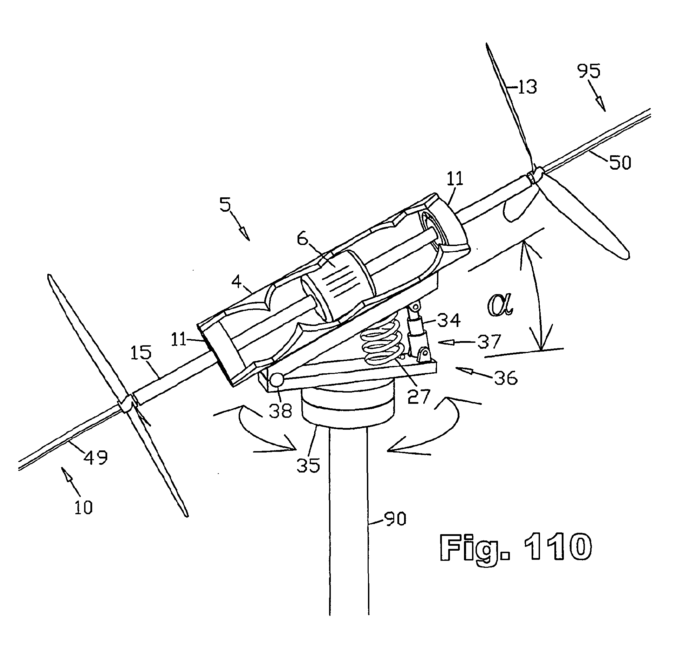

Fig. 110 is a closeup of the cantilevered bearing means and load of the eighty-fourth embodiment, showing a closer view of the furling mechanism.

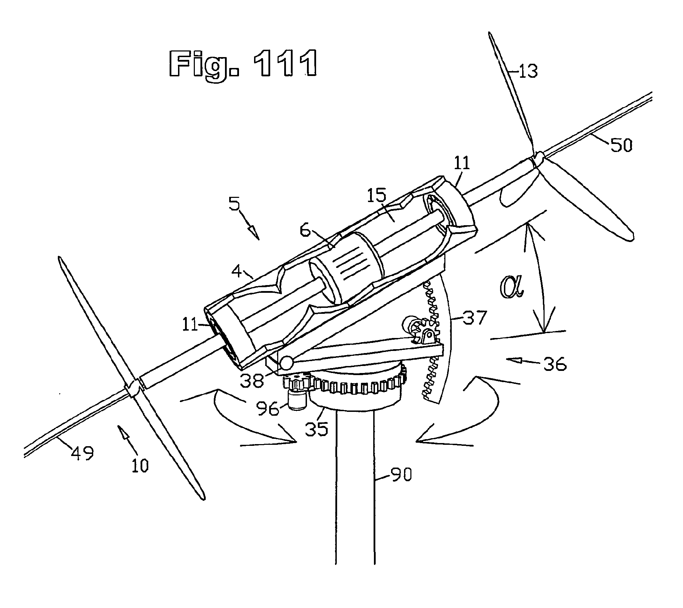

Fig. 111 is a side view of the eighty-fifth embodiment having active aiming mechanisms in both the vertical and horizontal planes.

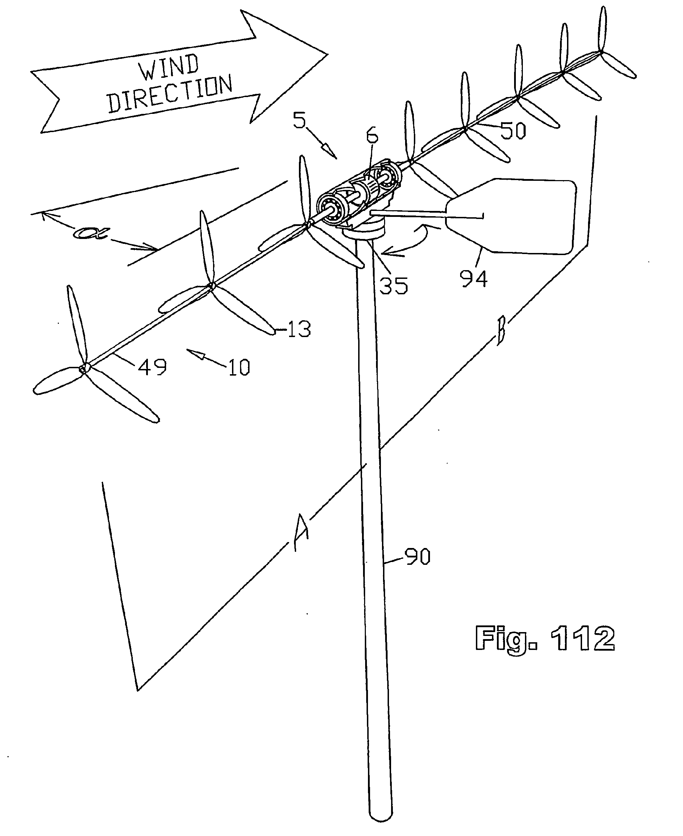

Fig. 112 is an oblique front view of a turbine of the eighty-sixth embodiment, having an offset angle in the horizontal plane, as implemented by a fluid-reactive fin extending to one side.

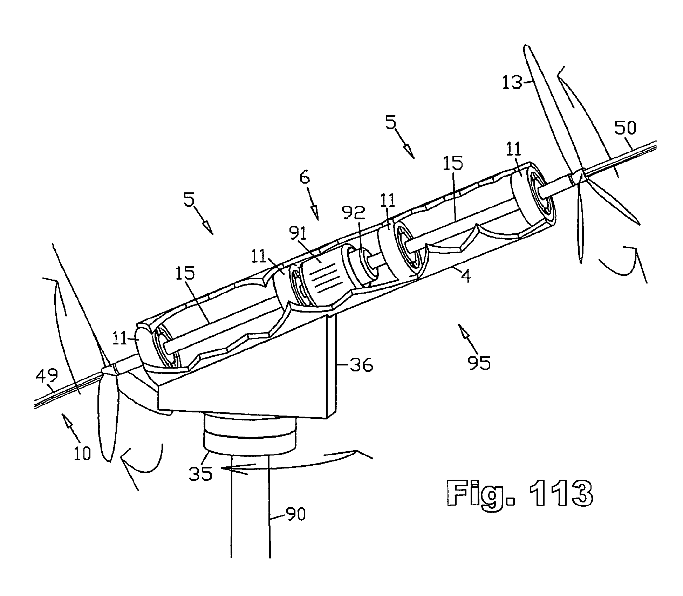

Fig. 113 is a side closeup view of the cantilevered bearing means of the eighty-seventh embodiment, wherein an upwind driveshaft and a downwind driveshaft counterrotate.

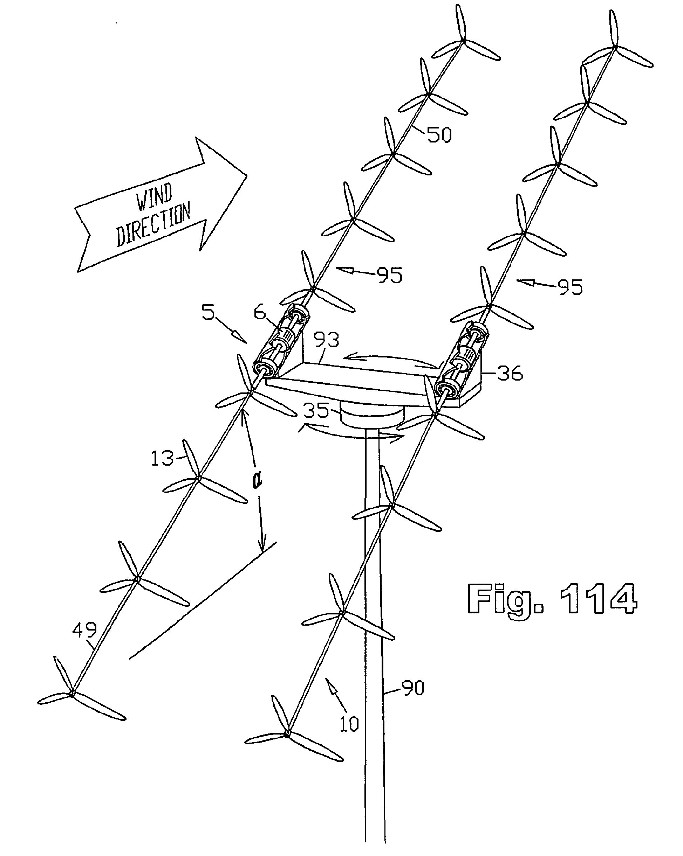

Fig. 114 shows an oblique front view of the eighty-eighth embodiment, having multiple turbines mounted on a single rotating frame.

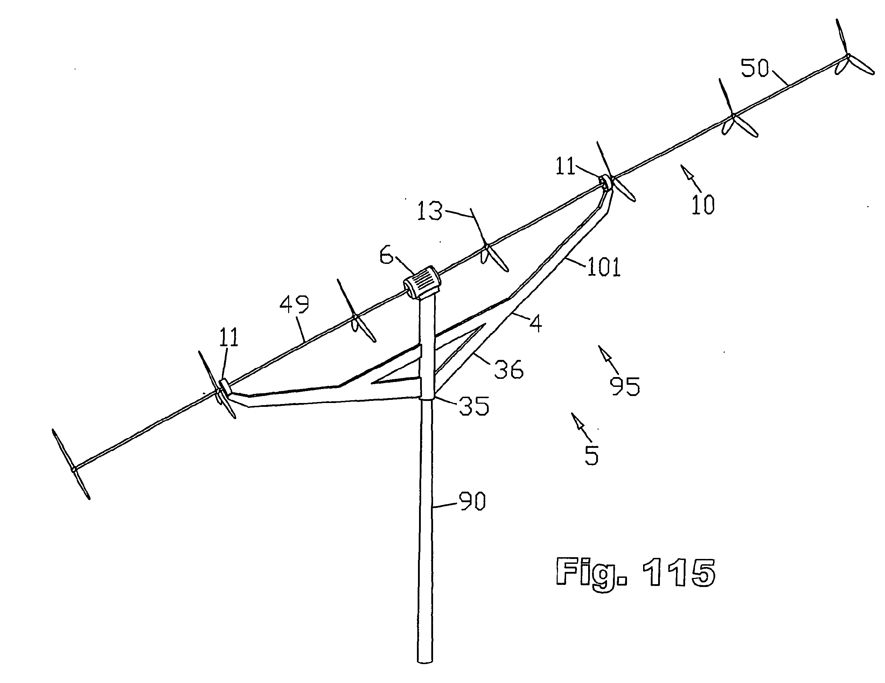

Fig. 115 is a side view of the eighty-ninth embodiment - a turbine having multiple horizontal axis rotors mounted along a driveshaft, supported by a longitudinally extended support frame that reaches out partway along the shaft to support it.

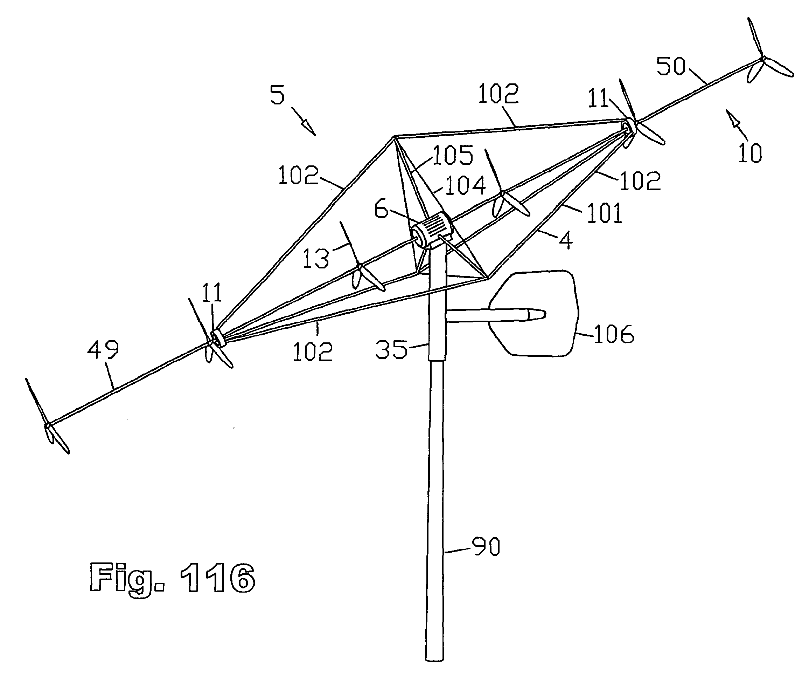

Fig. 116 is a side view of the ninetieth embodiment, wherein the longitudinally extended support frame is comprised predominantly of struts.

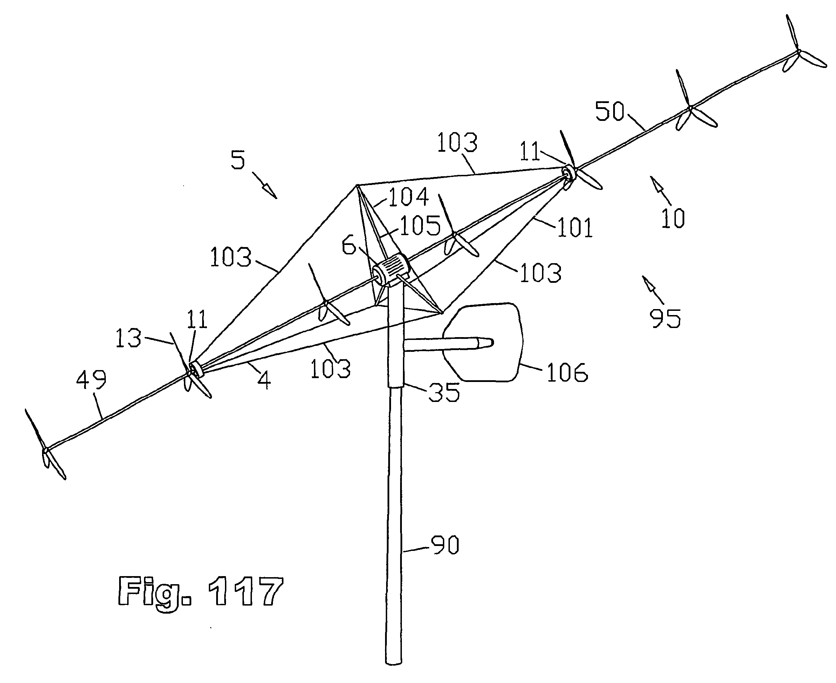

Fig. 117 is a side view of the ninety-first embodiment, wherein the longitudinally extended support frame is comprised predominantly of guy wires.

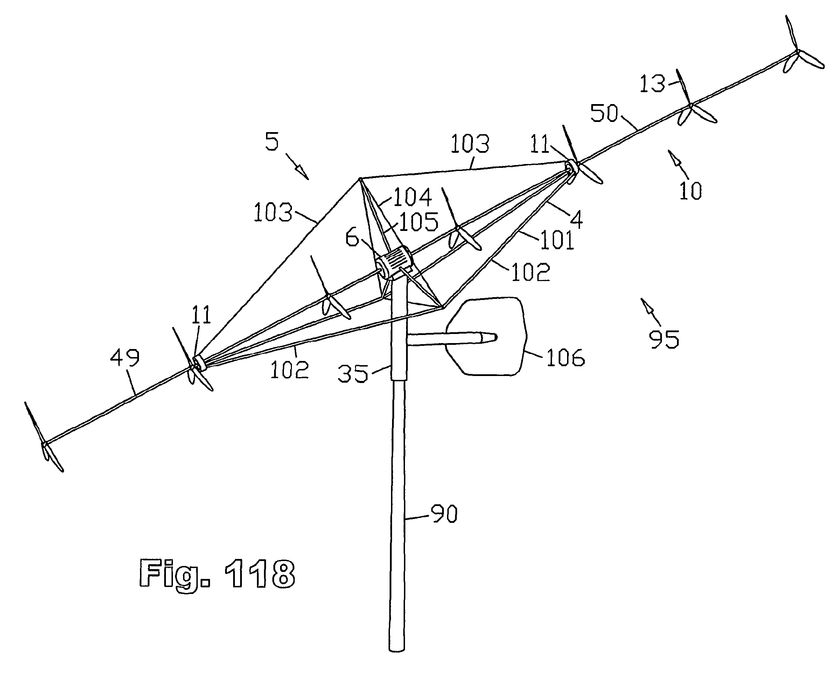

Fig. 118 is a side view of the ninety-second embodiment, wherein the longitudinally extended support frame is comprised of both struts and guy wires.

### Part Numbers in the Drawing Figures:

- 1.: surface
- 2.: base means
- 3.: mounting means
- 4.: bearing support means
- 5.: cantilevered bearing means
- 6.: load
- 7.: lower section of tower/driveshaft
- 8.: middle section of tower/driveshaft
- 9.: upper section of tower/driveshaft
- 10.: resilient tower/driveshaft or driveshaft as a whole
- 11.: bearing means
- 12.: horizontal axis type blade
- 13.: horizontal axis type rotor
- 14.: power takeoff means
- 15.: axle
- 16.: armature means
- 17.: ...
- 18.: torque transmission helical lashing means (helically wraps around tower/driveshaft, from bottom to top, in direction of rotation, transmitting torque in tension.)
- 19.: reverse helical lashing means (helically wraps around shaft top to bottom, in direction of rotation) (wraps in opposite direction of 18)
- 20.: continuous longitudinal lashing means (substantially parallel to shaft)
- 21.: latitudinal lashing means (substantially perpendicular to shaft)
- 22.: cantilevered tail means
- 23.: tail boom means
- 24.: tail lifting surface means (horizontal stabilizer)
- 25.: passive downwind tail orientation means (vertical stabilizer)
- 26.: cantilevered boom rotational bearing means
- 27.: resilient spring means
- 28.: cantilevered nose boom means
- 29.: linear tension transmission means (shown as a cable)
- 30.: tension adjustment means (shown as a winch)
- 31.: lifting body
- 32.: buoyant lifting body
- 33.: suspension bearing means
- 34.: damping means (shock absorber)
- 35.: horizontally rotatable azimuthal directional orientation means (such as a turntable or yaw bearing)
- 36.: elevation angle control means
- 37.: lifting means or lifting mechanism
- 38.: pivot means
- 39.: resilient, directionally flexible, non-rotating mounting interface (having a bias toward vertical) (shown as a simple spring)
- 40.: longitudinally oriented, vertical axis type blade (substantially linear blade that operates on the general principle of a Darrieus type blade)
- 41.: longitudinally oriented, vertical axis type blade that doubles as linear lashing or otherwise functions as linear structural means
- 42.: vertical axis type (Darrieus type) blade that helically wraps around the structure, proceeding upward from the base end, in the direction of rotation, whereby it can also serve as helical diagonal lashing means, transmitting torque downward in tension
- 43.: vertical axis type (Darrieus type) blade that wraps around the structure, proceeding from top to bottom, in a substantially helical manner, in the direction of rotation, that serves as helical diagonal structural means, transmitting torque downward in compression
- 44.: vertical axis (Darrieus type) rotor
- 45.: adjustable elevator surface
- 46.: elevator actuating means
- 47.: elevator control means
- 48.: tilting hub
- 49.: upwind section of driveshaft
- 50.: downwind section of driveshaft
- 51.: circumferentially oriented strut (perpendicular to tower/driveshaft)
- 52.: cylindrical repeating geometric pattern of vertical axis type rotor blades (generally cylindrical continuous geometrical lattice comprising struts having an airfoil cross-section, disposed so as to function as Darrieus-type vertical-axis rotor blades.
- 53.: open latticework structure comprising tower/driveshaft
- 54.: a diagonal strut comprising part of a latticework structure
- 55.: guy wire
- 56.: upper bearing hub means for guy wires
- 57.: horizontal guy wire between units
- 58.: ...
- 59.: slack uptake means (elastic or resilient spring means)
- 60.: non-rotating directionally compliant support means (gimbal mounting frame)
- 61.: means for directional bias (usually toward vertical) (passive (spring) or powered)
- 62.: steering means (rudder) (for embodiments featuring a boat)
- 63.: directionally flexible rotational coupling means (universal joint)
- 64.: directionally flexible non-rotating coupling means
- 65.: non-rotating mount means for load (attached to non-rotating part of load, resists torque applied to load by rotating tower/driveshaft, so the load functions properly, rather than simply rotating as a whole)
- 66.: continuous power conduit means (example shown is an electric cable)
- 67.: ballast counterweight means
- 68.: buoyant upper section of axle (hollow tube, marine installation)
- 69.: anchor means (shown as a simple chain)
- 70.: armature rotational bearing means
- 71.: power conversion unit
- 72.: combination generator/reversible motor
- 73.: first clutch means
- 74.: second clutch means
- 75.: underwater propeller driveshaft
- 76.: underwater propeller driveshaft bearing means
- 77.: underwater propeller
- 78.: power storage means (shown as a bank of electrical batteries)
- 79.: boat
- 80.: building
- 81.: brake means
- 82.: transmission means including reverse gear
- ...:
- 90.: tower means
- 91.: outer rotating half of load 6
- 92.: inner rotating half of load 6 (turns in opposite direction of 91)
- 93.: supporting armature means for mounting multiple turbines
- 94.: fluid reactive offset angle inducing means (side fin)
- 95.: downwind offset extension means
- 96.: active azimuthal directional orientation control means
- 97.: streamlined mounting pylon
- 98.: downward hanging distal section of tower/driveshaft
- 99.: distal end of tower/driveshaft
- 100.: streamlined nacelle
- 101.: longitudinally extended supporting frame
- 102.: oblique longitudinal strut
- 103.: oblique longitudinal guy wire
- 104.: circumferential guy wire
- 105.: radial strut
- 106.: passive aerodynamic azimuthal aiming means (tail fin)

### Preferred Embodiments:

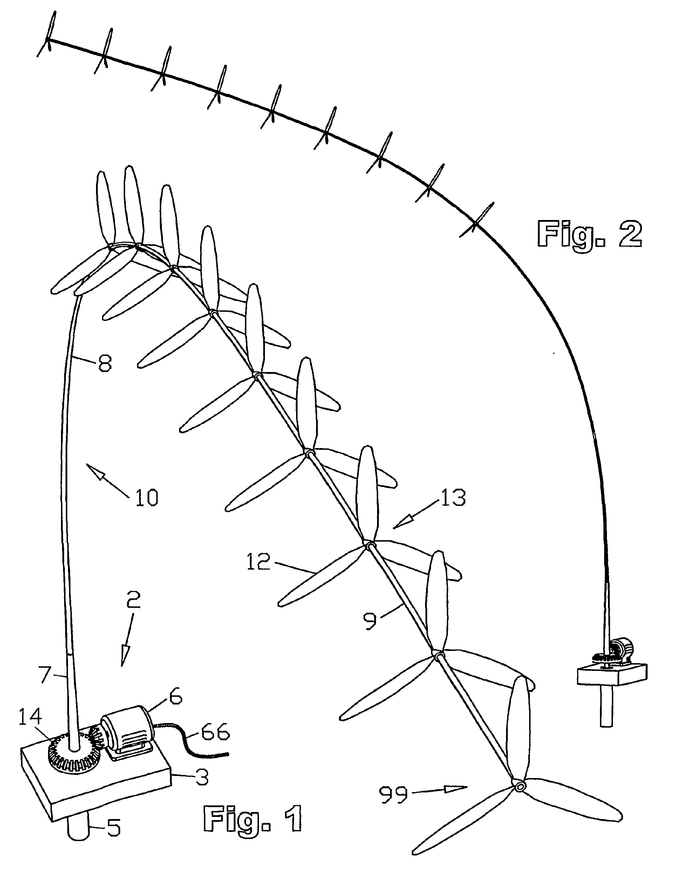

1. In the first embodiment, referring to **Figs. 1, 2****, and** **3**, a rotating tower/driveshaft **10** comprising a resilient elongate structure, such as a flexible pole, that serves as both a tower and a driveshaft, extends substantially upward from a base means **2** located substantially at surface level.
   The base means **2**, comprises a mounting means **3**, a cantilevered bearing means **5**, a power takeoff means **14**, and a load **6**. A closer cutaway view of such a base **2**, as in **Fig. 78**, shows that the cantilevered bearing means **5** may comprise, for example, a substantially vertical axle **15**, rotationally supported by two rotational bearing means **11**, said bearing means **11** being located substantially proximate either end of said axle 15. Radial loads on the bearings can be substantially reduced by making the shaft **15** as long as is practical, thereby separating these bearings as far apart as is practical, so as to enhance their effective, combined leverage. The bearings are securely retained by a bearing support means **4**, which in this case comprises an enclosing, rigid, vertical tube.
   Cantilevered bearing means 5, securely so attached to mounting means **3**, supports the tower/driveshaft 10 in a manner that allows the tower/driveshaft to freely rotate about its own longitudinal axis. The structure of the base means, including the mounting means **3** and the cantilevered bearing means **5**, is sufficiently robust to support the weight of the tower/driveshaft **10** and its attached rotors, in addition to the aerodynamic loads generated thereupon by the wind, as exerted through the leverage afforded by the length of the tower/driveshaft. The base means may be mounted at a surface in such a manner that the cantilevered bearing means **5** extends below the surface, to add stability while reducing surface clutter.
   The lower section **7** of the tower/driveshaft is coaxially coupled to, and rotatably supported by, the cantilevered bearing means **5**, meaning that the tower/driveshaft is securely held, in both position and direction of projection, at its base, yet is free to rotate about its own longitudinal axis. This lower section **7** therefore emerges from the base substantially perpendicular to the surface, serving to achieve distance from the surface, so as to reach the higher speed winds found away from the surface, like the tower of a conventional windmill. With increasing height, the tower/driveshaft begins to bend in a progressively more downwind direction, due to both its own weight, the weight of its attached rotors, and the force of the wind. The middle section **8** of the tower/driveshaft serves both to achieve additional distance from the surface and, by its bending deflection, to transition toward a more horizontal direction of projection. The tower/driveshaft may vary in thickness along its length, or be otherwise tailored for a specific bending response. In this embodiment the tower/driveshaft is thickest at the base, tapering to a more narrow profile with increasing distance from the base, as does, for example, a fishing pole, becoming more constant in thickness toward its distal end **99**.
   A multiplicity of substantially horizontal axis type rotors **13** are coaxially attached at intervals to the upper section **9** of the tower/driveshaft. This upper section **9** begins at a point where the shaft becomes sufficiently parallel to the wind for these rotors to effectively contribute toward its rotation; As the tower/driveshaft is naturally bent over in a downwind direction, the rotors become oriented substantially perpendicular to the direction of wind flow. The wind then causes the rotors to spin. With increasingly rapid rotation, the disk swept by each rotor becomes more opaque to the wind, adding to its effective aerodynamic drag, and depending on its angle, providing lift, further influencing the bending behavior of the tower/driveshaft.
   It is a classic blunder in wind turbine design to closely place one rotor directly in front of another, since the wind shadow of the upwind rotor renders the downwind rotor less effective, and the high pressure region in front of the downwind rotor even slightly reduces the amount of wind flowing through the upwind rotor, by causing back pressure, impairing its effectiveness as well. The present invention is to be distinguished from those which simply cluster multiple horizontal axis rotors on a single short horizontal driveshaft, stacked too closely for new air to enter the stream between rotors, in disregard of wind shadow effects. In the present invention, the rotors are placed far enough apart that undisturbed air from the surrounding airstream has some chance to dilute the wind shadow from one rotor before that air makes it to the next rotor. Also, most of the upper section **9** of the tower/driveshaft is not exactly horizontal, but rather at some slight angle to horizontal, so that each rotor is not exactly downwind from the preceding rotor, but offset either above or below, or even to the side, depending on how the shaft bends. The tilt of any rotor also fortunately acts to deflect its wind shadow away from the succeeding rotor. In addition, the entire upper section **9** of the serpentine tower/driveshaft may wave, swing, or otherwise actively bend, further exposing the affected rotors to a wider section of undisturbed airstream. Such a waving motion can also serve to raise the relative speed at which the air impinges upon the rotor blades. The gyroscopic effect of each rotor **13,** however, tends to stabilize the shaft in the region where that rotor is attached. The aggregate stabilizing effect is quite significant, substantially reducing wild swings and gyrations of the shaft in gusty conditions, making for smoother power generation, reduced material fatigue and wear, and increasing safety. The net sum of the power contributed by all of the rotors turns the entire tower/driveshaft **10.** The shaft rotates about its own axis, along its entire length.
   The resulting collective power may be drawn off and utilized by a load **6** at the base end of the shaft. In this embodiment, the load 6 comprises an electrical generator, coupled to the shaft through a power takeoff means 14 as illustrated by the set of gears shown. Since this load **6** is not, as an entire unit, rotatably mounted, as is the load of conventional horizontal axis windmills, the power may be conveniently conducted away from the load 6 by a continuous power conduit means **66,** which in this case comprises an electric cable. If the load were a pump or compressor, the continuous power conduit means would comprise a hose, pipe, or tube. Other suitable continuous power conduit means could include fiber optic cable, or a driveshaft, chain, belt, or other mechanical means. This new horizontal axis type wind turbine therefore has two *huge* advantages previously reserved for vertical axis windmills:
   1. that of having a stationary load at ground level, which is clearly a distinct improvement over prior art horizontal axis windmills. Since the load need not revolve to follow the direction of the wind, no slip rings are needed to remove electrical power from the installation. Since the load need not be supported by the tower, the tower can be dramatically less robust, therefore lighter and less expensive. Installation and periodic maintenance of the load is safer and less complicated at ground level.
   2. that of responding equally well to wind from any direction, with no need for an active yaw control mechanism, since this downwind machine is naturally self-aiming, inherently comprising passive downwind orientation behavior, and therefore inherently comprising passive downwind orientation means.

   Such a load **6** may also be *directly* driven by the rotating tower/driveshaft, as in **Figs 4, 5,** and **6****.** Whether the load is directly or indirectly driven, the advantages over prior art horizontal axis turbines therefore include, but are not limited to:
   - that such a simple conduit means as a cable or hose is sufficient to remove power from this self-orienting, downwind machine, with no slip rings nor active yaw control being necessary, and;
   - that the tower can be made less robust since it need support only itself and the attached rotors, and not the generator and yaw control apparatus;
   - that the tower can be made still less robust, since it is free to bend, and;
   - that a multiplicity of small rotors weigh less than a single, similar, larger rotor, while subtending the same area, therefore harvesting the same amount of wind with less total rotor mass, further allowing an even less robust tower;
   - that these smaller rotors turn faster than a larger one, requiring a less robust driveshaft for the same power delivered;
   - that this faster-spinning, less robust driveshaft requires less robust bearings to support it;
   - that this faster-spinning, less robust driveshaft requires a less robust gearbox, if any, to handle the lower torque of this faster-spinning, less robust shaft,
   - that this increased rotational rate reduces the amount of, or even eliminates the need for, ratio gearing needed to raise the rotation speed of the shaft up to a speed that is suitable for driving a generator; since it already turns faster due to the smaller rotor diameter. It is well known in windmill design that turbines having smaller diameter rotors can often effectively drive an alternator with no gearbox, due to the high rotation rate of a smaller rotor, for a given wind speed.

   With the gearbox eliminated, as in the next embodiment, a wind turbine of this general design, with all of its diverse functions and advantages, can comprise as few as one single, flexible, rotating, moving part. Such a turbine is ideal for atmospheric use, but a turbine of this general design may also be driven by another moving fluid, such as, for example, an ocean current.
2. In **Fig. 4**, an alternate base **2** is shown. The load **6** is directly driven, securely mounted to mounting means **3**, directly in line with the lower section **7** of the tower/driveshaft, *above* the cantilevered bearing means **5**. As in the base of the first embodiment, the cantilevered bearing means 5 extends below the surface, and the fluent power may be transmitted from the load, here a generator, via continuous power conduit means **66**, here comprising a simple electric cable. Having no gearbox, this wind turbine comprises but a single, flexible, rotating, moving part.
3. In **Fig. 5**, the entire base means **2** is ideal for being installed above a surface. As in the previous embodiments, the cantilevered bearing means **5** and the load **6** are both mounted to mounting means **3**. The load 6 is coaxial with, and directly *below,* the cantilevered bearing means 5, and is directly driven by axle 15.
4. In **Fig. 6**, the cantilevered bearing means 5 comprises two rotational bearing means **11** disposed at opposite ends of a shaft 15. The load **6** is located *between* the bearings, *above one and below the other,* directly driven by the shaft. All components are secured by mounting means **3** in an above-surface, vertically stacked, coaxial configuration. Increasing the distance between the bearings 11 reduces the radial loading upon them.
5. **Figs. 7**, **8** and **10** show a version of the present invention having a base **2** designed for subsurface installation, having two-bladed rotors, and a directly driven load 6, also located below the surface, within the rigid cylindrical housing provided by bearing support means **4**. Referring to **Fig. 8**, cantilevered bearing means **5** comprises two rotational bearing means **11**, separated by an axle **15**, which is rotatably retained by the bearings. Load **6** is directly driven by axle **15**, being coaxially coupled thereto, and is located *below* cantilevered bearing means **5**. The power may be conveniently drawn off by means of continuous power conduit means **66**, which in this case comprises an electric cable, since the load comprises an electric generator. Referring to **Fig. 10**, Each horizontal-axis-type rotor 13 has two blades, and is offset by **90** degrees from the previous rotor. Other numbers of blades per rotor, or amounts of angular offset, are also to be considered within the scope of the present invention.
6. **Fig. 9** shows an alternative subsurface base means similar to that of the fifth embodiment, in **Fig. 8**, except that the load **6** is disposed *between* the two rotational bearing means **11**, as opposed to below them, taking up less overall space while maintaining the distance between the bearings **11**. This particular base configuration was chosen for the sake of example only, to illustrate the wide variety of types of bases possible, within the overall scope of the invention, and need not necessarily be specifically associated with any particular rotor configuration.
7. **Fig. 11** presents an alternative rotor blade configuration: three-bladed horizontal axis type rotors **13**, sequentially offset by 60 degrees. (Due to symmetry, it would be equally accurate to say that they simply alternate in direction, and are therefore offset by 180 degrees.) The key concept here is that the rotors need not be perfectly aligned from one to the next. The rotors may be originally mounted in this offset way, or such a configuration may simply result from a dynamic twisting of the upper section **9** of the tower/driveshaft **10** caused by the torque exerted upon the rotors by the wind, since the tower/driveshaft **10** will naturally have some torsional flexibility.
8. In **Fig. 12**, single-bladed rotors alternately project in opposite directions from the upper section **9** of the tower/driveshaft **10**. (They are sequentially offset by 180 degrees.) Though any small region of the tower/driveshaft may be unbalanced, the shaft as a whole maintains overall balance. Each blade 12 is pulled outward by centrifugal force, bending the shaft outward slightly at that point. This resilient deformation of the tower/driveshaft allows each rotor to sweep a slightly enlarged arc, harvesting more total wind energy. Single bladed rotors weigh less, and may produce less wind shadow effects on downwind rotors, than regular, balanced, multi-bladed rotors. It is not absolutely necessary that each rotor be designed in an attempt to extract the full capacity factor of energy allowed by the betz limit; Considering that the rotors encounter the wind in somewhat of a serial manner, available power missed by one rotor may well be salvaged by a downwind rotor.
9. In **Fig. 13**, single-bladed rotors project from the shaft in a helical pattern, at increments of **60** degrees. Such a configuration may encourage the entire tower/driveshaft to spin in a helical mode. The effect at any one point, as in the eighth embodiment, is that the rotor sweeps an enlarged arc, encountering more wind. One or more regions of stability, or harmonic nodes, having a more balanced rotor configuration, such as that of **Fig. 10**, may be combined on the same tower/driveshaft with a configuration such as this. One can quickly see that a wide variety of rotor configurations, combinations, and permutations thereof, are possible, within the scope of the present invention.
10. **Figs. 14 and 15** show a floating marine installation. Here the mounting means **3** is buoyant, being less dense than water, and floats at the surface **1** of a body of water. The bearing support means **4**, here comprising a rigid hollow tube, extends below the water surface, being held down by the weight of ballast counterweight **67**, attached to the lower end of the tube. The base means **2** is moored by anchor means **69**, graphically represented as simple chains, extending from the mounting means 3 downward toward an unseen point of attachment below. Load **6**, here shown as an electrical generator, is located at the top of the tube that serves as bearing support means **4**, allowing easy access for service, and minimizing the likelihood of damage by water. The power may be conveniently drawn off by means of continuous power conduit means **66**, which here is an electric cable.
   The cantilevered bearing means **5** comprises an axle **15** and two bearings **11**, securely retained within the hollow tube comprising bearing support means **4**, below the load **6**. At the bottom, the ballast counterweight **67** serves to counteract the combined forces of gravity and the wind upon the tower/driveshaft and its attached rotors, as exerted through the leverage of its length. This counterweight, by being pulled downward, acts to maintain a substantially upward aim to the direction in which the lower section **7** of the tower/driveshaft **10**, projects from the surface **1**. As in the previous embodiments, these same forces must be bourne by the bearings **11** of cantilevered bearing means **5**. Increasing the distance between the bearings helps to reduce the magnitude of the radial loading thereupon. Since this floating base with attached ballast counterweight is not hard mounted, and therefore has some freedom of directional aim, the entire assembly will tend to be naturally tilted in a downwind direction, with the degree of tilt commensurate with wind speed. Some advantages of marine installations are that higher speed winds are generally found over bodies of water, since there are no obstacles to slow it, that no excavation of earth is needed for the base to extend below the surface, and that valuable land is not used.
11. **Fig. 16** shows a similar floating base similar to the previous, tenth embodiment, with two differences:
   a. The load **6** is located below the bearings, instead of above.
   b. The counterweight is replaced by an additional anchor means **69**, attached to a convenient point near the lowest part of the entire assembly, which in this configuration happens to be the lower end of the substantially tubular bearing support means **4**. This third point of attachment helps this base to resist tilting with the wind.

   These two particular differences from the tenth embodiment are only exemplary in nature, illustrative of such differences that can comprise a wide range of possible marine installations of the present invention.
12. **Fig. 17**: In this surprisingly simple version of the present invention, the axle **15**, is comparatively *enlarged* in the radial dimension, and comprises a single rotating cylinder having a *buoyant* upper section **68**, which is less dense than water, and therefore floats, and a *heavy* lower section comprising a ballast counterweight **67**, which is significantly more dense than water, and therefore sinks. Virtually all of the functions of the bearings **11**, the bearing support means 4, and the mounting means **3**, are here served by the buoyant axle with its counterweighted end, and the water in which the axle floats. These functions include, but are not limited to:
   a. acting as the cantilevered bearing means **5**, by rotatably supporting the tower/driveshaft and its attached rotors, in a substantially upwardly projecting direction, against the forces of gravity and the wind, as exerted through the leverage afforded by the length of the tower/driveshaft.
   b. maintaining a substantially upright bias to the angular orientation of the tower/driveshaft by the natural ambient hydraulic pressure of the water, which exerts an upward force by seeking to displace the buoyant upper end of the axle, while the lower end.is pulled downward by its own weight, including the rotating ballast counterweight **67** under the influence of gravity. For this reason the water itself is labeled **4**, since it serves as the bearing support means.
   c. allowing full rotational freedom, as provided by the liquid interface between the cylindrical surface of the axle and the water in which it floats. For this reason, this cylindrical surface, comprising a single elongate liquid bearing, is labeled as bearing **11** in **Fig. 17**.
      The lower end of the axle is coaxially coupled to the load **6**, in this case an electrical generator. The load **6** is essentially stationary, being attached to non-rotating mount means **65**, as moored by anchor means **69**, so that power may be conveniently drawn off through a continuous power conduit means **66**, in this case a simple electrical cable.

   The extremely important point to grasp here is that the highly stressed bearings **11** of the cantilevered bearing means **5** in previous embodiments, are entirely replaced by the floating cylindrical axle with its counterweighted lower end, and the water in which they float. Both the axial and radial loads previously borne by the bearings **11** in previous embodiments are here borne by the water itself. This means that this entire embodiment comprises just a single, floating, moving part, plus an attached load (generator) which depends therefrom. Without the attached load, since no solid part moves against any other solid part, this unitary rotating wind turbine structure could actually be said to have ***zero*** moving parts, at least insofar as parts in mutual contact moving with respect to one another, although without a load, it would also seemingly have little or no purpose, and with no way to moor it, it would eventually be blown away. It is nonetheless possible that a use could be found for such a non-anchored apparatus, for instance as a migrating buoy, or that some type of load that simply rotates along with the structure, perhaps interacting with the water, the geomagnetic field, or otherwise utilizing such rotation, could be found. The point is that this new class of flexible windmill, having only a single moving part, is in this embodiment, made yet even simpler, with the need for the manufactured main bearings **11** of previous embodiments completely eliminated.
   The bearings of the load itself may be greatly less robust than the bearings **11** of the cantilevered bearing means **5**, since they need only bear the stresses due to the power transmitted by the rotation of the shaft, and of mooring the assembly against being blown away, but need not generally provide the major portion of the support of the structure, since that function is provided by the floating, buoyant axle with its counterweighted lower end. Such a floating, counterweighted axle configuration is easily fabricated by, for example, filling the bottom end of a hollow tube with gravel, sand, or concrete.
   Of course the types of marine installations of the present invention represent just a sampling of those possible. Other possibilities include being directly moored to the seafloor, or, as will be disclosed in the next embodiment, not being moored to anything at all!
13. **Fig. 18** shows a propeller-driven boat **79,** whose underwater propeller **77** is directly powered by the rotation of a windmill of the present invention. The cantilevered bearing means **5** is mounted directly to the boat, and supports the lower section **7** of the tower/driveshaft with rotational freedom, in a substantially vertical orientation. The propeller is driven by the propeller driveshaft **75,** which is held by a propeller driveshaft bearing means **76.** The propeller driveshaft **75** is in this case flexible, and forms a rotational coupling between the propeller and the tower/driveshaft, depending coaxially from the lower end of the cantilevered bearing means **5,** then curving back to make the directional transition to the substantially horizontal axis underwater propeller **77**. In this embodiment, the entire driveline, including the propeller **77**, and indeed even the hull of the boat itself, can be considered, in a sense, to comprise the load 6. A steering means **62** is graphically represented as a simple rudder. It is interesting to note that, unlike conventional sailing craft, this boat has no trouble sailing directly into the wind! In fact, the power extracted from the wind is greater when traveling upwind than downwind, due to increased relative wind speed and consequently increased apparent volumetric flow of air. Of course this is a simplified illustration, for sake of example only, with no provision for stopping, or a reverse gear illustrated, though such are well within the known art of marine drivetrains.
   Also, note should be taken that, while not illustrated, it is possible to mount *several* such windmills on the same watercraft, within the scope of the present invention, even projecting in different directions to avoid mutual entanglement.
14. **Fig. 19** illustrates an example of a more usable marine drivetrain, for being mounted in a boat, having a power conversion unit (PCU) **71** installed between the rotating tower/driveshaft, as supported by the cantilevered bearing means, above, and the propeller below. The PCU **71** is driven by the axle **15,** which is itself rotationally coupled to the lower section **7** of the tower/driveshaft, being essentially an extension thereof, rotationally held by cantilevered bearing means **5.** The PCU comprises a brake means **81,** and a typical marine transmission means including reverse gear **82,** which transmission **82** also serves to transfer rotation from the substantially vertical axle **15** to the substantially horizontal prop shaft **75.** The brake **81** may be used to slow or stop the rotation of the tower/driveshaft, and therefore may be used to control power during maneuvering, in a similar manner to that of a throttle being used to attenuate the power of an engine. Shifting to and from reverse gear is also best accomplished under little or no power, therefore application of the brake allows shifting to occur when necessary. The brake **81** also allows the craft to be "parked", with the tower/driveshaft in a nonrotating state, and can therefore serve to protect the tower/driveshaft from damage in excessively high winds.
15. **Fig. 20** illustrates an example of an even more versatile, and sophisticated marine drivetrain, a wind/electric hybrid drive. In this embodiment, the Power Conversion Unit **71** comprises a first clutch means **73,** a controllable, combination generator/reversible motor means **72,** and a second clutch means **74.** A continuous power conduit means **66** connects the generator/motor **72** to the power storage means **78,** which in this case comprises a bank of electrical batteries. (If the generator/motor produced, for example, compressed air instead of electricity, the power storage means would comprise a high pressure air storage tank.)
   This drivetrain is capable of several modes of operation:
   a. The first mode is simple sailing, as in the previous two embodiments, with the rotation of the tower/driveshaft 10 directly powering the propeller **77.** Both clutches are engaged, and the motor/generator is switched to a neutral state so as to offer no electromagnetic resistance to rotation. Such sailing can proceed in any direction, no matter what the direction of the wind.
   b. The second mode is sailing with both clutches **73, 74** engaged, with the motor/generator switched to a generating mode that extracts only a portion of the rotational power as electricity, allowing the rest to drive the propeller **77.** In such a mode, the PCU (Power Conversion Unit) **71** functions as an Auxiliary Power Unit (APU), and maintains the batteries **78** in a charged state, and/or contributes power to operate lighting, navigational instruments, computers, or electrical appliances while under way.
   c. In a third mode, the first clutch **73** is engaged, while the second clutch **74** is disengaged. The generator/motor **72** is caused to rotate by the rotation of the lower section 7 of the tower/driveshaft, as transmitted by the axle **15** through the first clutch means **73.** The generator/motor **72** acts in its generator mode to charge the energy storage means **78,** for later use. Since the second clutch means **74** is disengaged, no power is transmitted to the propeller **77** below, so the boat can actually harvest wind energy while moored. The stored energy may be used to power lights and other appliances while moored or later while underway, and/or for powered cruising.
   d. Mode four: Sailing with power assist: The wind causes the tower/driveshaft to rotate, providing power to the drivetrain. Both clutches are engaged, and the generator/motor **72** acts as a motor, providing additional power to the drivetrain, while draining the batteries **78.** The propeller receives *both* the power of the instant wind, *and* power stored in the batteries from previous wind, allowing faster travel. This feature allows cruising to continue at full speed, even when winds die down.
   e. Powered cruising under electric drive only, with the upper clutch **73** disengaged, and the lower clutch **74** engaged. The underwater propeller **77** is powered by the motor/generator **72** acting as a motor, in the manner of a conventional electric boat, and the tower/driveshaft, with its attached rotors, does not contribute power.
   f. Powered operation in reverse, with the upper clutch **73** disengaged, the lower clutch **74** engaged, and the generator/motor operating as a motor in reverse mode, supplying power to rotate the propeller in a reverse direction, for backing up and maneuvering during docking.

   The batteries, being heavy, may also serve as useful ballast, if properly placed. For example many sailboats utilize a heavy keel, weighted with up to several tons of lead, to stabilize the craft and prevent capsizing. If this lead ballast is in the form of batteries, a dual purpose is served. If a boat is going to have a large amount of lead on board anyway, it might as well be utilized for its ability to store power, as well as for its weight.
   The preceding three embodiments are but examples of the myriad of marine drives made possible by utilizing wind turbines of the present invention.
16. **Figs. 21 and 22** show a directionally adjustable version of the present invention wherein the base means **2** comprises both azimuthal and elevational directional orientation means; Both the horizontal and vertical components of the direction in which the tower/driveshaft projects from the base means may be controlled. The horizontal, or azimuthal component, is in this case controlled by lateral rotation of the mounting means about horizontally rotatable azimuthal directional orientation means **35** (here shown as a simple turntable), upon which mounting means **3**, as well as the rest of the base, is itself supported. The vertical component, or elevation angle, is controlled by an elevation angle control means **36**, which in this case comprises a lifting mechanism **37**, that raises and lowers the upper end of the bearing support means **4,** the tubular enclosure that securely retains the bearings. This tubular bearing support means **4** pivots about a pivot means **38** at its lower end.
   The exact aiming mechanism shown is exemplary only, serving to illustrate the point that the aim may be actively controlled in general. Many simple alternative mechanisms known in the art may be adapted. Note in **Fig. 21** that the lower section 7 of the tower/driveshaft **10** is actually aimed *into* the wind at its base, but, proceeding upward, the middle section **8** of the tower/driveshaft begins to bend back with the wind, until, at sufficient distance from the base, the upper section **9** of the tower/driveshaft is eventually blown back into the opposite direction - downwind. Such aiming technique may be used, for example, in strong winds that might otherwise blow the tower/driveshaft and attached rotors too far over, resulting in ground contact. With the aim of the tower/driveshaft being pre-biased toward the wind, it reaches higher before being blown backward. In lighter winds, however, that don't bend the tower/driveshaft as severely, the base is allowed to freely rotate, so as to naturally aim itself in a downwind direction. Additional reasons for aiming the tower/driveshaft in a direction other than vertical include the avoidance of other objects, such as buildings or even other windmills, and bringing the system down for maintenance.
   This embodiment exemplifies the strong tendency of the general flexible design disclosed herein to aim itself in the proper downwind direction, no matter what the direction of initial projection. The important point is not the specific mechanism of aiming the windmill, but the fact that it may be desirable, within the scope of the present invention, for the tower/driveshaft to project from the base in some direction other than vertical.
   Also to be considered within the scope of this embodiment, with reference to **Fig. 22****,** are:
   1. A version which the direction in which the tower/driveshaft projects from the base is simply fixed, firmly locked in some direction other than vertical. Reasons for this could include directionally consistent prevailing winds, being mounted on a ship, building, bridge, or other vehicle or structure, or the avoidance of objects such as buildings, landforms, or other windmills.
   2. A version in which the elevation angle, at which the flexible tower/driveshaft projects from the base in the vertical plane is fixed at an angle other than exactly vertical, while free rotation of the base is allowed in the horizontal (azimuthal) plane. In this case the tower/driveshaft may emerge from the base means in a direction sufficiently parallel to the wind that horizontal-axis-type rotors may effectively be mounted quite close to the base end (as in the next embodiment, shown in **Fig 23**.) The freely rotating turntable base will naturally allow the entire tower/driveshaft to passively aim itself in a downwind direction. Projection at a sufficiently low angle even allows the middle section **8** of the tower/driveshaft, to effectively be eliminated. (This middle section normally serves the purpose of making the directional transition between the substantially vertical lower section of the shaft and the upper section with its attached rotors, by bending downwind.)
   3. A version in which the elevation angle at which the tower/driveshaft projects from the base is fixed, and the azimuthal orientation (rotational in the horizontal plane) is controlled or adjustable, rather than freely rotating.
   4. A version having a fixed directional aim in the horizontal (azimuthal) plane, while the elevation angle (direction in the vertical plane) at which the tower/driveshaft projects from the base is controlled or adjustable. Reasons for such a configuration could include installation in a location with directionally consistent winds that vary in strength, and having the ability to bring the system down for maintenance.
   5. A version that can be operated in reverse, with a motor substituted for the load, so as to actually provide the motive interface to propel, and/or provide lift for, a vehicle.
17. **Figs 23 and 24** show a version wherein the base means **2** comprises a resilient, directionally flexible, *non-rotating* mounting interface **39** with a bias toward vertical (spring). This mounting interface, represented graphically by a simple coil spring, has directional flexibility as in the previous embodiment, but is *non-rotating,* so that power may be conveniently drawn off by a Continuous Power Conduit Means **66,** such as a simple electric cable. The cantilevered bearing means **5** is attached to the mounting means 3 by a resilient, directionally flexible, non-rotating mounting interface **39,** graphically represented by a coil spring. Such a flexible interface allows the cantilevered bearing means **5** to be naturally aimed downwind by the tower/driveshaft. Both gravity and the force of the wind, as applied through the leverage of the tower/driveshaft **10** and the cantilevered bearing means **5**, combine to force the resilient mounting interface 39 to yield to a position where the tower/driveshaft projects from the cantilevered bearing means in a substantially downwind direction. Depending on the magnitude of the deflection, the tower/driveshaft may emerge from the cantilevered bearing means in a direction sufficiently parallel to the wind for the coaxially attached horizontal axis type rotors **13** to function effectively even when placed fairly close to the basal end of the tower/driveshaft. In such a case, the resilient interface may be considered to have at least partially replaced the middle section **8** of the tower/driveshaft of the first embodiment, whose purpose is to deflect in a downwind direction.
18. **Figs. 25** **and** **27** show a rotating tower/driveshaft **10** as previously disclosed, extending downwind from a flexible mounting interface **39,** shown for the sake of example. The key feature to note in this embodiment is the helical lashing means **18,** three of which wind their way up the tower/driveshaft, from one rotor tip to the next, transmitting torque all the way from the most distant rotor back to the base of the lower section 7 of the tower/driveshaft, where the torque is taken up by an armature means **16.** Such lashing may, or may not, be elastic, have elastic properties, or be provided with elastic property means (such as the slack uptake means **59,** comprising elastic or resilient spring means in the seventy-third embodiment, as shown in **Fig. 98****).** The helical configuration may be preconfigured, or may result from a twisting deformation of the central shaft under load.
19. **Figs. 26** **and** **28** show a version having helical lashing means, like the seventeenth embodiment, with the addition of continuous longitudinal lashing means **20,** shown extending from one rotor tip to the next, along the length of the tower/driveshaft, running substantially parallel to the shaft. This longitudinal lashing acts to structurally augment the stiffness of the tower/driveshaft **10,** by serving, when brought under tension, to oppose any longitudinal bending of the tower/driveshaft. This limits the downward, and downwind, bending behavior. The substantially linear longitudinal configuration may be preconfigured, or may result from a twisting deformation of the central shaft under load.
20. **Fig. 29** shows a section of a driveshaft tower similar to that of the previous, nineteenth embodiment shown in **Fig. 28****,** with the addition of reverse helical lashing means **19,** that winds in the opposite direction of helical lashing means **18,** and so does not help to transmit torque downward, but may transmit it upward in cases where the lower rotors encounter a sudden gust. This type of lashing acts to contribute to the overall structural stiffness, interconnection, and integrity of the structure as a whole. It may be incorporated with, or without, the longitudinal lashing means **20**.
21. Fig. 30 shows a section of a driveshaft tower similar to that of the twentieth embodiment shown in **Fig. 29****,** with the addition of **latitudinal lashing means 21** (substantially perpendicular to shaft), that winds in a circumferential circuit from rotor tip to rotor tip, of the same rotor. Such lashing helps, by acting in tension, to transmit torque from one blade to the next, as an interim step before it is finally transmitted downward, and may likewise contribute toward its transmission upward, or otherwise contribute to the overall structural stiffness, interconnection, and integrity of the structure as a whole.
22. This embodiment, shown in **Figs. 31, 32, and 33****,** is similar to the first embodiment, except that in this case the tower/driveshaft **10** comprises an open latticework structure **53**, rather than a solid shaft. In operation, as with other windmill towers, this flexible, rotating, latticework column, serving as a tower/driveshaft, can have higher strength for a given weight, more effectively transmit torque, and may cast less wind shadow than a solid tower, by allowing some wind to pass through it. Such an open latticework structure **53** may be comprised of, for example, struts. Referring to **Fig. 32****,** One such strut **54** member extends diagonally from top to bottom in the direction of rotation. A strut so placed would tend to transmit torque exerted by the rotors downward in compression. A strut placed in the opposite diagonal direction would tend to transmit the torque downward in tension. These are only examples. Many lattice structures are possible, within the scope of the present invention. The tower/driveshaft **10** of such an embodiment may be said to resemble, for instance, a floppy truss-type radio tower with no guy wires. In **Fig. 33****,** The base **2** is seen in a closer, cutaway depiction showing that the cantilevered bearing means **5** may comprise, for example, a bearing support means **4**, such as the substantially vertical cylindrical enclosure means shown, with a pair of bearings 11, one mounted at each end. The bearings **11** rotatably support a substantially vertical rigid axle 15, upon which the power takeoff means **14** and the tower/driveshaft **10** are coaxially mounted, as in the first embodiment. As in other embodiments, the radial loads on the bearings **11** may be lessened by increasing the distance between them.
   **Figs. 34 and 35** illustrate two examples of how a desired bending response may be built into a tower/driveshaft of the present invention, so that each section of the tower/driveshaft **10** is specifically tailored to its intended purpose:
23. In **Fig. 34****,** depicting the twenty-third embodiment, the lower section 7 is thick and substantially rigid, serving to attain distance from the ground, like the tower of a conventional windmill, with the added duty of transmitting torque, and therefore mechanical power, downward by its rotation. At a desired height the lower section **7** gives way to the longitudinally more flexible middle section **8** of the shaft.
   This middle section **8** of the shaft is depicted as being thinner than either the lower section **7,** or the upper section **9**, to denote that this middle section **8** is more longitudinally flexible. Many known structural means, other than simply making the shaft thinner, could also be utilized to provide such enhanced longitudinal flexibility. This increased flexibility allows an enhanced bending transition toward horizontal, reducing the required length of this middle section **8**. This reduces the overall mass, as well as the overall height, and the horizontal extension, of the tower/driveshaft, which in turn reduces the lever moment applied at the base, and so reduces the radial loads which must be born by the bearings comprising cantilevered bearing means **5**. At a point where the tower/driveshaft 10 is sufficiently parallel to the wind for an attached rotor **13** to effectively contribute toward its rotation, the upper section **9** of the shaft begins. Rotors are coaxially attached at intervals along this upper section of the shaft. Further bending of the shaft beyond this point will tend to increase the wind shadow effect from one rotor to the next, so for added stiffness, this upper section **9** of the shaft begins thicker than the middle section **8**, while tapering toward its distal end **99,** to save weight. The gyroscopic effect of each rotor 13 tends to stabilize the shaft in the region where that rotor is attached. As described in the first embodiment, the aggregate stabilizing effect is quite significant, substantially reducing wild swings and gyrations of the shaft in gusty conditions.
   Note that in this illustration, the mounting means **3**, which may comprise, for example, a concrete footing, extends sufficiently far below the surface 1 that the cantilevered bearing means 5, also below the surface, is substantially embedded within the mounting means. The load is at the surface for easy access. Since the base and load do not rotate, power may be easily extracted from the assembly by a continuous power conduit means 66. This base configuration is an example, which need not be exclusively associated with this embodiment of the tower/driveshaft.
24. **Fig. 35****:** The twenty-fourth embodiment shown in **Fig. 35** is similar to that of the previous embodiment, shown in Fig. 34, except that in this case, no well-defined delineation exists between the stiffer, thicker lower section 7, and the thinner, more flexible middle section **8** of the tower/driveshaft. The tower/driveshaft simply gradually tapers with increasing distance from the base, becoming thinner and more flexible until, sufficiently bent in a downwind direction for coaxially attached horizontal axis type rotors to effectively contribute toward rotation, it transitions to the upper section **9,** which again begins thicker for added stiffness, tapering toward its distal end **99** to save weight.
   It is important to note that the differences between the first embodiment, and the twenty-third and twenty-fourth embodiments may be interpreted as simply a matter of degree, involving how thick, or stiff, one chooses to make the tower/driveshaft **10** at any point along its length, in order to fine tune its behavior under differing conditions. The designations of the different sections of the shaft are only intended as a simplified illustration of the basic concepts involved. Other variations of stiffness or thickness along the length of the shaft may occur to other designers for whatever reason.
25. **Figs. 36** **and** **78****:** The twenty-fifth embodiment is similar to the first embodiment, except for having only one rotor. As in the first embodiment, the substantially rigid lower section **7** of the tower/driveshaft **10** is substantially vertical to achieve height, rotationally supported, in an upwardly cantilevered manner, by cantilevered bearing means **5.** **Fig. 78** shows a closer view of the base, wherein the cantilevered bearing means comprises a vertical axle 15, rotationally supported by a pair of vertically spaced bearings **11,** securely retained by a rigid bearing support means 4, which in this case comprises a rigid, hollow, vertical tube. The middle section, **8** bends, and the upper section **9** therefore has a substantially horizontal component to its direction, allowing any coaxially attached, horizontal axis rotors to effectively harness the energy of the wind. In this case, rather than a multiplicity of rotors, we utilize only a single, three-bladed, horizontal axis type rotor. The power takeoff means **14,** mounted to the mounting means **3** and attached to the rigid lower section 7 of the tower/driveshaft, above the cantilevered bearing means 5, supplies ratio gearing to convert the relatively slow rotation of this single rotor **13** to a faster rotational rate suitable for driving a generator 6.
26. **Fig. 37****:** The twenty-sixth embodiment is similar to the twenty-fifth, having only a single horizontal axis type rotor, but with the addition of a Darrieus type vertical axis type of rotor **44,** coaxially mounted to the lower section **7** of the tower/driveshaft **10.** The two rotors, one a vertical axis type rotor **44,** one a horizontal axis type rotor **13,** work in tandem, turning the same tower/driveshaft **10** in unison. The upper, horizontal axis type rotor **13** makes the machine *self-starting,* and is located at a substantial distance from the surface to capture more wind energy. The lower, vertical axis rotor **44** adds to the total amount of power collected, by making extra use of the rotating, rigid, vertical shaft comprising the lower section **7** of the tower/driveshaft, necessary to support the upper rotor, and to transmit its rotation to the base **2.** This lower rotor, being closer to the base **2** than the upper rotor, applies less leverage on the base **2** and therefore contributes less radial loading to the bearings **11** of cantilevered bearing means **5.** The subsurface base of the sixth embodiment, shown in **Fig. 9****,** was chosen as an example, but another type of base could be used. This embodiment can also be thought of as coupling the middle section **8** and the upper section **9** of the tower/driveshaft **10** of a windmill of the present invention, with a standard Darrieus type of windmill, to make the Darrieus machine *self-starting,* and also add to the amount of power it can produce. This embodiment therefore overcomes one of the main drawbacks of a Darrieus machine, that it is not self-starting, making the Darrieus machine a viable alternative to conventional, horizontal-axis wind turbines.
27. **Fig. 38****:** The twenty-seventh embodiment is similar to the twenty-sixth, further comprising additional rotors of each type. Coaxially mounted to the lower section **7** of the tower/driveshaft are multiple Darrieus type vertical axis rotors **44;** In this case two are shown, but more can be added within the scope of the present invention. Some of the uppermost vertical axis type rotors **44** may encroach upon the middle section **8** of the tower/driveshaft, yet remain sufficiently vertical to contribute toward the shaft rotation. Coaxially attached to the upper section **9** of the tower driveshaft are a multiplicity of horizontal axis-type rotors, as in the first embodiment. This embodiment combines several horizontal axis turbine rotors, with a multiplicity of vertical axis turbine rotors, including a means of rotationally supporting them all at an effective height, and harnessing their combined power to run a load, with automatic directional orientation guidance, all using only "a single moving part".
28. **Fig. 39** The twenty-eighth embodiment, somewhat similar to the previous, twenty-seventh embodiment, having multiple rotors of both the horizontal type **13,** and vertical axis type **44.** This embodiment utilizes guy wires 55, attached to a hub means **56,** which comprises a bearing **11,** which is the upper bearing of cantilevered bearing means **5,** coaxially aligned with, mounted to, and horizontally supporting, with rotational freedom in the horizontal plane, the upper end of the vertical rigid axle **15,** which in this embodiment, is coincident with the rigid lower section **7** of the tower/driveshaft. Cantilevered bearing means 5 in this case therefore comprises the bearings 11, the bearing support means **4,** (which, in addition to the usual cylindrical housing, that here holds only the lower bearing, also comprises the hub means **56,** and the guy wires **55,** as moored to the surface itself), and the lower section 7 of the tower/driveshaft, which in this case is rigid along its entire length, and therefore also serves the function of the axle **15**, and is so labeled. So here, since the cantilevered bearing means **5** is mostly above the surface, and is therefore exposed to the wind, it is provided with vertical axis rotors to help turn the shaft. The advantages to this design over, say, the first, fifth, and sixth embodiments include, but are not limited to:
   a. The overall structure is shorter, since the axle **15** does not extend as far underground, but instead doubles as the lower section of the tower/driveshaft **7,** being coincident therewith.
   b. The rigid axle **15** can be easily made longer, without providing it with a deep subsurface excavation and a commensurately long underground tubular bearing support housing **4,** since it is located primarily above the surface, and can be made as long as the lower section 7 of the tower driveshaft.
   c. The excavation, being less deep, is easier and safer to dig.
   d. The cylindrical housing comprising bearing support means 4 is shorter, requiring less material.
   e. Problems related to deep excavations, such as water accumulation and access for maintenance, are lessened.
   f. The bearings can be less robust, since:
      1. the longer axle **15** allows the bearings **11** to be separated more, adding to their combined leverage.
      2. the leverage that the middle section **8,** and the upper section **9** with its attached rotors, can exert upon these bearings is now less as well, without the additional leverage length that the lower section 7 adds in other embodiments.
   g. The vertical axis rotors **44** add to the power generated by the horizontal axis rotors, making this a more powerful machine.
29. **Fig. 40** shows a machine similar to that of the twenty-eighth embodiment, except for having no vertical axis blades. Such a configuration has many of the advantages of the previous embodiment, while allowing more availablity of the land below for other uses, such as agriculture. The cantilevered bearing means **5** comprises the two bearings **11,** and the rigid axle **15,** which is also, in this case, the lower section **7** of the tower/driveshaft. As in the previous embodiment, the axial loading on each individual bearing **11** is lessened by increasing the distance between them, with such increased distance being facilitated by having the axle **15** above the surface. This axial loading is further reduced by the fact that, since the lower section of the tower/driveshaft is now also part of the rigid axle **15,** which is part of cantilevered bearing means 5, less of the tower/driveshaft projects above the cantilevered bearing means **5,** reducing the leverage exerted by the projecting remainder of the tower/driveshaft **10** thereupon.
30. **Fig. 41** The thirtieth embodiment is similar to the twenty-fifth embodiment, having a single downwind horizontal axis rotor, with the load **6** located above the surface, driven by a power takeoff means **14,** which is rigidly attached to, and driven by, the rigid, rotating axle **15.** Additionally, as in the previous two embodiments, this embodiment also utilizes guy wires **55**, attached to a hub means **56,** which comprises a bearing 11, which is the upper bearing of cantilevered bearing means **5,** coaxially mounted to, and horizontally supporting, with rotational freedom in the horizontal plane, the upper end of the vertical rigid axle **15**, which is, here again, coincident with the lower section **7** of the tower/driveshaft. As in these previous two embodiments, this allows the axle **15** to be made longer, lessening the axial load on the bearings 11, and requires no deep excavation for installation.
31. **Fig. 42** The thirty-first embodiment shows a *wind farm*, comprising a multiplicity of the turbines of the twenty-eighth embodiment, arranged in a rectangular grid pattern, separated by a sufficient distance that collisions between turbines are prevented. Around the perimeter of the grid, guy wires 55 extend from the surface to each hub **56**. Within the grid, horizontal guy wires **57** connect each hub **56** to its neighbors, leaving the surface below, within the grid, uncluttered by guy wires, so that the land may be more easily utilized for other purposes, such as agriculture.
32. **Figs. 43 and 44** show a wind turbine similar to the twenty-seventh embodiment, having a vertical axis rotor 44, coaxially mounted to the lower section **7** of the tower/driveshaft, and horizontal axis type rotors **13** coaxially mounted to the upper section **9** of the tower/driveshaft. Here the vertical axis rotor **44** is comprised of elongate, substantially straight, longitudinally oriented, vertical axis type blades **40,** running parallel to the lower section 7 of the tower/driveshaft and mounted to the ends of armatures **16**, which are vertically spaced at intervals therealong.
   Another key feature in this embodiment to note is that the tower/driveshaft extends past even the upper section **9**, forming a downward hanging distal section **98,** to which additional horizontal axis rotors are coaxially mounted. The length of this downward-hanging-distal section **98** is limited by the overall stiffness of the tower/driveshaf; It may extend only as far as its attached horizontal axis type rotors remain sufficiently perpendicular to the wind to contribute to, rather than hinder, the rotation of the tower/driveshaft.
33. **Figs. 45 and 46** show a version similar to the previous embodiment, having both vertical axis rotors and horizontal axis rotors. The key feature here is that both types of rotors are mounted along the entire length of the tower driveshaft, rather than being restricted to the upper or lower section, and are interconnected to each other. The horizontal axis type blades **13** serve as the armature means to which the vertical axis type blades **41** are connected. The vertical axis type blades **41** of this embodiment differ from the vertical axis blades **40** of the previous embodiments, in that they also serve as structural components of the tower/driveshaft; These vertical axis blades serve as longitudinal lashing means **20** when under tension, and may otherwise contribute strength to the structure as a whole by their stiffness, or rigidity, and by resistance to compression forces. During one rotation of the tower/driveshaft, each longitudinal vertical axis type blade **41** is placed alternately under tension, then compression. Since the tower/driveshaft is constantly twisted by the wind in one direction, along its entire length, these elongate vertical axis blades may even assume somewhat of a helical configuration of the type illustrated in **Fig. 52** when under load.
   Referring to **Fig. 45****,** notice that this tower/driveshaft is so long in relation to its stiffness, that the entire distal section **98** of the structure hangs significantly downward. At some point, its direction of downward projection will have a sufficient vertical component that the attached vertical axis type blades **41** in that region will begin to be aerodynamically affected in a manner favorable to rotation. While one may wonder at first glance whether the aerodynamic forces on the vertical axis blades of this downward hanging distal section would tend to augment, or to counter, the rotational forces exerted by the rest of the blades, remember, vertical axis type blades, in general, are equally responsive to wind *from any direction.* These vertical axis rotors don't "know" or "care" whether they are upside down or right side up, or from which direction the wind comes, only that they are rotating, and that wind flows through them, substantially perpendicular to their longitudinal axis.
   Therefore, it is *extremely important* to note that this distal section **98,** even though "upside-down", still *contributes toward,* rather than detracts from, the overall rotation of the tower/driveshaft.
   (In fact, if the base **2** of such a turbine is installed at a point higher than the surrounding surface, as illustrated in **Fig. 51****,** where a similar windmill is mounted atop a building, the downward hanging distal section **98** may actually comprise the most significant power-generating portion of the of the tower/driveshaft, extending well below even the base itself, and harvesting more total wind energy than any other section.)
   An advantage of the wind turbine of this embodiment is that, if all sections of this tower/driveshaft are similar, it can be fabricated in a uniform, modular fashion; Virtually the entire tower/driveshaft **10,** including the horizontal axis type rotors and the longitudinal vertical axis blades, can be prefabricated in easy-to-ship, identical sections, then assembled in the field. Or, the elongate blades can be rolled up on spools for shipping, then attached to the armature rotors in the field.
   Alternatively, if we are willing to give up the cost savings of uniform parts throughout, the components of each section of the tower/driveshaft may vary, being optimized for their particular function, placement, and orientation. For example, the "horizontal axis type rotors" **13** which are mounted to the vertical lower section **7** of the tower/driveshaft are not properly oriented to contribute aerodynamically toward the overall rotation of the tower/driveshaft. They exist primarily to serve as armatures **16** for the vertical axis blades. In fact, the wide blades of a conventionally-shaped horizontal axis type rotor, in this instance would tend to produce drag, rather than contributing toward rotation. Therefore these lower rotors **13,** serving mainly as armatures, should optimally be streamlined to reduce drag, and need not be shaped to generate rotational forces from the wind.
   The shape of the horizontal axis rotors **13** of the middle section **8,** being somewhere between parallel and perpendicular to the wind, may optimally be somewhere between that of a simple streamlined armature and that of a dedicated horizontal axis turbine rotor, or may be otherwise optimized for the type of airflow they will encounter in their position along the bending tower/driveshaft.
   The horizontal axis rotors of the upper section **9** of the tower/driveshaft, on the other hand, being substantially perpendicular to the wind, are fully aerodynamically functional, and should be so shaped.
   Proceeding toward the distal end **99** of the tower/driveshaft, as it begins to point in an increasingly downward direction, at some point the horizontal axis type rotors **13,** once again may become aerodynamically ineffective due to improper orientation, and therefore serve primarily as armatures for mounting the vertical axis type blades, which do indeed, once again, become effective in this downward hanging distal section **98.** Here again, in this distal section **98** the aerodynamic shape of the horizontal axis type rotors/armatures 13 may be adjusted toward being simply streamlined, to function as armatures, rather than being shaped as a fluid reactive surface in an attempt to generate rotational forces, (although very strong winds may still blow this distal section to a more horizontal direction). Similarly, the longitudinal blades **41** of the vertical axis type rotors, where they pass through the upper section **9** of the tower/driveshaft, are not properly oriented to produce power, but instead serve as structural members, and so may be shaped to simply minimize drag, rather than to produce rotation, although this difference in shape is less pronounced than that of the horizontal axis type rotors. Other differences in rotor shape, depending on position, could include diameter and pitch. For example, faster winds are found at higher altitudes. Since the blade tip speed is proportional to wind speed, if all rotors have the same diameter, the higher altitude rotors will be driven to rotate faster than lower altitude rotors, creating a possible discrepancy in optimal rotational rate from one section of the shaft to the next. Since the whole shaft turns as a unit, lower rotors may tend to slow the higher rotors, reducing overall efficiency. This effect may be mitigated by slightly increasing the diameter of the higher altitude rotors, or by varying their pitch.
   In the final analysis, whether or not the rotors are uniform throughout the tower/driveshaft, or are tailored for their specific placement, is based on cost. At one, low cost extreme, all rotors and sections of blade, and therefore all modules of a modular construction, are exactly identical. At the other, high cost manufacturing extreme, each rotor, or section of blade, is specifically designed to be optimized for its exact placement. Between those two extremes, a limited number of types of modules, having different rotor, and blade variations, may be mass-produced, with the best type for each position chosen from among those.
34. **Figs. 47 and 48****:** The thirty-fourth embodiment is similar to the thirty-third, except that here the *central shaft* has been *eliminated* from all but the lower section **7** of the tower/driveshaft. In this lower section 7, the central shaft is reduced to a vertical extension of the axle **15,** of sufficient length to provide a rotational coupling between the tower/driveshaft **10** and the load **6.** The longitudinal stiffness of the remainder of the tower/driveshaft is provided by the longitudinal vertical axis type blades **41,** which alternate between tension and compression once with every revolution. These longitudinal blades **41** are maintained in their relative geometry by being connected at intervals along their length by the horizontal type rotors **13** that serve as armatures. Torque transmission as well is provided by the stiffness of these longitudinal blades **41,** as interconnected with these aerodynamic armatures. The tower/driveshaft may therefore become twisted under load, so that these elongate blades **41** then assume a somewhat helical configuration. The beauty of this configuration is that, with the exception of the vertical extension of the axle **15,** which projects upward into to lower section 7 of the tower/driveshaft, virtually *every part* of this tower/driveshaft **10** is capable off serving the aerodynamic function of extracting mechanical rotational energy from the wind, in addition to its structural duties, depending on wind strength and direction. Like the latticework tower/driveshaft **53** of the twenty-second embodiment, this tower/driveshaft **10** can be thought of as being comprised of struts **54.** In this case, every strut **54** is a blade, and every blade is a strut. Amost no element offered to the wind is wasted on only support, nor on only catching wind, as in prior art windmills. With the possible exception of the horizontal axis type rotors **13** connected to the lower section **7** of the tower/driveshaft, practically all components, to some degree, serve both functions. *Here is a self orienting windmill, having only a single moving part, whose blades also serve as its flexible, rotating, latticework tower.* Whatever the wind direction or strength, every section of this serpentine windmill, however it may bend, has aerodynamic surfaces that will translate that wind into localized forces that contribute to the rotation of the tower/driveshaft. It is easy to see that a myriad of possible structures exist, within the scope of the present invention, for a tower/driveshaft having similar combinations of blades acting as struts, for example, a configuration based on four- or five-bladed, rather than three-bladed rotors, or one with struts at various geometric angles, having various combinations of aerodynamic properties, all acting in concert to cause the tower/driveshaft as a whole to rotate.
35. **Figs. 49 and 50** The thirty-fifth embodiment is similar to the thirty-fourth, having no central shaft, but with the addition of diagonal torque transmission lashing means **18** running diagonally from proximate one horizontal axis type rotor **13** blade tip to the next, wrapping its way helically upward in the direction of rotation. This lashing, while producing some wind drag and not contributing aerodynamically toward rotation, greatly increases the torque transmission capabilities of the tower/driveshaft, acting to help prevent excessive twisting of the structure.
36. **Fig. 51** Shows a windmill similar to that of the thirty-fourth embodiment, mounted atop a building **80**, with the base 2 being substantially embedded within the structure of the building. The hanging distal section **98** of the tower/driveshaft **10** actually extends below the level of the base, with its length limited by the height of the building, minus that of other obstacles below. Such turbines may be installed at any convenient perch, such as hilltops, utility poles, water towers, etc.
37. **Fig. 52** illustrates a section of a tower/driveshaft similar to that of the thirty-third embodiment, having both horizontal axis type, and continuous elongate vertical axis type blades. The direction of rotation is counterclockwise, as viewed from above, with the left side coming out of the page, toward the viewer. The horizontal axis type blades **13** serve as armature means to which helically wrapped vertical axis blades **42** are mounted. The elongate vertical axis type blades **42** wrap in a helical fashion, proceeding from bottom to top, in the direction of rotation, connecting the tips of the blades of each horizontal axis rotor with those of the next. These helically wrapped vertical axis blades serve as diagonal lashing means, transmitting torque downward in tension, like the diagonal lashing means **18** of the eighteenth embodiment, shown in **Fig. 27****.** Such a helical configuration of these elongate vertical axis type blades may be a prefabricated feature, or may also result from the natural twisting forces exerted by the wind, as transmitted downward along the length of the tower/driveshaft. The central shaft **10** may, or may not be included, depending on the strength of the blades.
   The advantage of this helical configuration is that the upper horizontal axis rotors pull the vertical axis blades in the direction of rotation, which then pull the rotors and blades below *them,* and so on all the way down the tower/driveshaft, thereby transmitting the torque of all rotors down to the lowest rotors and to an armature **16** at the base of the lower section **7** of the tower/driveshaft.
   A disadvantage is that, along the upper section **9** of the tower/driveshaft, which runs substantially horizontal and parallel to the wind, these substantially vertical axis blades will cease to function in their usual vertical axis mode. Yet still they are exposed to the wind, and indeed present a surface configuration thereto, having, to some extent, the form of an Archimedian screw. Any such aerodynamic rotational forces generated in the manner of a simple Archimedian screw on these elongate helical blades, however, will be counter to the direction of rotation, due to the direction of their helical wrapping.
38. **Fig. 53** shows a configuration similar to that of the previous, thirty-seventh embodiment, in that the vertical axis blades wrap in a helical fashion along the length of the tower/driveshaft. The difference is that the direction in which the vertical axis blades wrap around the structure is reversed. These vertical axis blades **43** wrap, in the direction of rotation, from top to bottom, rather than vice-versa, and help to transmit torque downward in *compression,* rather than in tension. It should be apparent that the helical, vertical axis blades **42** of the previous embodiment, wrapping in the opposite direction, would have the advantage in that they transmit torque in tension, rather than in compression. Nevertheless, any forces generated on *these* helical blades **43** in the manner of a simple Archimedian screw will be *with* the direction of rotation, rather than against it.
39. **Fig. 54** shows an embodiment similar to the previous, thirty-eighth embodiment, having vertical axis blades, helically wrapped, from top to bottom in the direction of rotation, additionally having torque transmission lashing means **18** which wraps from bottom to top, in the direction of rotation, transmitting torque downward in tension. (This overcomes the problem of the thirty-eighth embodiment, that the torque is only transmitted downward in compression along the blades.)
40. **Fig. 55** shows a combination of the thirty-seventh, and the thirty-eighth embodiments, having elongate vertical axis type blades **42, 43** helically wrapped in *both* directions, together comprising a cylindrical repeating geometric pattern of vertical axis type rotor blades **52,** with the repeated geometry comprising a diamond, or trapezoidal shaped, four-sided polygon. The blades that wrap from bottom to top in the direction of rotation **42** serve to transmit torque downward in tension, while the blades that wrap from top to bottom in the direction of rotation **43** will transmit torque downward in compression. The central shaft **10** may or may not be included, as necessary. Horizontal axis rotors having four, five, or more blades may alternatively be utilized, to create a denser, more continuous geometric pattern.
41. **Not illustrated** If the central shaft of the previous, fortieth embodiment, shown in **Fig. 55** is *not* included, then the entire tower/driveshaft comprises only fluid reactive components, or blades. That configuration, then, forms this forty-first embodiment. Every blade is a strut and every strut is a blade. Along most sections of such a tower/driveshaft, every part can aerodynamically contribute to overall rotation in some way, in any wind, from any direction, depending on how the tower/driveshaft may bend or swing about, and every part helps to physically support the parts above it, as well as to form an integral element of the structure that transmits torque downward.
42. **Fig. 56** shows a section of a serpentine windmill that is similar to that of the thirty-seventh embodiment, having helically wrapped vertical axis type blades **42,** additionally comprising continuous longitudinal vertical axis type blades **41** that double as a linear lashing and structural means. These help strengthen the structure, greatly adding to its overall bending strength. Of course, the central shaft **10** may or may not be included.
43. **Fig. 57** shows a section of a serpentine windmill that is similar to that of the thirty-ninth embodiment, having vertical axis blades helically wrapped from top to bottom in the direction of rotation **43**, and torque transmission lashing **18,** helically wrapping its way up the tower/driveshaft, from tip to tip of successive horizontal axis rotors **13,** in the direction of rotation, from bottom to top. The key new feature of this embodiment, as in the previous embodiment, is the addition of continuous longitudinal vertical axis type blades **41.** These aerodynamically shaped blades of course help the structure rotate, and also help strengthen the structure longitudinally, greatly adding to its overall bending strength. Of course, as in other similar embodiments, the central shaft **10** may or may not be included.
44. **Fig. 58** shows an embodiment similar to the fortieth embodiment, having vertical axis type blades that wrap helically in both directions **42, 43,** with the additional feature of having elongate longitudinal vertical axis type blades **41,** as in the previous embodiment. Since these vertical axis type blades run in three directions, they form a latticework of repeating triangles, comprising a cylindrical repeating geometric pattern of vertical axis type rotor blades **52**. Such a perforated cylindrical configuration is capable of being made stronger, and therefore taller, than one relying only on a central shaft for its strength.
45. **Fig. 59** This forty-fifth embodiment is the latticework tower/driveshaft of the previous, forty-fourth embodiment, comprised of both horizontal axis type rotors **13** and vertical axis type blades, with the vertical axis type blades running longitudinally **41,** and wrapping helically in both directions **42, 43,** but *without the central shaft.* Here the entire structure acts together to form the composite cylindrical tower/driveshaft **10,** comprising a cylindrical repeating geometric pattern of vertical axis type rotor blades **52.** Every strut is a blade and every blade is a strut. Any section of the elongate structure of this tower/driveshaft **10** has fluid reactive surfaces that will act to harness rotational energy from any wind, coming from any direction. This exact geometric configuration is exemplary only, with many variations on this general theme, of an elongate flexible rotating structure comprising both horizontal axis type and vertical axis type fluid reactive blades, being possible. More blades, struts, or lashing means, serving to further tie the structure together, could certainly be added within the scope of the present invention, working from the general principles disclosed herein.
46. **Figs. 60, 61, 62****, and** **63****:** This forty-sixth embodiment is similar to the thirty-second embodiment, in that the lower section 7 of the tower/driveshaft **10** is surrounded by vertical axis type rotor blades, attached to armatures **16**, while the upper section **9** has only horizontal axis rotors **13**. Here the form taken by these vertical axis type blades is a cylindrical, repeating geometric pattern of aerodynamic struts, as in the previous embodiment, with the repeating geometric form comprising this exterior cylinder being the *hexagon,* rather than the triangle of the previous embodiment. These struts comprise the vertical axis type blades **54,** which run at about a **30** degree angle from parallel to the inner shaft, and act to contribute aerodynamically to the rotation of the structure, and the circumferentially oriented, aerodynamically shaped struts **51,** which are substantially perpendicular to the inner shaft, and therefore contribute little, if any, aerodynamic forces to the overall rotation, but nevertheless provide structural integrity. The hexagons may alternatively run at a different angle, such as, for example, rotated by thirty degrees from those described above. Note that the armatures **16** are illustrated as being aerodynamically shaped as horizontal axis type rotors, although this is not a necessary characteristic of this embodiment.
47. **(Not illustrated)** The forty-seventh embodiment is the same as the previous, forty-sixth embodiment shown in Figs. **60 - 63****,** except that the hexagons do alternatively run at a different angle, rotated by thirty degrees from those described above. In this embodiment, the aerodynamically shaped struts run both longitudinally, and at an angle of 60 degrees thereto, to form regular hexagons. Some other angle of offset for these non-longitudinal struts, such as 45 degrees, is also possible, to form non-regular hexagons. All struts, to some degree, act as vertical axis type blades, since none is exactly circumferential in direction. Other possible configurations for such an exterior cylindrical shell of vertical axis type blades include, but are not limited to, those of any honeycomb lattice type tube configuration, such as those exemplified by "buckytubes" or "carbon nanotubes", etc.
48. **Fig. 64** In this embodiment the cylindrical latticework configuration of vertical axis blades **54** surrounding the lower section **7** is comprised of repeating equilateral triangles, alternating between pointing up and down. These triangles are comprised of aerodynamic struts, including vertical axis type blades **54** oriented at about **30** degrees from parallel to the central shaft, and circumferentially oriented struts **51,** running substantially perpendicular to the central shaft. These vertical axis blade struts **54,** when considered as connected from end to end, also collectively form continuous elongate helically wrapped vertical axis blades **42** and **43,** as in the thirty-seventh through forty-fifth embodiments. The helically wrapped blades **42** run from bottom to top in the direction of rotation, transmitting torque down the tower/driveshaft in tension. The helically wrapped blades **43** run from top to bottom in the direction of rotation, transmitting torque down the shaft in compression. Again, other angles are possible for such a pattern, either collectively, or referring to the three directions of its constituent struts, relative to one another.
   **Lift Augmentation for the Tower/Driveshaft:**
   In previous embodiments, we have discussed how certain of the horizontal axis rotors, depending on the position, may generate some lift, in the manner of a gyroplane. This lift, and more predominantly the stiffness of the tower/driveshaft, as supported by the cantilevered bearing means 5, have been the only forces holding the structure aloft until this point. In the following embodiments we outline means of augmenting these forces, further helping to keep the structure of the tower/driveshaft and its attached aerodynamic blades aloft.
49. **Fig. 65** In this forty-ninth embodiment, we introduce the concept of a downwind cantilevered tail means **22,** which functions like the tail of an airplane. The tail is attached in a cantilevered manner, with rotational freedom, to the upper section **9** of a tower/driveshaft **10** similar to that of the first embodiment, by cantilevered boom rotational bearing means **26.** A tail boom **23,** extends downwind from the bearing **26.** At the far end of the tail is lifting surface **24** (like the horizontal stabilizer of an airplane) and passive downwind tail orientation means **25** comprising a substantially vertical surface (like that of the vertical stabilizer on an airplane). Any functional equivalent, such as a V-tail, a flexible tail, an inflated tail, or any other type of tail means, is to be considered within the scope of this invention.
   As previously discussed, when a tower/driveshaft **10,** with its attached horizontal axis rotors **13,** begins to be bent downwind, and the axes of the rotors **13** are tilted back from vertical, the rotors, once spinning, begin to produce lift, as does a gyrocopter. The planar disk of each spinning rotor forms a virtual "lifting surface", somewhat like a kite, or like the wing of a tethered airplane, or glider, or more specifically, like a tethered helicopter in autogyro mode. This lift helps to support the tower/driveshaft against gravity. As the tower/driveshaft becomes increasingly bent over, however, the angle of attack at which the disk of each rotor encounters the wind increases. While the rotor **13** produces more power when so tilted back, at a certain point it will begin to provide less vertical lifting force to the tower/driveshaft as a whole, as when an airplane wing "stalls".
   This tail **22** serves the same purpose as the tail of an airplane, to influence the "angle of attack" of the rotor **13,** as if the rotor were a wing, and thereby to substantially oppose its tendency toward "stalling"; The lift provided by the tail's lifting surface **24** tilts the rotors **13** forward by applying a forward lever arm to the structure as a whole, (as does the tail of an airplane when the control yoke is pushed forward) as shown by the curved arrows.
   In this embodiment a single tail **22** guides the distal section **98** of the tower/driveshaft **10,** and its coaxially attached upper rotors **13,** into a more forward angle of attack. These upper rotors then, guided by the forward pitch rotation exerted by the tail **22,** help to pull the entire tower/driveshaft forward, tilting the rotors below into a more forward position as well, with these rotors further influencing the rotors below to pull forward on the rotors below them, and so on down the line.
   To some extent, just as a train follows the engine, the lower rotors are brought forward toward a less extreme angle of attack. The column of rotors flies like a stack of kites, guided by the single tail **22.**
50. In this, the fiftieth embodiment, illustrated in **Fig. 66****,** multiple tails **22** of the previous embodiment are rotationally attached at intervals, by means of cantilevered boom rotational bearing means **26,** along the upper section **9** of the tower/driveshaft, between the rotors. Again, the column of rotors flies like a stack of kites, with each vertical surface **25** serving to insure that the tail is blown downwind of the tower/driveshaft, and each horizontal lifting surface **24** serving to elevate that tail, thereby in the aggregate lifting the entire upper section **9** of the tower/driveshaft, and applying a forward pitching moment thereto that serves to help elevate it, keeping the tower/driveshaft from being blown all the way over. The base **2** shown, similar to the base of the third embodiment, was chosen for the sake of example, and need not necessarily be associated with this embodiment over any other base.
51. **Fig. 67** Here an entire lifting body **31,** rather than just a tail, is attached to the distal end of the upper section **9** of the tower driveshaft by means of suspension bearing means **33.** The lifting body **31** is aerodynamically lifted by the force of the wind, and flies like a kite, or tethered glider, helping to support the tower/driveshaft against gravity, as well as helping to "steer" or guide the rotors **13** below forward into a better lifting orientation, having less angle of attack.
52. **Fig. 68** This embodiment is a combination of the previous two, having both the multiple tails **22** of the fiftieth embodiment, as well as the lifting body of the previous, fifty-first embodiment. Each rotor/tail combination acts as a lifting body, with the whole assembly additionally pulled upward by the dedicated lifting body **31.** It is easy to see that many combinations of tails and/or lifting bodies could be used, within the scope of the present invention. The base **2,** similar to that of the fourth embodiment, having the load **6** vertically sandwiched between the two bearings 11, was chosen as an example; alternative base configurations could be used within the context of this embodiment.
53. In **Fig. 69** the cantilevered tail boom **23** is extended to the upwind side of cantilevered boom attachment rotational means **26,** forming cantilevered nose boom **28.** A linear tension transmission means **29,** such as, for example, a cable, attached sequentially to the tip of each nose boom, pulls downward on the nose booms, pulling the entire tower/driveshaft forward, thereby helping to elevate it, in addition to decreasing the angle of attack presented by the disks of the spinning rotors, causing the rotors to migrate upwind. This linear tension transmission means **29** may have a substantial stiffness in the region proximate the rotors, to avoid entanglement therewith. The passive downwind tail orientation means **25,** comprising the "vertical" surface on each tail, insure that the tails are held in a downwind position, so that the nose booms remain projecting upwind. In **Fig. 70** we can see that the tension on linear tension transmission means **29** is provided by tension adjustment means **30,** here illustrated as a simple winch, located at the base **2.** A turntable base **35,** similar to that of the sixteenth embodiment, allows the entire assembly to passively track the wind.
54. **Fig. 71** shows a combination of the previous, fifty-third embodiment, having cantilevered tails **22** with forward projecting cantilevered nose booms **28,** and the fifty-first embodiment, having a lifting body **31** attached to the tower/driveshaft by suspension bearing means **33.** The tension transmission means **29** is attached to the cantilevered nose booms **28,** and the nose of the lifting body **31,** and thereby adjusts the attitude of not only the tails, but of the lifting body as well. The entire assembly may be "flown" in the manner of a kite, or more specifically, a stack of kites.
55. **Fig. 72** In this embodiment, similar to the fifty-third embodiment, the tail **22** further comprises an adjustable elevator surface **45,** which is controlled by an actuating mechanism **46,** with the particular mechanism illustrated pivoting at cantilevered boom rotational bearing means **26.** This actuating mechanism, here comprising pivots and push rods, pivotably supports the nose boom, and is responsive to the angle thereof. The tension transmission means **29** pulls downward on the cantilevered nose booms **28,** pivoting the actuating mechanisms **46,** which adjusts the elevator surface **45.** These components, along with the tension adjustment means **30,** located proximate the base (as shown in **Fig. 70****)** together comprise elevator control means **47.**
   The control means **47** and actuating mechanism **46** could comprise alternative methods and apparatus than that shown, be they electric, hydraulic, pneumatic, electronic, radio controlled, etc., within the scope of the present invention.
56. **Fig 73** This fifty-sixth embodiment is similar to the fifty-third, having tails **22,** and projecting cantilevered noses **28** which are pulled downward by a tension transmission means **29.** Each rotor **13** turns with the upper section **9** of the tower/driveshaft, being rotationally coupled thereto, but is allowed to tilt, being mounted on a Tilting Hub **48.** Each cantilevered boom rotational bearing means **26** is similarly mounted to this tilting hub and so tilts with the rotor, while allowing the boom to rotate independently thereof, so the tails can remain downwind. So the rotor turns with the tower/driveshaft, but tilts with the nose and tail. Therefore, downward tension on the tension transmission means **29** can easily tilt both the rotors and their attached tails forward, reducing their angle of attack, without having to pull the entire tower/driveshaft forward against the force of the wind, with the limited leverage offered. Like a kite that is tilted forward, reducing its angle of attack, each rotor/tail combination will have an increased tendency, by its lift, to pull the tower/driveshaft upward and toward the wind. Through tension applied to tension transmission means **29,** the entire tower/driveshaft may be caused to move to a more windward position, to fly, like a string of kites, to a position more overhead and less downwind, with less tension on tension transmission means **29** required than in the fifty-third embodiment. By using the wind itself to help lift the tower/driveshaft, strain on the tower/driveshaft **10,** base **2,** and tension transmission means **29** are also reduced.
57. **Figs. 74 and 75** show an embodiment similar to the fifty-first embodiment, with the upper section **9** of the tower/driveshaft suspended from a lifting body by means of suspension bearing means **33.** The difference here is that this lifting body **32** is buoyant, in the fluid in which it is suspended; in this example, it is inflated with a buoyant gas such as helium and/or hydrogen, to be buoyant in the atmosphere. This helps to elevate the tower/driveshaft even in low wind or zero wind conditions. The buoyancy may augment, or largely replace, the stiffness of the tower/driveshaft itself as a means of supporting the entire upper section **9** of the tower/driveshaft and its attached horizontal axis rotors **13.** Such an inflatable aerodynamic lifting body can also simply be filled with air, or a mixture of gases, to be lightweight in the atmosphere, even if not fully buoyant.
   Alternatively, such a buoyant lifting body may simply comprise a bag, balloon, or other shape, whether preconfigured or indeterminate, that contains the buoyant gas *without* providing significant aerodynamic lift. The fraction of lift provided by buoyancy versus aerodynamic forces of a lifting body will therefore vary depending on the exact configuration, as well as the wind speed.
58. **Figs. 76****,** **77, and 78** In this fifty-eighth embodiment, the actual rotor blades 12 themselves are buoyant, inflated with a lightweight gas, in an embodiment otherwise similar to the first embodiment. Torque is transmitted down the length of the tower/driveshaft **10.** The closeup view of the base in **Fig. 78** shows a typical configuration, similar to that of the first embodiment, with the lower section **7** of the tower/driveshaft extending upward from cantilevered bearing means **5,** comprising an axle **15,** which is rotatably supported by two bearings **11.** The low speed, high torque rotation is converted to a higher speed rotation required by the load 6, via the ratio gearing provided in this case by power takeoff means **14.** This lighter-than-air, downwind turbine remains aloft in zero wind conditions.
59. **Fig. 79** This fifty-ninth embodiment is similar to the previous embodiment, having horizontal axis type rotors 13, whose buoyant blades **12** are inflated with a gas such as helium or hydrogen, and so float in the air. In this embodiment the rotors are held up by their buoyancy and aerodynamic lift only, not by the stiffness of the tower/driveshaft per se. The radial loading on cantilevered bearing means **5** is thus reduced. The base **2** comprises a non-rotating directionally compliant support means **60,** here comprising, as an example, a gimbal mounting frame. Such a gimbal-equipped base is free to directionally track the tower/driveshaft, while not itself rotating, allowing the power to be drawn off by means of continuous power conduit means **66.**
60. **Fig. 80** This sixtieth embodiment is similar to the fifty-seventh embodiment, with the upper section **9** of the tower/driveshaft, and its attached horizontal axis type rotors being suspended by a buoyant lifting body **32** via suspension bearing means **33** (not visible, see **Fig. 75**), while also incorporating the non-rotating directionally compliant support means **60,** or gimbal mount, of the previous embodiment. This downwind machine stays aloft even in low or no wind conditions.
61. **Figs. 81 and 82** This sixty-first embodiment is similar to the fifty-eighth embodiment, having buoyant rotor blades, with the tower/driveshaft projecting upward from the base **2,** rotationally supported by cantilevered bearing means **5,** which comprises two bearings **11** at either end of a vertical axle **15.** A series of armature means **16** are coaxially mounted to the tower/driveshaft, with helical torque transmitting lashing means **18,** wrapping sequentially from tip to tip of the armatures, from bottom to top, in the direction of rotation, helping to transmit torque downward along the tower/driveshaft, as in the eighteenth embodiment, shown in **Fig 27****.**
62. **Fig. 83** shows an embodiment similar to the fifty-ninth embodiment, having buoyant horizontal axis type rotor blades **13** and a directionally compliant base **60,** having the additional feature of helical torque transmission lashing means **18,** wrapping sequentially from the tip of one blade to the tip of the next, and connecting at its lower end to an armature means 16, mounted coaxially to the lower section of the tower/driveshaft **10,** as in the eighteenth, and previous embodiments.
63. **Fig. 84** shows an embodiment similar to the sixtieth embodiment, having multiple horizontal axis type rotors, with the tower/driveshaft suspended from a buoyant lifting body **32,** and having a directionally compliant base, further comprising the additional feature of helical torque transmission lashing means 18, wrapping sequentially from the tip of one blade to the tip of the next, as in the eighteenth, and previous embodiments.
64. **Fig. 85** shows the sixty-fourth embodiment, an embodiment similar to the sixty-second embodiment, having buoyant horizontal axis rotors, and a vertically cantilevered flexible shaft comprising the lower, and middle sections **7, 8** of the tower/driveshaft, except that this embodiment has no actual central shaft comprising the upper section **9** of the tower driveshaft, since, with the rotors being buoyant, an actual central shaft is not necessary to support the rotors. Nevertheless, the functions served in previous embodiments by this central shaft of the upper section **9,** namely supporting the rotors and transmitting torque, are yet fulfilled by the buoyancy of the rotors, the aerodynamic forces on them, and the lashing **18.** Therefore in a virtual sense, the upper section **9** of the tower/driveshaft still exists, as a self elevating, wind harvesting, rotating elongate structure, even without the central shaft.
65. **Figs. 86 and 87** show the sixty-fifth embodiment, having a buoyant lifting body **32,** horizontal axis type rotors 13, and a tower/driveshaft that projects vertically from the base **2,** similar to the fifty-seventh embodiment. The difference is that in this embodiment, like the previous embodiment, the central shaft comprising the upper section **9** of the tower driveshaft has been largely removed, with the rotors instead being supported by the torque transmission lashing **18.** Only the uppermost and lowermost rotors are still attached to a solid central shaft. The uppermost rotor depends from the distal section **98** of the tower/driveshaft, which is itself rotationally supported from the buoyant lifting body **32** by suspension bearing means **33.** The lowermost rotor is coaxially mounted to the end of the middle section **8** of the tower/driveshaft. The rotors in between are suspended by the lashing means **18,** which also rotationally transmits their torque downward to the lowest rotor, which acts as an armature in conveying that torque to the middle section **8** of the tower/driveshaft.
66. **Fig. 88** shows the sixty-sixth embodiment, an embodiment similar to the sixty-fourth embodiment having horizontal axis type rotors with buoyant blades, and no central shaft, but with the base **2** comprising a non-rotating directionally compliant support means **60,** here comprising a gimbal mounting frame, which can track the direction of the wind without itself rotating, so that power can be drawn off by means of continuous power conduit means **66.** Torque is transmitted from upper rotors downward by torque transmission lashing **18,** to an armature means **16,** which drives the truncated lower section **7** of the tower/driveshaft, being coaxially mounted thereto.
67. **Fig. 89** shows the sixty-seventh embodiment, an embodiment similar to the sixty-fifth embodiment having horizontal axis type blades, a buoyant lifting body and no central shaft, but with the base **2** comprising a non-rotating directionally compliant support means **60,** as in the previous embodiment, here comprising a gimbal mounting frame, which can track the direction of the wind without itself rotating, so that power can be drawn off by means of continuous power conduit means **66.** Torque is transmitted from upper rotors downward by torque transmission lashing **18,** to an armature means **16,** which drives the truncated lower section **7** of the tower/driveshaft, being coaxially mounted thereto.
68. **Fig. 90** shows the sixty-eighth embodiment, similar to the sixty-second embodiment, having buoyant horizontal axis type rotor blades **13** and a directionally compliant base **60,** with helical torque transmission lashing means **18,** wrapping sequentially from the tip of one blade to the tip of the next, and connecting at its lower end to an armature means **16,** mounted coaxially to the lower section **7** of the tower/driveshaft **10,** as in the eighteenth embodiment. This embodiment additionally comprises longitudinal linear lashing means **20,** running from rotor tip to rotor tip, substantially parallel to the central shaft, to lend stiffness, or rigidity, to the structure as a whole. Additionally, the directionally compliant support means **60** further comprises a means for directional bias **61,** which may be passive, and biased toward vertical, as in resilient or spring-loaded, or powered, as in actively controlled. This directional bias means **61,** when exerting a force tending to aim the shaft toward vertical, acts to physically oppose the force of the wind blowing the tower/driveshaft over, as well as reducing the angle of attack with which the spinning rotors encounter the wind, which also helps to elevate the tower/driveshaft.
69. **Fig. 91** This sixty-ninth embodiment is similar to the previous embodiment, except with the central shaft eliminated, as in the sixty-fourth embodiment. The tower/driveshaft **10** nonetheless still exists, in the virtual sense, even without the central shaft, being comprised of the buoyant rotors, the longitudinal lashing means **20,** and the helical lashing means **18,** as held in a rotationally stable elongate configuration by the bouyancy of the rotors and the force of the wind against them, as constrained by the tension of the lashing means. The lashing means in this case, particularly the helical lashing **18,** may have elastic properties, or be provided with elastic means, such as that of the seventy-third embodiment, to allow the tower/driveshaft structure to deform in a manner that would resemble a parallelogram if viewed from the side. The attitude, or pitch of the rotors may thereby be affected by the influence of the means for directional bias **61** toward vertical, as transmitted through the lower section 7 of the tower/driveshaft, to the armature **16,** to the longitudinal lashing means 20, reducing the angle of attack of the rotors **13,** thereby helping to keep the structure as a whole elevated.
70. **Figs. 92 and 93** This seventieth embodiment is similar to the previous two, in that the base **2** has a directionally compliant support means **60,** with a means for its directional bias **61,** whose bias toward vertical is transmitted to the rotors by means of armature **16** and longitudinal lashing means **20.** The horizontal axis type rotors shown are buoyant, so as to remain aloft in low or no wind conditions, but could also be non-buoyant, within the scope of this embodiment. The central shaft of the upper section **9** of the tower/driveshaft is retained, with the torque being substantially transmitted thereby.
   The key difference of this embodiment from the previous one is that the linear continuity of the tower/driveshaft is broken by directionally flexible rotational coupling means **63,** here comprising a universal joint, and that each rotor is rotationally coupled to the shaft **9** by a tilting hub **48,** allowing it freedom to tilt in relation to the shaft. The directional flexibility that this universal joint **63** provides for the upper section **9** of the tower/driveshaft, relative to the armature means **16**, is matched by the directional flexibility afforded to each rotor relative to the upper section **9** of the tower/driveshaft, by the tilting hubs **48.** The net result is that the column of buoyant, rotating, horizontal axis type blades may be "flown" in the manner of a stack of kites, with the armature **16** acting as a yoke to control the angle of attack that the rotors **13** present to the wind. This angle of attack may be biased in any direction, independent of the direction of projection of the tower/driveshaft, within the degree of freedom allowed by the universal joint **63,** and the tilting hubs **48.** Since the tower/driveshaft is not held up by its own stiffness, but rather by buoyant and/or aerodynamic forces, the lower section **7** of the tower/driveshaft therefore exerts less radial loading on the cantilevered bearing means **5,** which allows that bearing means to be less robust. Note that in this embodiment, the upper section **9** of the tower/driveshaft is co-rotational, but not strictly coaxial with the load, projecting at an angle thereto, while the rotors are also co-rotational with the load, with their axes of rotation being substantially parallel to that of the armature, which in this case is the same as that of the load.
71. **Figs. 94 and 95** The seventy-first embodiment is similar to the previous embodiment, with the angle of the armature **16** determining the angle of attack of the buoyant, horizontal axis rotors **13** through linear lashing means **20,** except that here the load 6 is coaxial with the upper section **9** of the tower/driveshaft, with the angle between the rotational axis of the armature **16** and the tower/driveshaft being accomplished by a directionally flexible *non-rotating* coupling means **64,** which as illustrated appears similar to the universal joint **63** of the previous embodiment, but is non-rotating, and therefore is subject to less wear and energy loss through friction. This directionally flexible non-rotating coupling means **64** supports a non-rotating load mount means **65,** providing a rotationally stable, directionally flexible mounting means for the load **6.** So the load is allowed to follow the direction of the tower/driveshaft and remains coaxial thereto.
   Looking somewhat like, and serving part of the function of, the lower section **7** of the tower/driveshaft of other embodiments, is the bearing support means **4,** herein illustrated as a simple post projecting from the gimbal mount **60.** The armature rotational bearing means **70** is retained by bearing support means 4, and supports the armature **16** in a rotationally free, yet angularly definitive manner. The angle at which the armature rotates is then influenced by directional bias means **61,** which controls the directional orientation of the non-rotating directionally compliant mounting means **60** (the gimbal mount). This bearing support means 4 does not rotate, but extends entirely through the armature bearing **70,** then forming a non-rotating point of attachment for the directionally flexible non-rotating coupling means **64,** supporting non-rotating mount means **65,** for mounting the load **6.** The resulting fluent power is drawn off by means of continuous power conduit means **66,** which is conveniently routed down the center of the mounting means **4,** which penetrates the armature bearing **70.** Here the load is a generator, so the conduit means **66** is an electric cable.
   The directionally flexible non-rotating coupling means **64** of this embodiment has less friction, and is therefore more efficient, and requires less maintenance than the directionally flexible rotational coupling means 63 of the previous embodiment.
   While buoyant rotors are shown, since they allow the structure to remain aloft during periods of low or no wind, non-buoyant rotors could also be used, within the scope of this embodiment.
72. **Figs. 96 and 97** This seventy-second embodiment is similar to the seventieth embodiment, comprising a directionally compliant non-rotating support means **60** (gimbal mount), provided with means for directional bias 61, causing an attached rotating armature **16** to steer and affect the angle of attack, as well as the horizontal angle, of the buoyant horizontal axis type rotors **13** through a linear means. The directionally flexible rotational coupling means **63,** here shown as a simple universal joint, allows angular freedom between the upper section **9** of the tower/driveshaft and the axis of rotation of the armature **16.** And the tilting hubs allow angular freedom between this upper section **9** and the attached horizontal axis rotors **13.** The linear lashing means **20** of the seventieth embodiment is replaced by linear vertical axis type blades **41,** which not only act to connect the arms of the armature **16** with the tips of the horizontal axis type rotor blades **12,** thereby allowing the armature **16** to affect the angle of attack of each horizontal axis rotor **13,** but also act to aerodynamically contribute to the rotation of the tower/driveshaft as a whole, by harvesting wind energy as vertical axis type rotor blades. Even though the vertical axis type blades **41** are not strictly vertical, but are at the same angle to vertical as is the upper section **9** of the central shaft, their direction of travel is more horizontal than their direction of projection, being substantially parallel to the plane of rotation of the armature **16.** These vertical axis type blades **41** may also be buoyant, filled with a lighter than air gas, to help elevate the structure. Torque is transmitted down the length of the central shaft comprising the upper section **9** of the tower/driveshaft. The vertical axis type rotors **41** are illustrated as having a break at each horizontal axis rotor. They could equally well be configured as continuous, unbroken, very long blades, (see **Fig. 100**) having the stiffness lent by that continuity. Therefore, torque may also be transmitted, or partially transmitted by the vertical axis rotors **41,** either through their stiffness, through simple tension, or both. If the vertical axis type rotors have sufficient strength, the central shaft of the upper section **9** of the tower/driveshaft may be omitted, within the scope of this embodiment.
73. **Fig. 98****:** This seventy-third embodiment is similar to the previous, seventy-second embodiment, having buoyant horizontal axis rotors mounted on tilting hubs **48,** controlled by a tilting armature **16,** through elongate vertical axis type blades **41,** which may be substantially continuous, running from tip to tip of the horizontal axis rotors **13.** The difference in this embodiment is that torque is transmitted by torque transmission lashing means **18,** which wraps helically from bottom to top in the direction of rotation, running substantially from tip to tip of the horizontal axis type rotor blades **12.**
   When tilted relative to the shaft, the axes of rotation of the horizontal axis rotors are mutually parallel, but offset from one another. As the rotors turn simultaneously, the distance from the tip of one rotor, to the next sequential tip, in the direction of rotation, of the next rotor, will vary, with the magnitude of variance dependent on the angle of tilt. To maintain a stable configuration, it is desirable that the torque transmission lashing **18** be able to vary in length, while maintaining tension, as it completes each revolution, in order to accommodate this constantly changing distance. Therefore each torque transmission lashing means **18** is provided with slack uptake means **59** here comprising an elastic or resilient spring, to accomplish this adjustment in length, while maintaining tension. This allows the other components to more closely maintain their original configuration as they rotate, since their need to deform in order to accommodate the changing configuration as the shaft rotates is reduced.
74. **Fig. 99** This seventy-fourth embodiment is similar to the previous, seventy-third embodiment, having horizontal axis type rotors **13** with buoyant blades, with elongate vertical axis blades **41** extending longitudinally from blade tip to blade tip of the horizontal axis rotors **13,** connecting sequentially to each, and is likewise provided with a torque transmission lashing means **18,** which wraps helically from bottom to top in the direction of rotation. In this embodiment however, all of the rotor blades, including both horizontal and vertical axis blades, comprise lightweight, inflated structures. Optimally, they are buoyant, meaning for atmospheric use on Earth that they are inflated with helium and/or hydrogen. (For aquatic use, they need be less dense than water, etc.) This buoyancy helps to maintain the altitude of the tower/driveshaft **10** structure during use, augmenting any overall lift provided by the wind, and allows this structure to conveniently remain airborne during periods of low or no wind. There is no central shaft in this embodiment, to save weight, with the configuration being naturally stable in a downwind orientation, held in shape by its bouyancy, the rigidity of the rotor blades, the force of the wind, and tension on the lashing. The non-rotating directionally compliant support means (gimbal mounting frame) **60** allows the armature **16** to track the downwind assembly of blades and lashing that comprises the tower/driveshaft.
   The optionally included directional bias means **61** may be used to exert some control over the angular orientation of the horizontal axis type rotors. The torque transmission lashing **18** may optionally be provided with slack uptake means **59,** as in the previous embodiment.
75. **Fig. 100** The seventy-fifth embodiment is similar to the previous, seventy-fourth embodiment, but with the inclusion of the central shaft comprising the upper section **9** of the tower/driveshaft, and no torque transmission shown, though such could optionally be included within the scope of this embodiment. As in the previous embodiment, buoyant, elongate vertical axis type blades **41** extend longitudinally from blade tip to blade tip of the horizontal axis rotors **13,** also having buoyant blades, terminating at an armature means **16.** Without such lashing, the torque is transmitted by the central shaft of the upper section **9,** by the elongate vertical axis type blades **41,** or by a combination of both. Any torque transmission along the vertical axis type blades may be through simple tension, through the rigidity of the elongate blades **41,** or by a combination of both.
76. **Fig. 101** This seventy-sixth embodiment is similar to the seventy-fourth and seventy-fifth embodiments, having horizontal axis type rotors **13** with buoyant blades, with buoyant elongate vertical axis type blades **41** extending longitudinally from blade tip to blade tip of the horizontal axis rotors **13.** Therefore, for atmospheric use, all of the rotor blades, including both horizontal and vertical axis blades, comprise lightweight, inflated structures, filled with H or He. In this embodiment, however, there is no torque transmission lashing, but instead, the elongate vertical axis blades **42** wrap in a helical configuration, from bottom to top in the direction of rotation, like those of the thirty-seventh embodiment, or like the helical lashing means **18** of previous embodiments, helping to transmit torque downward in tension. This helical deployment may be preconfigured, may be caused to occur due to the aerodynamic forces that naturally tend to twist the structure, or some combination of both. As in previous embodiments, these vertical axis type blades, being helically wrapped, and therefore meeting the oncoming wind at an angle, nevertheless serve aerodynamically to help the structure rotate, in a manner similar to the blades of a Darrieus type wind turbine. Note that the downwind helical configuration of these vertical axis blades may also cause certain aerodynamic forces to be generated in the fashion of a simple Archimedian screw, and that, due to the direction in which they helically wrap around the tower/driveshaft, any such forces in this embodiment will be counter to the direction of rotation.
77. **Fig. 102** This seventy-seventh embodiment is similar to the previous, seventy-sixth embodiment, having buoyant, helically wrapped, vertical axis type blades **43,** connecting the tips of buoyant, horizontal axis type rotor blades, except that in this embodiment, they wrap in the opposite direction, running from top to bottom in the direction of rotation, as in the thirty-eighth embodiment. As in the seventy-fourth embodiment, helical torque transmission lashing means **18** serves to transmit torque downward to the armature means **16.** This configuration of the tower/driveshaft is essentially the structure of the thirty-ninth embodiment, in an inflated, buoyant form; The entire structure of the tower/driveshaft floats, or is at least made significantly lighter due to this inflated construction:
   Note that the downwind helical configuration of these vertical axis blades **43** may also cause certain aerodynamic forces to be generated in the fashion of a simple Archimedian screw, and that, due to the direction in which they helically wrap around the tower/driveshaft, any such forces in this embodiment will be in the direction of rotation, helping to turn the shaft.
78. **Fig. 103** This seventy-eighth embodiment is similar to the seventy-sixth embodiment, having buoyant, vertical axis type blades **42,** helically wrapped from bottom to top in the direction of rotation, sequentially connecting the tips of buoyant, horizontal axis type rotor **13** blades, but with the inclusion of the central shaft of the upper section **9** of the tower/driveshaft, as in the seventy-fifth embodiment.
79. **Fig. 104** This seventy-ninth embodiment is similar to the seventy-seventh embodiment, having buoyant, vertical axis type blades **43,** helically wrapped from top to bottom in the direction of rotation, sequentially connecting the tips of buoyant, horizontal axis type rotor **13** blades, also including helically wrapped torque transmission lashing **18,** but with the inclusion of the central shaft of the upper section **9** of the tower/driveshaft, as in the seventy-fifth embodiment, to help stabilize the configuration.
80. **Fig. 105** This eightieth embodiment is a combination of the seventy-seventh, and seventy-sixth embodiments, having buoyant vertical axis type blades, **42** and **43,** helically wrapped in both directions, connecting the blade tips of the buoyant, horizontal axis rotors **13,** altogether forming a buoyant, inflated, latticework structure, every component of which serves an aerodynamic function, contributing to the rotation of the structure as a whole.
81. **Not Illustrated** This eighty-first embodiment is similar to the previous embodiment, illustrated in **Fig. 105****,** but with the inclusion of the central shaft of the upper section **9** of the tower/driveshaft. This upper section **9** of the tower/driveshaft, including all horizontal and vertical axis blades, comprises a buoyant, inflated version of tower/driveshaft of the fortieth embodiment.
82. **Figs. 106****,** **107** A plurality of substantially horizontal axis type rotors **13** are coaxially mounted, at spaced intervals, along an elongate driveshaft **10.** The driveshaft is substantially aligned with the wind, but at an offset angle α, to allow each rotor to encounter at least some airflow substantially undisturbed by upwind rotors, as illustrated in **Fig. 107****.** In this case the offset angle α is in the vertical plane. The driveshaft protrudes in a freely rotating manner from each end of a cantilevered bearing means 5, and drives a load 6, mounted thereto. This cantilevered bearing means **5** comprises a bearing support means 4 and two bearings 11. In this case the bearing support means **4** comprises a streamlined nacelle **100.** This streamlined nacelle is mounted atop a streamlined mounting pylon **97,** which, by virtue of its wedge shape, also comprises elevation angle control means **36.** This driveshaft/bearing/load combination is aimed into the wind much like a weather vane, being mounted on a horizontally rotatable azimuthal directional orientation means **35,** which is in this case essentially a horizontally rotatable pivot, or yaw bearing, located within the streamlined mounting pylon. In this embodiment there are five rotors mounted on the downwind section **50** of the driveshaft, and only four rotors along the upwind section **49** of the driveshaft. The extra length of this downwind section, and the fact that the streamlined mounting pylon **97** extends substantially in a downwind direction, together comprise downwind offset extension means **95.** (A more clear example of such a downwind offset extension means **95** is seen in **Fig. 108****,** where the horizontal distance **B** that the driveshaft projects downwind is seen to be substantially greater than the horizontal distance **A** that the driveshaft projects upwind.) The longer end of the driveshaft with five rotors is blown downwind because:
   - Five rotors present more wind resistance than four.
   - The longer end with five rotors also has more leverage about the azimuthal pivot means **35**. (This extra length of the downwind section of the driveshaft comprises a downwind offset extension means **95**.)
   - The downwind rotors also are higher than upwind rotors, and therefore encounter the higher wind speeds found at higher altitude, and are therefore more forcefully blown downwind thereby.
      The operative principle is not the exact number of rotors, nor their exact distance upwind or downwind, but the fact that some predominance of downwind rotors, in sheer number and/or the leverage that they exert, and/or the extra force exerted upon them by virtue of higher altitude, will produce automatic downwind orientation behavior, in the fashion of a weathervane.

   The cantilevered bearing means **5** is mounted atop the horizontally rotatable azimuthal directional orientation means (horizontal pivot) **35** at a slope, or offset angle α from the horizontal plane, as determined by an elevation angle control means **36,** which in this case comprises the wedge-shaped support of the streamlined mounting pylon **97,** and is naturally guided by the wind to a position azimuthally substantially aligned with the wind. The entire assembly is mounted atop an elevated support means, such as the conventional tower means **90** of the drawing figures
   The nose, or upwind section **49** of the driveshaft, extending substantially into the wind, also points slightly downward, toward the ground, at offset angle α from the horizontal plane. The tail, or downwind section **50** of the driveshaft is blown, and caused to be aimed, substantially downwind, and yet projects slightly upward, toward the sky, at offset angle α from the horizontal plane, as well. The rotors are separated sufficiently that, with the shaft projecting at an offset angle α from the wind direction, there is sufficient distance from one rotor to the next to allow at least a substantial portion of each rotor disk substantial access to a relatively undisturbed airflow. In other words, the shaft is tilted enough to significantly reduce wind shadow effects from one rotor to the next, but not so much that the rotors cease to function efficiently, with enough distance between the rotors to facilitate such an optimal zone of behavior. As shown in **Fig. 108****,** the cantilevered bearing means may comprise an axle **15** freely rotating within the bearings, supporting the driveshaft **10.** This assembly may be fashioned, for example, with the axle **15** being hollow, and the driveshaft inserted therein. The driveshaft may even extend completely therethrough, in an uninterrupted fashion. The driveshaft may also be sufficiently robust to be directly mounted in the bearings, without being held by an axle; indeed as the two may be fashioned as a single unit, there need not be any distinction between them.
   - The offset angle α need not be exclusively in the vertical plane. An offset in the horizontal plane, or at an oblique angle, or even no offset angle at all, are also possible within the scope of the present invention. Indeed, the aim of such a vertically slanted turbine may tend to naturally drift to one side, resulting in just such an oblique angle.
   - The load 6 is shown as an electrical generator, but could comprise any mechanical load.
   - This wind turbine weighs less than prior art turbines, and rotates faster, due to having smaller rotors. The faster rotation lowers torque, and eliminates or reduces the need for ratio gearing, further reducing weight and cost.
   - Since wind shadow effects increase with increasing wind speed, upwind rotors will partially shield downwind rotors in excessively high winds, helping to prevent damage.
   - The downwind section **50** may additionally bend in higher winds, further aligning the rotors with the wind, and shielding downwind rotors.
   - If the offset angle α is reduced so as to be substantially equal to zero, then the amount of fresh wind encountered by each rotor is reduced to that amount allowed to enter the stream by virtue of the distance between rotors. This lowers the available power but may protect the turbine in excessively high winds.
   - While the rotors illustrated have three blades, other numbers of blades are permissible, within the scope of the present invention. For example the turbine could use two-bladed rotors.
83. **Balanced Mounting Downwind of Azimuthal Pivot;** **Fig. 108****:**
   In this embodiment, the upwind and downwind portions **49,50** of the driveshaft **10** are of equal length, with an equal number of upwind and downwind rotors **13**, so that the driveshaft and attached rotors are balanced about the bearings, reducing radial loading thereupon. Here, the cantilevered bearing means **5** and elevation angle control means **36** are mounted to downwind offset extension means **95,** which acts to support them substantially downwind of horizontally rotatable azimuthal directional orientation means **35,** about which this entire assembly pivots in the horizontal plane. Distance **B,** that the driveshaft projects downwind from the center of rotation of horizontally rotatable azimuthal directional orientation means **35,** is greater than distance A that it projects upwind, due to the downwind horizontal projection of downwind offset extension means 95. The assembly is naturally blown downwind of the pivot point. This is, therefore, predominantly a downwind, passively oriented machine, even though the driveshaft **10** projects in equal distances upwind, and downwind, from the cantilevered bearing means **5**.
   - The horizontally rotatable azimuthal directional orientation means **35** can be located at any height on the tower, with the tower divided into two sections, above and below, the upper section coaxially pivoting atop the lower section. In this case the upper section of the tower may even bend or project to one side, and thereby be coincident with downwind offset extension means.
   - The horizontally rotatable azimuthal directional orientation means **35** may also be located at the bottom of the tower, within the scope of this embodiment, so that the entire installation, including tower, rotates as a unit.
   - An advantage of this embodiment is reduced radial loading on the bearings, since the driveshaft is well balanced thereabout.
84. **Eighty-fourth Embodiment,** **Figs. 109** **and** **110****:**
   This embodiment is similar to the eighty-second embodiment, but with the downwind section **50** of the driveshaft being much longer than the upwind section **49** of the driveshaft, so that the downwind distance **B** is much greater than the upwind distance **A.** There are also many more rotors mounted along this longer downwind section. The weight of these additional rotors, and this extra length of shaft, as amplified by the leverage afforded by this additional length, are at least partially counterbalanced by a ballast counterweight **67,** mounted to the upwind section **49** of the driveshaft. It should be noted that the upwind section **49,** being pointed into the wind, may be constructed more robustly than the downwind section. Such stronger construction may be sufficiently heavy to act as a counterweight by itself, without the addition of a dedicated weight.
   The horizontal, or azimuthal component of the aim, is again controlled by the natural force of the wind causing lateral rotation of the cantilevered bearing means **5** and its projecting driveshaft **10** about horizontally rotatable azimuthal directional orientation means **35** (a horizontally rotatable pivot), upon which the cantilevered bearing means **5** is itself supported. The extra downwind length of the driveshaft comprises a downwind offset extension means **95,** which causes this passively oriented turbine to be aimed into the wind in the fashion of a weathervane. The vertical component, or elevation angle, is controlled by an elevation angle control means **36,** which in this case comprises a lifting mechanism **37,** that supports the upper end of the bearing support means **4,** the tubular enclosure that securely retains the bearings. This tubular bearing support means **4** pivots up or down about a pivot means **38** at its lower end. The action of this elevation angle control means **36** may be resilient in nature, and/or may be actively controlled, and/or may be configured to have a shock absorbing action. The lifting mechanism chosen for this embodiment comprises a resilient spring means **27,** as moderated by a damping means **34** such as a shock absorber. In excessively strong winds the downwind section is blown further downwind, rotating it lower, so that the spring is compressed. The action of this protective mechanism places the rotors more in line with the wind, so that they tend to shield one another from the full force of the wind, preventing overspeed, and thereby limiting damage from high winds. It is a type of furling behavior, that takes advantage of the multiple rotors being alinged along a common axis. This type of furling behavior, ironically, reduces power to the rotors by aligning them more fully with the wind direction.
   The elevation angle control means 36 may be so configured that the action of this elevation angle control means 36 may comprise one or more of the following:
   - The action may be elastic, or resilient in nature, with lifting mechanism **37** configured to have the action of a spring, with such resilient mechanisms being well known in the art of machinery.
   - The action may be actively controlled, with lifting mechanism **37** having features or properties known in the art that allow it to be actively adjusted.
   - It may also be configured to have a dampening, or shock absorbing action, many mechanisms for which are also known in the art.
   - It may be configured to simply have no movement in the vertical plane, that is a static arrangement, at some constant offset angle, as in the eighgty-second embodiment.
   - It may be configured to remain at a constant angle, but be adjustable.
   - The counterweight may be eliminated, at the expense of increased radial loading on the bearings, and increased stress on the elevation angle control means.
      The exact lifting mechanism **37** and pivot **38** shown are exemplary only, serving to illustrate the point that elevational aim may be influenced in general. Many simple alternative mechanisms known in the art may be adapted to comprise the elevation angle control means **36**.
85. **Eighty-fifth Embodiment, balanced configuration, active elevation angle control means, active azimuthal angle control means;** **Fig. 111****:**
   The Eighty-fifth Embodiment is similar to the previous three embodiments, except that the aim is actively controlled. It may have an equal number of upwind rotors and downwind rotors as in the eighty-third embodiment. In such a case, referring to **Fig. 108****,** horizontal distance **B** that the driveshaft projects downwind may be substantially **equal** to the horizontal distance **B** that it projects upwind, making this not a downwind machine, nor an upwind machine, but a balanced wind turbine; Rather than being automatically steered by the wind, it is provided with directional control. In this case the direction of azimuthal directional orientation means **35** is actively controlled by active azimuthal directional orientation control means **96,** illustrated here as a simple gear drive. Many means for such active directional control are well known in the art. The elevation angle is also actively controlled by elevation angle control means **36,** here, as in the previous embodiments comprising a lifting mechanism **37,** that supports the upper end of the bearing support means **4,** the tubular enclosure that securely retains the bearings. This tubular bearing support means **4** pivots about a pivot means **38** at its lower end. The lifting mechanism **37,** being actively controlled in this embodiment, is graphically represented as a simple gear drive unit.
   - An advantage of this embodiment over the eighty-second embodiment is reduced radial loading on the bearings, since the driveshaft is well balanced thereabout.
   - A further advantage is that power may be transmitted to ground level by a simple cable, rather than slip rings, since the active azimuthal directional orientation control means **96** can be used to keep a power cable from becoming excessively twisted in one direction.
   - This arrangement is capable of generating an offset angle α in either the vertical plane, the horizontal plane, or obliquely, by a combination of horizontal and vertical adjustment.
   - This arrangement can also be turned sideways to the wind as a means of protection from extremely high winds. This is a typical furling behavior, actively controlled.
86. **Eighty-sixth Embodiment: Downwind, self-orienting horizontal driveshaft with passively determined offset angle α in the horizontal plane;** **Fig. 112****:**
   In the previous, eighty-fifth embodiment, the offset angle α could be in the horizontal plane, the vertical plane, or both.
   In this embodiment, the driveshaft **10** is substantially horizontal, with the offset angle α being in the horizontal plane. This is a predominantly downwind machine, with distance **B** that the downwind section **50** of the driveshaft projects downwind being greater than distance **A** that the upwind section **49** of the shaft projects upwind. In this case, the offset angle α is passively determined by a fluid reactive offset angle inducing means **94,** illustrated as a simple fin, or paddle, attached to the azimuthal directional orientation means **35.** This simple paddle, or fin, tends to be blown downwind, causing the assembly to which it is attached, including the driveshaft **10,** to become offset from the wind direction, to a point where the offset force is balanced by the counteracting force of the downwind section of the driveshaft and its attached rotors undergoing their natural, downwind, self-orienting, weathervane-like behavior. The size and angle of the fin **94** are adjusted to provide an optimal offset angle α to maximize power by allowing each rotor to receive a substantial portion of fresh wind, substantially undisturbed by upwind rotors. The fin **94** may also be resilient, or may be resiliently mounted, so that in extremely high winds, it is blown into a less effective position, so that the line of rotors becomes more aligned with the wind, so that the wind shadows of upwind rotors protect downwind rotors.
87. **Eighty-seventh Embodiment: Counter-rotating, balanced, downwind mounting;** **Fig. 113****:**
   The driveshaft is physically divided into two counter-rotating halves, the upwind half **49,** and the downwind half **50.** The upwind half rotates clockwise as seen from downwind, and the downwind half rotates counterclockwise. The load **6** is also divided into counterrotating halves, an outer half **91,** which, being driven by the upwind section **49** of the driveshaft, rotates clockwise, and an inner half **92** which rotates counterclockwise with the downwind section **50** of the driveshaft, as viewed from downwind. It is easy to see that the effective relative rate of rotation of the two halves **91, 92** of the load is approximately doubled by this counterrotation. This faster rate of relative rotation is desirable from the standpoint that electricity is more readily generated by most contemporary alternators and generators at such a faster rotation rate, with gearboxes usually being employed to achieve such a faster rate. There are two separate cantilevered bearing means **5** within the single bearing support means **4,** supporting two separate counter-rotating axles **15.**
   While the driveshafts, in aggregate, are balanced about the bearing support means **4,** the entire assembly is shifted downwind of horizontally rotatable azimuthal directional orientation means **35** (the horizontally rotatable pivot). Here, the elongate, tubular, bearing support means **4,** being mounted to elevation angle control means **36** in an offset manner, serves the function of downwind offset extension means **95,** and is so labeled. Such an offset configuration is passively self-aiming, even though the upwind section **49** and the downwind section **50** of the driveshaft are the same length, with an equal number of rotors upwind and downwind.
   - An advantage of this embodiment is a faster effective relative rotation rate of the load, since it is divided into counter-rotating halves.
   - A disadvantage is increased radial loading on the bearings, since each half of the driveshaft is supported in a fully cantilevered manner therefrom, rather than being balanced as a single unit about the bearings.
88. **Eighty-eighth Embodiment: Multiple driveshafts mounted on a rotating frame;** **Fig. 114****:**
   This embodiment is similar to the eighty-second embodiment, except that in this embodiment, a multiplicity of separate driveshafts, here illustrated as two, are supported upon a rotating frame comprising supporting armature means **93.** Here each driveshaft **10** has more downwind rotors than upwind rotors, as in the first embodiment, making this a passively oriented downwind machine. The extra length of each downwind section **50** of the driveshafts **10** comprise downwind offset extension means **95,** which causes this machine to aim itself into the wind in the manner of a weathervane.
   - This same passively oriented downwind behavior can also be accomplished with perfectly balanced driveshafts, having the same number of upwind and downwind rotors, if the supporting armature means **93** comprises a downwind offset extension means **95,** such as disclosed in the eighty-third embodiment.
   - As illustrated, each driveshaft powers its own separate load, although the rotation of both driveshafts may alternatively be mechanically coupled to drive a single load, within the scope of this embodiment. Means for such mechanical coupling are well known in the art of machinery.
   - The two driveshafts with their attached rotors may be configured to counter-rotate. This eliminates any residual torque imbalances in the machine.
   - A number, different than two, of separate driveshafts **10** may be supported by the supporting armature means **93,** within the scope of this embodiment.
   - The supporting armature means may extend in the vertical direction, or may even comprise an extension of the support tower **90,** so that multiple turbines may be stacked vertically.
89. **Eighty-ninth Embodiment: Bearing support means comprises longitudinally extended support frame -** **Fig. 115****:**
   This embodiment is similar to the eighty-second embodiment with the bearing support means 4 additionally comprising a longitudinally extended support frame **101,** reducing the leverage exerted by the ends of the shaft on the central portion. This support frame, along with the bearings **11,** helps to support the upwind **49,** and downwind **50** sections of the driveshaft **10,** at a substantially large distance from the center, so that the driveshaft **10,** at its midpoint, is not overly stressed by bending forces. Ideally, the longitudinally extended support frame **101** acts to place the bearings at or near the midpoint of the upwind section **49** and the downwind section **50** of the driveshaft **10,** largely removing the bending stresses from the bearings of the load **6.** This support frame 101 may extend sufficiently far that one or more rotors **13** may be located between the bearings **11** and the load **6,** as shown. This longitudinally extended support frame **101,** together with the extra length of the downwind section **50** of the driveshaft, comprise a downwind offset extension means **95,** making this a predominantly downwind, or self-aiming, wind turbine.
90. **Ninetieth Embodiment:** **Fig. 116****:** This embodiment is similar to the previous one, having the upwind section **49,** and the downwind section **50** of the driveshaft supported substantially near their midpoints by a longitudinally extended support frame **101.** In this case the support frame 101 comprises three radial struts **105,** extending substantially perpendicular to the driveshaft, projecting outward from near its midpoint, three oblique longitudinal struts extending upwind from the ends of these radial struts, to connect to the upwind bearing **11,** and three oblique longitudinal struts extending downwind from the ends of the, radial struts to connect to the downwind bearing **11.** A set of circumferential guy wires **104** connects to ends of these struts to stabilize them. In this case the upwind section **49,** and the downwind section **50** of the driveshaft are substantially the same length, with the same number of rotors. Azimuthal guidance is, in this case, provided by a passive aerodynamic azimuthal aiming means (tail fin) **106,** which, by extending downwind, and serves to maintain a heading of this wind turbine into the wind, by its tendency to be blown downwind similarly to the tails of other wind turbines.
91. **Ninety-first embodiment:** **Fig. 117****:**
   This embodiment is similar to the previous one except that the longitudinally extended supporting frame **101** comprises oblique longitudinal guy wires **103,** rather than oblique longitudinal struts **102,** to help support the bearings **11.** These guy wires, being under tension, tend to apply a thrust load on the bearings **11,** while helping to support them.
92. **Ninety-second embodiment:** **Fig. 118****:**
   This embodiment is similar to the ninetieth embodiment, except that the upper oblique longitudinal struts are replaced by guy wires **103.** These guy wires, tend to be under tension, while the lower oblique longitudinal struts **102** tend to be under compression.

Many variations and combinations of the features disclosed in the above embodiments may prove effective, such spacing the tails further apart than one for every rotor, multiple lifting bodies spaced at intervals along the shaft, etc. These are only examples. Other modifications of the present invention will occur to those skilled in the art, and as such the scope of the present invention should not be limited by the details of the above disclosure, but should be interpreted from the broadest meaning of the following claims.

## Claims

1. A fluid current turbine, comprising:
a base (2);
an elongate driveshaft (10) projecting from said base (2); and
a cantilevered bearing means (5) that supports said driveshaft (10) in a substantially rotationally free manner relative to said base (2);
said fluid current turbine **characterized by**:
a series of rotors (13) attached to said driveshaft (10), each of said rotors (13) comprising a substantially coplanar set of blades (12) that define a region from which power is exchanged with a fluid, wherein each adjacent pair of said rotors (13) are separated by a spaced interval;
wherein said cantilevered bearing means (5) support said driveshaft (10) in a direction offset from a fluid current direction but sufficiently parallel to said fluid current direction for said attached rotors (13) to effectively exchange power with said fluid; and wherein rotors (13) are axially separated by a sufficient distance to allow an admixture of at least some fresh fluid, substantially undisturbed by relative upcurrent rotors (13), to enter the fluid stream passing through each said region.

2. The fluid current turbine of any preceding claim, wherein said rotors (13) comprise horizontal axis type rotors (13).

3. The fluid current turbine of any preceding claim, additionally comprising at least one vertical axis type rotor (44).

4. The fluid current turbine of any preceding claim, wherein said base (2) comprises at least one vertical axis turbine.

5. The fluid current turbine of any preceding claim, wherein said rotors (13) are coaxial with said elongate driveshaft (10).

6. The fluid current turbine of any preceding claim, wherein said elongate driveshaft (10) comprises a directionally compliant section (8) configured to permit said elongate driveshaft (10) to bend along its length.

7. The fluid current turbine of any preceding claim, wherein said base (2) is mounted on an elevating structure (90).

8. The fluid current turbine of any preceding claim, wherein said elongate driveshaft (10) comprises an upcurrent section (49) and a downcurrent section (50) projecting from said base (2) and wherein at least one of said rotors (13) is attached to said upcurrent section (49) of said elongate driveshaft (10) and at least one of said series of rotors (13) is attached to said downcurrent section (50) of said elongate driveshaft (10).

9. The fluid current turbine of any preceding claim, wherein said spaced intervals separating said rotors (13) are equal to one another.

10. The fluid current turbine of any preceding claim, wherein cantilevered bearing means (5) comprises a bearing (11) supported by a downcurrent offset extension means (95), which serves to provide an offset distance from said bearing (11) to a horizontally rotatable azimuthal directional orientation means (35), about which said extension means (95), said bearing (11), and said elongate driveshaft (10) are free to rotate as a unit in the horizontal plane, in the manner of a weathervane.

11. The fluid current turbine of any of Claims 8 to 10, wherein said downcurrent section (50) of said elongate driveshaft (10) is substantially equal in length to said upcurrent section (49) of said driveshaft (10).

12. The fluid current turbine of any of Claims 8 to 10, wherein said upcurrent section (49) of said elongate driveshaft (10) is shorter than said downcurrent section (50) of said elongate driveshaft (10) such that said downcurrent section (50) is caused to be blown substantially downcurrent of said base (2) so that said fluid current turbine is caused to be aimed substantially into the current.

13. The fluid current turbine of any of Claims 8 to 12, wherein said rotors (13) are configured such that a fluid force acting on said rotors (13) of said downcurrent section (50) is predominant over a fluid force acting on said rotors (13) of said upcurrent section (49), thereby tending to orient said downcurrent section (50) downcurrent of said upcurrent section (49).

14. The fluid current turbine of any preceding claim, additionally comprising an active aiming mechanism (36, 96) configured to accomplish a directional aim of said elongate driveshaft (10) relative to said fluid current direction.

15. The fluid current turbine of any preceding claim, wherein a directional aim of said elongate driveshaft (10) is offset from said fluid current direction in one of a horizontal or vertical plane.

16. The fluid current turbine of any preceding claim, wherein said cantilevered bearing means (5) comprises a fluid reactive offset angle inducing means (94).

17. The fluid current turbine of any preceding claim, wherein said cantilevered bearing means (5) is configured to permit said driveshaft (10) to be selectively moved towards a parallel orientation with said fluid current direction to reduce said power exchange with said fluid.

18. The fluid current turbine of any preceding claim, wherein said elongate driveshaft (10) is offset from said fluid current direction at an oblique angle.

19. The fluid current turbine of any of Claims 8 to 18, wherein said downcurrent section (50) of said driveshaft (10) is rotatable separately from said upcurrent section (49) of said driveshaft (10) and said downcurrent section (50) and said upcurrent section (49) are configured to rotate in opposite directions from one another.

20. The fluid current turbine of any preceding claim, wherein said fluid current turbine is a windmill and wherein said base (2) is configured to support said windmill in a marine environment (1), said base (2) comprising a floatation means (3, 68), a downward force means (67, 69) and a base rotation resistance means (65).

21. The fluid current turbine of any preceding claim, wherein one or more of said rotors (13) comprise atmospherically buoyant blades (12) having positive buoyancy serving to elevate said one or more rotors (13).

22. The fluid current turbine of claim 14 or 15, wherein said fluid current turbine is configured to propel an associated vehicle.

23. The fluid current turbine of claim 22, wherein said vehicle is a boat (79).

24. The fluid current turbine of claim 14 or 15, wherein said fluid current turbine is configured to provide lift for an associated vehicle.

25. The fluid current turbine of claim 23 or 24, additionally comprising a motor 72 capable of turning said driveshaft (10).

26. The fluid current turbine of claim 23, wherein said fluid current turbine drives a propeller (77) of said boat (79).

27. The fluid current turbine of any preceding claim, wherein said cantilevered bearing means (5) comprises a buoyant lifting body (32).

28. The fluid current turbine of any preceding claim, wherein said cantilevered bearing means (5) comprises an aerodynamic lifting body (31).

29. The fluid current turbine of any preceding claim, wherein said cantilevered bearing means (5) comprises aerodynamic lift generated by at least one of said rotors (13), by virtue of its angle of attack with respect to the wind direction, whereby said rotor flies in the manner of a kite or tethered gyrocopter.

30. The fluid current turbine of claim 29, further comprising a means for influencing said angle of attack of said rotors (13).

31. The fluid current turbine of claims 29 to 30, wherein said rotors (13) comprise tilting hubs (48).

32. The fluid current turbine of claims 29 to 30, wherein said means of influencing said angle of attack of said rotor (13) comprises a tail (22).

33. The fluid current turbine of claim 32, wherein said tail (22) has an adjustable elevator surface 45.

34. The fluid current turbine claims 29 to 32, wherein said means of influencing said angle of attack of said rotor (13) further comprises a nose boom (28) tethered by a linear tension transmission means (29).

35. The fluid current turbine of claims 29 to 30, wherein said means of influencing said angle of attack of said rotor (13) comprises a means for directional bias (61), armature means (16), and longitudinal lashing means (20).

36. The fluid current turbine of any of claims 8 to 35, additionally comprising a counterweight (67) coupled to said upcurrent section (49).

37. The fluid current turbine of any of claims 8 to 36, wherein said cantilevered bearing means 5 comprises an elongate support frame (101) and a first bearing (11) and a second bearing (11) supported in a spaced orientation along said support frame (101).

38. The fluid current turbine of claim 37, additionally comprising at least one rotor (13) secured to said elongate driveshaft (10) between said first and second bearings (11).

39. The fluid current turbine of claims 37 or 38, wherein said first and second bearings (11) support approximately a midpoint of said upcurrent (49) and said downcurrent (50) sections of said elongate driveshaft, respectively.

40. The fluid current turbine of any preceding claim, wherein said elongate driveshaft (10) comprises an open latticework structure (53) comprising a geometric pattern (52) of interconnected struts (51, 54, 41, 42, 43).

41. The fluid current turbine of claim 40, wherein at least a portion of said struts (54, 41, 42, 43) are aerodynamically configured to harness the fluid current and assist in rotating said elongate driveshaft (10).

42. The fluid current turbine of any preceding claim, wherein said fluid is air or water.

43. The fluid current turbine as claimed in claim 20, wherein said floatation body comprises a boat (79).

44. The fluid current turbine as claimed in claim 1, wherein said bearing (11) is supported on a directionally compliant mount (39).

45. The fluid current turbine as claimed in claim 44, wherein said directionally compliant mount (39) comprises a spring.

46. A method of generating power from a fluid flow, comprising:
projecting an elongate driveshaft (10) that is supported by a cantilevered bearing means (5) in a direction offset from a direction of said fluid flow; passing the fluid flow through a region defined by each of a series of rotors (13), each comprising a coplanar set of blades, attached to said elongate driveshaft (10) at a spaced interval sufficient to allow an admixture of at least some fresh wind, substantially undisturbed by relative upwind rotors (13), to enter the wind stream passing through each region;
spinning said rotors (13) to effectively harness said fluid flow, thereby causing rotation of said elongate driveshaft (10); and
drawing useful power from said rotation of said elongate driveshaft (10).

47. The method of claim 46, wherein said fluid is air.

48. The method of claim 46, wherein said spaced intervals are equal to one another.

49. The method of any of claims 47 or 48, wherein said rotors (13) comprise horizontal axis type rotors (13).

50. The method of any of claims 47 to 49, wherein said rotors (13) are coaxial with said elongate driveshaft (10).

51. The method of any of claims 47 to 50, additionally comprising providing said elongate driveshaft (10) with a directionally compliant section (8) configured to permit said driveshaft (10) to bend along its length.

52. The method of any of claims 47 to 50, additionally comprising supporting said elongate driveshaft at an intermediate location (5, 35, 90) such that said elongate driveshaft is divided into an upwind section (49) and a downwind section (50).

53. The method of claim 52, wherein said downwind section (50) and said upwind section (49) of said elongate driveshaft (10) are substantially equal in length.

54. The method of claims 52 or 53, additionally comprising permitting said elongate driveshaft (10) to directionally orient substantially freely relative to said intermediate location (5,35,90).

55. The method of any of claims 52 to 54, additionally comprising configuring said rotors (13) such that a force acting on said rotors (13) of said downwind section (50) is greater than a force acting on said rotors of said upwind section (49) such that said downwind section (50) is blown substantially downwind of said intermediate location (35, 90).

56. The method of any of claims 52 to 55, additionally comprising configuring said downwind section (50) of said elongate driveshaft (10) to rotate in a direction opposite to the rotation of said upwind section (49) of said elongate driveshaft (10).

57. The method of any of claims 47 to 56, additionally comprising providing an active aiming mechanism (36, 37, 96) configured to accomplish a directional aim of said elongate driveshaft (10) relative to said direction of said wind flow.

58. The method of any of claims 47 to 57, wherein said projecting step comprises offsetting said elongate driveshaft (10) from said direction of said wind flow direction in one of a vertical, horizontal or oblique plane.

59. The method of any of claims 47 to 58, additionally comprising supporting said elongate driveshaft in a marine environment (1) on a base (2), said base (2) comprising a floatation means (3, 68), applying a downward force (67, 69) to said base (2) to maintain said base (2) in an upright orientation, and resisting rotation (65) of said base (2).

60. The method of any of claims 47 to 59, additionally comprising applying an elevating force to said elongate driveshaft (10) with one or more of an atmospherically buoyant blade (12), an aerodynamic lifting body (31), and a buoyant lifting body (32).

61. The method of any of claims 52 to 60, additionally comprising applying a counterweight (67) force to said upwind section (49) of said elongate driveshaft (10).

62. The method of any of claims 52 to 61, additionally comprising supporting said elongate driveshaft (10) at a first position and a second position spaced from said first position such that said intermediate section is defined between said first and second positions.

63. The method of claim 62, additionally comprising securing at least one rotor (13) to said elongate driveshaft (10) within said intermediate section.

64. The method of any of claims 47 to 63, additionally comprising constructing said elongate driveshaft (10) from an open latticework structure (53) comprising a geometric pattern (41, 42, 43, 52) of interconnected struts (51, 54).

65. The method of claim 64, wherein at least a portion of said struts (41, 42, 43, 54) are aerodynamically configured to harness the wind and assist in rotating said elongate driveshaft (10).

## Patentansprüche

1. Strömungsturbine, umfassend:
eine Basis (2);
eine von der Basis (2) ausladende langgestreckte Antriebswelle (10) und
eine freitragende Lagereinrichtung (5), die die Antriebswelle (10) gegenüber der Basis (2) frei drehbar trägt;
wobei die Strömungsturbine **dadurch gekennzeichnet ist, dass**:
eine Reihe von an der Antriebswelle (10) befestigten Rotoren (13), wobei jeder der Rotoren (13) einen im Wesentlichen koplanaren Satz an Rotorblättern (12) umfasst, die einen Bereich definieren, aus dem Energie mit einem Fluid ausgetauscht wird, wobei jedes benachbarte Paar an Rotoren (13) durch einen räumlichen Abstand getrennt sind;
wobei die freitragende Lagereinrichtung (5) die Antriebswelle (10) in einer Richtung versetzt zu einer Strömungsrichtung, aber hinlänglich parallel zu der Strömungsrichtung für die angebrachten Rotoren (13) trägt, um wirksam Energie mit dem Fluid auszutauschen; und wobei die Rotoren (13) axial durch einen hinlänglichen Abstand getrennt sind, um eine Beimischung von wenigstens Einigem frischem Fluid zu gewährleisten, im Wesentlichen unbeeinflusst durch relativ stromaufwärtige Rotoren (13), um so in den Fluidstrom einzutreten, der durch jeden Bereich hindurchtritt.

2. Strömungsturbine nach einem der vorhergehenden Ansprüche, bei der die Rotoren (13) eine Ausführung von Rotoren (13) mit horizontaler Achse umfassen.

3. Strömungsturbine nach einem der vorhergehenden Ansprüche, ferner umfassend wenigstens einen Rotor (44) mit vertikaler Achse.

4. Strömungsturbine nach einem der vorgehenden Ansprüche, wobei die Basis (2) wenigstens eine Turbine mit vertikaler Achse umfasst.

5. Strömungsturbine nach einem der vorhergehenden Ansprüche, bei der die Rotoren (13) koaxial zu der langgestreckten Antriebswelle (10) angeordnet sind.

6. Strömungsturbine nach einem der vorhergehenden Ansprüche, bei der die langgestreckte Antriebswelle (10) einen richtungsnachgiebigen Abschnitt (8) umfasst, ausgebildet um der langgestreckten Antriebswelle (10) zu erlauben, sich entlang ihrer Länge zu biegen.

7. Strömungsturbine nach einem der vorhergehenden Ansprüche, bei der die Basis (2) auf einem erhöhten Bauwerk (90) angebracht ist.

8. Strömungsturbine nach einem der vorhergehenden Ansprüche, bei der die langgestreckte Antriebswelle (10) einen stromaufwärtigen Abschnitt (49) und einen stromabwärtigen Abschnitt (50) umfasst, die sich von der Basis (2) aus erstrecken, und wobei wenigstens einer der Rotoren (13) an dem stromaufwärtigen Abschnitt (49) der langgestreckten Antriebswelle (10) angebracht ist und wenigstens einer der Reihe von Rotoren (13) an dem stromabwärtigen Abschnitt (50) der langgestreckten Antriebswelle (10) angebracht ist.

9. Strömungsturbine nach einem der vorhergehenden Ansprüche, bei der die räumlichen Abstände, die die Rotoren (13) voneinander trennen, zueinander gleich sind.

10. Strömungsturbine nach einem der vorhergehenden Ansprüche, bei der die freitragende Lagereinrichtung (5) umfasst: ein Lager (11), getragen durch ein stromabwärtig versetztes Verlängerungsmittel (95), das dazu dient, einen Versatzabstand von dem Lager (11) zu einer horizontal drehbaren die azimuthale Richtung ausrichtenden Einrichtung (35) zu gewährleisten, um die das Verlängerungsmittel (95), das Lager (11) und die langgestreckte Antriebswelle (10) sich als eine Einheit frei in der horizontalen Ebene drehen können nach Art einer Wetterfahne.

11. Strömungsturbine nach einem der Ansprüche 8 bis 10, bei der der stromabwärtige Abschnitt (50) der langgestreckten Antriebswelle (10) im Wesentlichen gleich zu der Länge des stromaufwärtigen Abschnittes (49) der Antriebswelle (10) ist.

12. Strömungsturbine nach einem der Ansprüche 8 bis 10, bei der der stromaufwärtige Abschnitt (49) der langgestreckten Antriebswelle (10) kürzer ist als der stromabwärtige Abschnitt (50) der langgestreckten Antriebswelle (10), so, dass der stromabwärtige Abschnitt (50) im Wesentlichen stromabwärts von der Basis (2) geblasen wird, so dass die Strömungsturbine dazu gebracht wird, im Wesentlichen in die Strömung zu zeigen.

13. Strömungsturbine nach einem der Ansprüche 8 bis 12, bei der die Rotoren (13) so konfiguriert sind, dass eine Strömungskraft, die auf die Rotoren (13) des stromabwärtigen Abschnitts (50) wirkt, stärker ist, als eine Strömungskraft, die auf die Rotoren (13) des stromaufwärtigen Abschnitts (49) wirkt, dadurch dazu tendierend den stromabwärtigen Abschnitt (50) stromabwärts des stromaufwärtigen Abschnitts (49) auszurichten.

14. Strömungsturbine nach einem der vorhergehenden Ansprüche, ferner umfassend: einen aktiven Ausrichtungsmechanismus (36, 96), ausgebildet zur Ausrichtung der langgestreckten Antriebswelle (10) relativ zur Strömungsrichtung.

15. Strömungsturbine nach einem der vorhergehenden Ansprüche, bei der eine Ausrichtung der langgestreckten Antriebswelle (10) in einer horizontalen oder vertikalen Ebene zu der Strömungsrichtung versetzt ist.

16. Strömungsturbine nach einem der vorhergehenden Ansprüche, bei der die freitragende Lagereinrichtung (5) eine strömungsreaktive einen Versatzwinkel induzierende Einrichtung (94) umfasst.

17. Strömungsturbine nach einem der vorhergehenden Ansprüche, bei der die freitragende Lagereinrichtung (5) ausgebildet ist, um eine selektive Bewegung der Antriebswelle (10) zu einer parallelen Ausrichtung mit der Strömungsrichtung zu ermöglichen, um den Energieaustausch mit der Strömung zu reduzieren.

18. Strömungsturbine nach einem der vorhergehenden Ansprüche, bei der die langgestreckte Antriebswelle (10) zu der Strömungsrichtung um einen spitzen Winkel versetzt ist.

19. Strömungsturbine nach einem der Ansprüche 8 bis 18, bei der der stromabwärtige Abschnitt (50) der Antriebswelle (10) separat von dem stromaufwärtigen Abschnitt (49) der Antriebswelle (10) drehbar ist und der stromabwärtige Abschnitt (50) und der stromaufwärtige Abschnitt (49) so ausgebildet sind, dass sie sich in gegensätzlicher Richtung voneinander drehen.

20. Strömungsturbine nach einem der vorhergehenden Ansprüche, bei der die Strömungsturbine eine Windmühle ist und bei der die Basis (2) so ausgebildet ist, dass sie die Windmühle in einer marinen Umgebung (1) trägt, wobei die Basis (2) einen Schwimmkörper (3, 68), ein nach unten wirkendes Kraftmittel (67, 69) und eine Drehwiderstandsvorrichtung (65) der Basis umfasst.

21. Strömungsturbine nach einem der vorhergehenden Ansprüche, bei der einer oder mehrere der Rotoren (13) atmosphärische Auftriebsflügel (12) umfassen, die einen positiven Auftrieb haben und dazu dienen, den einen oder die mehreren Rotoren (13) anzuheben.

22. Strömungsturbine nach Anspruch 14 oder 15, bei der die Strömungsturbine ausgebildet ist zum Antrieb eines zugeordneten Fahrzeugs.

23. Strömungsturbine nach Anspruch 22, bei der das Fahrzeug ein Boot (79) ist.

24. Strömungsturbine nach Anspruch 14 oder 15, bei der die Strömungsturbine ausgebildet ist, um einen Auftrieb für ein verbundenes Fahrzeug bereitzustellen.

25. Strömungsturbine nach Anspruch 23 oder 24, ferner umfassend einen Motor (72) zum Drehen der Antriebswelle (10).

26. Strömungsturbine nach Anspruch 23, bei der die Strömungsturbine einen Propeller (77) des Bootes (79) antreibt.

27. Strömungsturbine nach einem der vorhergehenden Ansprüche, bei der die freitragende Lagereinrichtung (5) einen Auftriebshebekörper (32) umfasst.

28. Strömungsturbine nach einem der vorhergehenden Ansprüche, bei der die freitragende Lagereinrichtung (5) einen aerodynamischen Hebekörper (31) umfasst.

29. Strömungsturbine nach einem der vorhergehenden Ansprüche, bei der die freitragende Lagereinrichtung (5) einen aerodynamischen Auftrieb umfasst, erzeugt durch wenigstens einen der Rotoren (13) aufgrund seines Angriffswinkels in Bezug auf die Windrichtung, wobei der Rotor nach Art eines Drachens oder gefesselten Tragschraubers fliegt.

30. Strömungsturbine nach Anspruch 29, ferner umfassend eine Vorrichtung zum Beeinflussen des Angriffswinkels der Rotoren (13).

31. Strömungsturbine nach Anspruch 29 bis 30, bei der die Rotoren (13) schwenkbare Naben (48) umfassen.

32. Strömungsturbine nach Anspruch 29 bis 30, bei der die Vorrichtung zum Beeinflussen des Angriffswinkels der Rotoren (13) ein Leitwerk (22) umfasst.

33. Strömungsturbine nach Anspruch 32, bei der das Leitwerk (22) eine einstellbare Höhenruderoberfläche (45) hat.

34. Strömungsturbine nach Anspruch 29 bis 32, bei der die Vorrichtung zum Beeinflussen des Angriffswinkels des Rotors (13) ferner einen Auslegerkopf (28) umfasst, eingespannt durch eine lineare Zugübertragungsvorrichtung (29).

35. Strömungsturbine nach Anspruch 29 bis 30, bei der die Vorrichtung zur Beeinflussung des Angriffswinkels des Rotors (13) eine Einrichtung zum gerichteten Neigen (61), eine Stütze (16) und eine Einrichtung zur Längszurrung (20) umfasst.

36. Strömungsturbine nach einem der Ansprüche 8 bis 35, ferner enthaltend ein Gegengewicht (67), das mit dem stromaufwärtigen Abschnitt (49) verbunden ist.

37. Strömungsturbine nach einem der Ansprüche 8 bis 36, bei der die freitragende Lagereinrichtung (5) einen verlängerten Tragerahmen (101), ein erstes Lager (11) und ein zweites Lager (11) umfasst, gestützt in einer einen Abstand aufweisenden Ausrichtung entlang des Tragerahmens (101).

38. Strömungsturbine nach Anspruch 37, ferner enthaltend wenigstens einen Rotor (13), der an der langgestreckten Antriebswelle (10) zwischen dem ersten und zweiten Lager (11) befestigt ist.

39. Strömungsturbine nach Anspruch 37 oder 38, bei der das erste und zweite Lager (11) ungefähr einen Mittelpunkt des stromaufwärtigen (49) bzw. stromabwärtigen (50) Abschnittes der langgestreckten Antriebswelle stützen.

40. Strömungsturbine nach einem der vorhergehenden Ansprüche, bei der die langgestreckte Antriebswelle (10) eine offene Gitterstruktur (53) umfasst, enthaltend ein geometrisches Muster (52) von miteinander verbundenen Streben (51, 54, 41, 42, 43).

41. Strömungsturbine nach Anspruch 40, bei der wenigstens ein Teil der Streben (54, 41, 42, 43) aerodynamisch ausgebildet sind, so dass sie die Strömung nutzbar machen und dazu beitragen, die langgestreckte Antriebswelle (10) zu drehen.

42. Strömungsturbine nach einem der vorhergehenden Ansprüche, bei der das Fluid Luft oder Wasser ist.

43. Strömungsturbine nach Anspruch 20, bei der der Schwimmkörper ein Boot (79) umfasst.

44. Strömungsturbine nach Anspruch 1, bei der das Lager (11) von einer sich richtungsnachgiebigen Halterung (39) getragen wird.

45. Strömungsturbine nach Anspruch 44, bei der die sich richtungsnachgiebige Halterung (39) eine Feder umfasst.

46. Verfahren zur Erzeugung von Energie aus einem Fluidstrom, umfassend:
Auskragen einer langgestreckten Antriebswelle (10), die durch eine freitragende Lagereinrichtung (5) mit einem Richtungsversatz zur Richtung des Fluidstroms getragen wird;
Leiten des Fluidstroms durch einen Bereich, der durch jede einer Reihe von Rotoren (13) definiert ist, jeweils umfassend einen coplanaren Satz an Rotorblättern, die an der langgestreckten Antriebswelle (10) in einem räumlichen Abstand angebracht sind, der ausreichend ist um eine Beimischung von wenigstens einigem frischem Wind zu ermöglichen, im Wesentlichen unbeeinflusst durch relativ stromaufwärtige Rotoren (13), so dass der Windstrom durch jeden Bereich hindurch tritt;
Drehen der Rotoren (13), um wirkungsvoll den Fluidstrom nutzbar zu machen, dadurch eine Drehung der langgestreckten Antriebswelle (10) bewirkend; und
Abnehmen von nutzbarer Energie aus der Drehung der langgestreckten Antriebswelle (10).

47. Verfahren nach Anspruch 46, bei dem das Fluid Luft ist.

48. Verfahren nach Anspruch 46, bei dem die räumlichen Abstände zueinander gleich sind.

49. Verfahren nach einem der Ansprüche 47 oder 48, bei dem die Rotoren (13) eine Ausführung von Rotoren (13) mit horizontaler Achse umfassen.

50. Verfahren nach einem der Ansprüche 47 bis 49, bei dem die Rotoren (13) koaxial zu der langgestreckten Antriebswelle (10) angeordnet sind.

51. Verfahren nach einem der Ansprüche 47 bis 50, ferner umfassend: Bereitstellen der langgestreckten Antriebswelle (10) mit einem richtungsnachgiebigem Abschnitt (8), angepaßt derart, dass er der Antriebswelle (10) erlaubt, sich entlang ihrer Länge zu biegen.

52. Verfahren nach einem der Ansprüche 47 bis 50, ferner umfassend: Tragen der langgestreckten Antriebswelle (10) an einer mittleren Position (5,35,90), so dass die langgestreckte Antriebswelle (10) in einen Luv-Abschnitt (49) und einen Lee-Abschnitt (50) aufgeteilt ist.

53. Verfahren nach Anspruch 52, bei dem der Lee-Abschnitt (50) und der Luv-Abschnitt (49) der langgestreckten Antriebswelle (10) im Wesentlichen von gleicher Länge sind.

54. Verfahren nach den Ansprüchen 52 oder 53, ferner umfassend: Ermöglichen, dass sich die langgestreckte Antriebswelle (10) im Wesentlichen frei und relativ zur mittleren Position (5, 35, 90) ausrichtet.

55. Verfahren nach einem der Ansprüche 52 bis 54, ferner umfassend: Ausbilden der Rotoren (13), so dass eine Kraft, die auf die Rotoren (13) des Lee-Abschnitts (50) wirkt, größer ist als die Kraft, die auf die Rotoren des Luv-Abschnitts (49) wirkt, so dass der Lee-Abschnitt (50) im Wesentlichen nach Lee von der mittleren Position (35, 90) geblasen wird.

56. Verfahren nach einem der Ansprüche 52 bis 55, ferner umfassend: Ausbilden des Lee-Abschnitts (50) der langgestreckten Antriebswelle (10), so dass diese in einer Richtung entgegen der Drehung des Luv-Abschnitts (49) der langgestreckten Antriebswelle (10) rotiert.

57. Verfahren nach einem der Ansprüche 47 bis 56, ferner umfassend: Bereitstellen eines aktiven Ausrichtungsmechanismus (36, 37, 96), ausgebildet zum Erzielen einer richtungsweisen Ausrichtung der langgestreckten Antriebswelle (10) relativ zur Richtung des Windstroms.

58. Verfahren nach einem der Ansprüche 47 bis 57, bei dem der Schritt des Auskragens umfasst: Versetzen der langgestreckten Antriebswelle (10) aus der Windstromrichtung in einer vertikalen, horizontalen oder schiefen Ebene.

59. Verfahren nach einem der Ansprüche 47 bis 58, ferner umfassend: Tragen der langgestreckten Antriebswelle in einer marinen Umgebung (1) auf einer Basis (2), wobei die Basis (2) eine Schwimmvorrichtung (3, 68) umfasst; Anwenden einer nach unten gerichteten Kraft (67, 69) auf die Basis (2), um die Basis (2) in einer aufrechten Orientierung zu halten; und Widersetzen einer Drehung (65) der Basis (2).

60. Verfahren nach einem der Ansprüche 47 bis 59, ferner umfassend: Aufbringen einer hebenden Kraft auf die langgestreckte Antriebswelle (10) mit einem oder mehreren aus atmosphärischen Auftriebsflügeln (12), einem aerodynamischen Hubkörper (31), und einem Auftriebshubkörper (32).

61. Verfahren nach einem der Ansprüche 52 bis 60, ferner umfassend: Aufbringen einer Gegengewichtskraft (67) auf den Luv-Abschnitt (49) der langgestreckten Antriebswelle (10).

62. Verfahren nach einem der Ansprüche 52 bis 61, ferner umfassend: Stützen der langgestreckten Antriebswelle (10) an einer ersten Position und einer zweiten Position mit einem Abstand von der ersten Position derart, dass der mittlere Abschnitt zwischen der ersten und zweiten Position gebildet ist.

63. Verfahren nach Anspruch 62, ferner umfassend: Festlegen wenigstens eines Rotors (13) an der langgestreckten Antriebswelle (10) innerhalb des mittleren Abschnitts.

64. Verfahren nach einem der Ansprüche 47 bis 63, ferner umfassend: Aufbau der langgestreckten Antriebswelle (10) aus einer offenen Gitterstruktur (53), enthaltend ein geometrisches Muster (41, 42, 43, 52) von miteinander verbundenen Streben (51, 54).

65. Verfahren nach Anspruch 64, bei dem wenigstens ein Teil der Streben (41, 42, 43, 54) aerodynamisch ausgebildet sind, um den Wind zu nutzen und die Drehung der langgestreckten Antriebswelle (10) zu unterstützen.

## Revendications

1. Turbine à courant de fluide, comprenant :
une base (2) ;
un arbre d'entraînement allongé (10) faisant saillie à partir de ladite base (2) ; et
des moyens de palier en porte à faux (5) qui supportent ledit arbre d'entraînement (10) d'une manière sensiblement libre du point de vue de la rotation par rapport à ladite base (2) ;
ladite turbine à courant de fluide étant **caractérisée par** :
une série de rotors (13) fixée sur ledit arbre d'entraînement (10), chacun desdits rotors (13) comprenant un ensemble sensiblement coplanaire d'aubes (12) qui définissent une région à partir de laquelle la puissance est échangée avec un fluide, dans laquelle chaque paire adjacente desdits rotors (13) est séparée par un intervalle espacé ;
dans laquelle lesdits moyens de palier en porte à faux (5) supportent ledit arbre d'entraînement (10) dans une direction décalée d'une direction de courant de fluide mais suffisamment parallèle à ladite direction de courant de fluide pour que lesdits rotors (13) fixés échangent efficacement la puissance avec ledit fluide ; et dans laquelle les rotors (13) sont séparés de manière axiale par une distance suffisante pour permettre un mélange d'au moins une certaine partie de fluide frais, sensiblement tranquille par les rotors face au vent relatifs (13), pour pénétrer dans le courant de fluide passant par chacune desdites régions.

2. Turbine à courant de fluide selon l'une quelconque des revendications précédentes, dans laquelle lesdits rotors (13) comprennent des rotors de type à axe horizontal (13).

3. Turbine à courant de fluide selon l'une quelconque des revendications précédentes, comprenant en outre au moins un rotor de type à axe vertical (44).

4. Turbine à courant de fluide selon l'une quelconque des revendications précédentes, dans laquelle ladite base (2) comprend au moins une turbine à axe vertical.

5. Turbine à courant de fluide selon l'une quelconque des revendications précédentes, dans laquelle lesdits rotors (13) sont coaxiaux avec ledit arbre d'entraînement allongé (10).

6. Turbine à courant de fluide selon l'une quelconque des revendications précédentes, dans laquelle ledit arbre d'entraînement allongé (10) comprend une section conforme du point de vue de la direction (8) configurée pour permettre audit arbre d'entraînement allongé (10) de se fléchir le long de sa longueur.

7. Turbine à courant de fluide selon l'une quelconque des revendications précédentes, dans laquelle ladite base (2) est montée sur une structure d'élévation (90).

8. Turbine à courant de fluide selon l'une quelconque des revendications précédentes, dans laquelle ledit arbre d'entraînement allongé (10) comprend une section face au vent (49) et une section sous le vent (50) faisant saillie de ladite base (2) et dans laquelle au moins l'un des rotors (13) est fixé à ladite section face au vent (49) dudit arbre d'entraînement allongé (10) et au moins l'un de ladite série de rotors (13) est fixée sur ladite section sous le vent (50) dudit arbre d'entraînement allongé (10).

9. Turbine à courant de fluide selon l'une quelconque des revendications précédentes, dans laquelle lesdits intervalles espacés séparant lesdits rotors (13) sont égaux entre eux.

10. Turbine à courant de fluide selon l'une quelconque des revendications précédentes, dans laquelle les moyens de palier en porte à faux (5) comprennent un palier (11) supporté par des moyens d'extension décalés sous le vent (95), qui servent à fournir une distance décalée dudit palier (11) à des moyens d'orientation directionnels azimutaux horizontalement rotatifs (35), autour desquels lesdits moyens d'extension (95), ledit palier (11) et ledit arbre d'entraînement allongé (10) sont libres de tourner comme une unité dans le plan horizontal, à la manière d'une girouette.

11. Turbine à courant de fluide selon l'une quelconque des revendications 8 à 10, dans laquelle ladite section sous le vent (50) dudit arbre d'entraînement allongé (10) est sensiblement égale en longueur à ladite section face au vent (49) dudit arbre d' entraînement (10).

12. Turbine à courant de fluide selon l'une quelconque des revendications 8 à 10, dans laquelle ladite section face au vent (49) dudit arbre d'entraînement allongé (10) est plus courte que ladite section sous le vent (50) dudit arbre d'entraînement allongé (10) de sorte que ladite section sous le vent (50) est amenée à être déplacée sensiblement en aval de ladite base (2) de sorte que ladite turbine à courant de fluide est amenée à être pointée sensiblement dans le courant.

13. Turbine à courant de fluide selon l'une quelconque des revendications 8 à 12, dans laquelle lesdits rotors (13) sont configurés de sorte qu'une force de fluide agissant sur lesdits rotors (13) de ladite section sous le vent (50) est prédominante sur une force de fluide agissant sur lesdits rotors (13) de ladite section face au vent (49), ayant ainsi tendance à orienter ladite section sous le vent (50) en aval de ladite section face au vent (49).

14. Turbine à courant de fluide selon l'une quelconque des revendications précédentes, comprenant en outre un mécanisme de pointage actif (36, 96) configuré pour réaliser un pointage dudit arbre d'entraînement allongé (10) par rapport à ladite direction de courant de fluide.

15. Turbine à courant de fluide selon l'une quelconque des revendications précédentes, dans laquelle un pointage directionnel dudit arbre d'entraînement allongé (10) est décalé de ladite direction de courant de fluide dans l'un parmi un plan horizontal ou un plan vertical.

16. Turbine à courant de fluide selon l'une quelconque des revendications précédentes, dans laquelle lesdits moyens de palier en porte à faux (5) comprennent des moyens d'induction d'angle de décalage réactifs au fluide (94).

17. Turbine à courant de fluide selon l'une quelconque des revendications précédentes, dans laquelle lesdits moyens de palier en porte à faux (5) sont configurés pour permettre audit arbre d'entraînement (10) d'être déplacé sélectivement vers une orientation parallèle à ladite direction de courant de fluide afin de réduire ledit échange de puissance avec ledit fluide.

18. Turbine à courant de fluide selon l'une quelconque des revendications précédentes, dans laquelle ledit arbre d'entraînement allongé (10) est décalé par rapport à ladite direction de courant de fluide selon un angle oblique.

19. Turbine à courant de fluide selon l'une quelconque des revendications 8 à 18, dans laquelle ladite section sous le vent (50) dudit arbre d'entraînement (10) peut tourner séparément de ladite section face au vent (49) dudit arbre d'entraînement (10) et ladite section sous le vent (50) et ladite section face au vent (49) sont configurées pour tourner dans des directions opposées l'une par rapport à l'autre.

20. Turbine à courant de fluide selon l'une quelconque des revendications précédentes, dans laquelle ladite turbine à courant de fluide est une éolienne et dans laquelle ladite base (2) est configurée pour supporter ladite éolienne dans un environnement maritime (1), ladite base (2) comprenant des moyens de flottaison (3, 88), des moyens de force descendante (67, 69) et des moyens de résistance de rotation de base (66).

21. Turbine à courant de fluide selon l'une quelconque des revendications précédentes, dans laquelle un ou plusieurs desdits rotors (13) comprennent des aubes pouvant flotter du point de vue atmosphérique (12) ayant une flottabilité positive servant à élever lesdits un ou plusieurs rotors (13).

22. Turbine à courant de fluide selon la revendication 14 ou 15, dans laquelle ladite turbine à courant de fluide est configurée pour propulser un véhicule associé.

23. Turbine à courant de fluide selon la revendication 22, dans laquelle ledit véhicule est un bateau (79).

24. Turbine à courant de fluide selon la revendication 14 ou 15, dans laquelle ladite turbine à courant de fluide est configurée pour fournir la poussée pour un véhicule associé.

25. Turbine à courant de fluide selon la revendication 23 ou 24, comprenant en outre un moteur (72) pouvant faire tourner ledit arbre d'entraînement (10).

26. Turbine à courant de fluide selon la revendication 23, dans laquelle ladite turbine à courant de fluide entraîne une hélice (77) dudit bateau (79).

27. Turbine à courant de fluide selon l'une quelconque des revendications précédentes, dans laquelle lesdits moyens de palier en porte à faux (5) comprennent un corps de levage flottant (32).

28. Turbine à courant de fluide selon l'une quelconque des revendications précédentes, dans laquelle lesdits moyens de palier en porte à faux (5) comprennent un corps de levage aérodynamique (31).

29. Turbine à courant de fluide selon l'une quelconque des revendications précédentes, dans laquelle lesdits moyens de palier en porte à faux (5) comprennent une poussée aérodynamique générée par au moins l'un desdits rotors (13), en vertu de son angle d' attaque par rapport à la direction du vent, moyennant quoi ledit rotor vole à la manière d'un cerf-volant ou d'un gyrocoptère attaché.

30. Turbine à courant de fluide selon la revendication 29, comprenant en outre des moyens pour influencer ledit angle d'attaque desdits rotors (13).

31. Turbine à courant de fluide selon les revendications 29 à 30, dans laquelle lesdits rotors (13) comprennent des moyeux inclinés (48).

32. Turbine à courant de fluide selon les revendications 29 à 30, dans laquelle lesdits moyens pour influencer ledit angle d'attaque dudit rotor (13) comprennent un arbre d'hélice (22).

33. Turbine à courant de fluide selon la revendication 32, dans laquelle ledit arbre d'hélice (22) a une surface élévatrice ajustable (45).

34. Turbine à courant de fluide selon les revendications 29 à 32, dans laquelle lesdits moyens pour influencer ledit angle d'attaque dudit rotor (13) comprennent en outre une bôme avant (28) attachée par des moyens de transmission de tension linéaire (29).

35. Turbine à courant de fluide selon les revendications 29 à 30, dans laquelle lesdits moyens pour influencer ledit angle d'attaque dudit rotor (13) comprennent des moyens pour la sollicitation directionnelle (61), des moyens d'armature (16) et des moyens d'amarrage longitudinaux (20).

36. Turbine à courant de fluide selon l'une quelconque des revendications 8 à 35, comprenant en outre un contrepoids (67) couplé à ladite section face au vent (49).

37. Turbine à courant de fluide selon l'une quelconque des revendications 8 à 36, dans laquelle lesdits moyens de palier en porte à faux (5) comprennent un châssis de support allongé (101) et un premier palier (11) et un second palier (11) supportés dans une orientation espacée le long dudit châssis de support (101).

38. Turbine à courant de fluide selon la revendication 37, comprenant en outre au moins un rotor (13) fixé sur ledit arbre d'entraînement allongé (10) entre lesdits premier et second paliers (11).

39. Turbine à courant de fluide selon les revendications 37 ou 38, dans laquelle lesdits premier et second paliers (11) supportent approximativement un point central desdites sections face au vent (49) et sous le vent (50) dudit arbre d'entraînement allongé, respectivement.

40. Turbine à courant de fluide selon l'une quelconque des revendications précédentes, dans laquelle ledit arbre d'entraînement allongé (10) comprend une structure en treillis ouverte (53) comprenant un motif géométrique (52) d'entretoises interconnectées (51, 54, 41, 42, 43).

41. Turbine à courant de fluide selon la revendication 40, dans laquelle au moins une partie desdites entretoises (54, 41, 42, 43) est configurée de manière aérodynamique pour exploiter le courant de fluide et assister la rotation dudit arbre d'entraînement allongé (10).

42. Turbine à courant de fluide selon l'une quelconque des revendications précédentes, dans laquelle ledit fluide est de l'air ou de l'eau.

43. Turbine à courant de fluide selon la revendication 20, dans laquelle ledit corps flottant comprend un bateau (79).

44. Turbine à courant de fluide selon la revendication 1, dans laquelle ledit palier (11) est supporté sur un montant directionnellement conforme (39).

45. Turbine à courant de fluide selon la revendication 44, dans laquelle ledit montant directionnellement conforme (39) comprend un ressort.

46. Procédé pour générer une puissance provenant d'un flux de fluide, comprenant les étapes consistant à :
faire faire saillie à un arbre d'entraînement allongé (10) qui est supporté par des moyens de palier en porte à faux (5) dans une direction décalée par rapport à une direction dudit flux de fluide ;
faire passer le flux de fluide à travers une région définie par chacun d'une série de rotors (13), chacun comprenant un ensemble coplanaire d'aubes fixées audit arbre d'entraînement allongé (10) à un intervalle espacé suffisant pour permettre un mélange d'au moins une certaine partie de vent frais, sensiblement tranquille par les rotors face au vent relatifs (13), pour entrer dans le courant de vent passant à travers chaque région ;
faire tourner lesdits rotors (13) pour exploiter efficacement ledit flux de fluide, provoquant ainsi la rotation dudit arbre d'entraînement allongé (10) ; et
tirer la puissance utile de ladite rotation dudit arbre d'entraînement allongé (10).

47. Procédé selon la revendication 46, dans lequel ledit fluide est de l'air.

48. Procédé selon la revendication 46, dans lequel lesdits intervalles espacés sont égaux entre eux.

49. Procédé selon l'une quelconque des revendications 47 ou 48, dans lequel lesdits rotors (13) comprennent des rotors de type à axe horizontal (13).

50. Procédé selon l'une quelconque des revendications 47 à 49, dans lequel lesdits rotors (13) sont coaxiaux avec ledit arbre d'entraînement allongé (10).

51. Procédé selon l'une quelconque des revendications 47 à 50, comprenant en outre l'étape consistant à prévoir ledit arbre d'entraînement allongé (10) avec une section directionnellement conforme (8) configurée pour permettre audit arbre d'entraînement (10) de se fléchir le long de sa longueur.

52. Procédé selon l'une quelconque des revendications 47 à 50, comprenant en outre l'étape consistant à supporter ledit arbre d'entraînement allongé à un emplacement intermédiaire (5, 35, 90) de sorte que ledit arbre d'entraînement allongé est divisé en une section face au vent (49) et une section sous le vent (50).

53. Procédé selon la revendication 52, dans lequel ladite section sous le vent (50) et ladite section face au vent (49) dudit arbre d'entraînement allongé (10) sont sensiblement égales du point de vue de la longueur.

54. Procédé selon les revendications 52 ou 53, comprenant en outre l'étape consistant à permettre audit arbre d'entraînement allongé (10) de s'orienter du point de vue de la direction de manière sensiblement libre par rapport audit emplacement intermédiaire (5, 35, 90).

55. Procédé selon l'une quelconque des revendications 52 à 54, comprenant en outre l'étape consistant à configurer lesdits rotors (13) de sorte qu'une force agissant sur lesdits rotors (13) de ladite section sous le vent (50) est supérieure à une force agissant sur lesdits rotors de ladite section face au vent (49) de sorte que ladite section sous le vent (50) est déplacée sensiblement sous le vent dudit emplacement intermédiaire (35, 90).

56. Procédé selon l'une quelconque des revendications 52 à 55, comprenant en outre l'étape consistant à configurer ladite section sous le vent (50) dudit arbre d'entraînement allongé (10) afin de tourner dans une direction opposée à la rotation de ladite section face au vent (49) dudit arbre d'entraînement allongé (10).

57. Procédé selon l'une quelconque des revendications 47 à 56, comprenant en outre l'étape consistant à prévoir un mécanisme de pointage actif (36, 37, 96) configuré pour réaliser un pointage directionnel dudit arbre d'entraînement allongé (10) par rapport à ladite direction dudit flux de vent.

58. Procédé selon l'une quelconque des revendications 47 à 57, dans lequel ladite étape de saillie comprend l'étape consistant à décaler ledit arbre d'entraînement allongé (10) de ladite direction de ladite direction de flux de vent dans l'un parmi un plan vertical, horizontal ou oblique.

59. Procédé selon l'une quelconque des revendications 47 à 58, comprenant en outre l'étape consistant à supporter ledit arbre d'entraînement allongé dans un environnement maritime (1) sur une base (2), ladite base (2) comprenant des moyens de flottaison (3, 68), appliquant une force descendante (67, 69) sur ladite base (2) pour maintenir ladite base (2) dans une orientation verticale, et résistant à la rotation (65) de ladite base (2).

60. Procédé selon l'une quelconque des revendications 47 à 59, comprenant en outre l'étape consistant à appliquer une force d'élévation sur ledit arbre d'entraînement allongé (10) avec une ou plusieurs aubes flottantes du point de vue atmosphérique (12), un corps de poussée aérodynamique (31) et un corps de poussée flottant (32).

61. Procédé selon l'une quelconque des revendications 52 à 60, comprenant en outre l'étape consistant à appliquer une force de contrepoids (67) sur ladite section sous le vent (49) dudit arbre d'entraînement allongé (10).

62. Procédé selon l'une quelconque des revendications 52 à 61, comprenant en outre l'étape consistant à supporter ledit arbre d'entraînement (10) dans une première position et une seconde position espacée de ladite première position de sorte que ladite section intermédiaire est définie entre lesdites première et seconde positions.

63. Procédé selon la revendication 62, comprenant en outre l'étape consistant à fixer au moins un rotor (13) sur ledit arbre d'entraînement allongé (10) à l'intérieur de ladite section intermédiaire.

64. Procédé selon l'une quelconque des revendications 47 à 63, comprenant en outre l'étape consistant à construire ledit arbre d'entraînement allongé (10) à partir d'une structure de treillis ouverte (53) comprenant un motif géométrique (41, 42, 43, 52) d'entretoises interconnectées (51, 54) .

65. Procédé selon la revendication 64, dans lequel au moins une partie desdites entretoises (41, 42, 43, 54) est configurée de manière aérodynamique pour exploiter le vent et aider à faire tourner ledit arbre d'entraînement allongé (10).
